(19) Europäisches Patentamt
European Patent Office
Office européen des brevets

(11) **EP 1 963 908 B1**

(12) **EUROPÄISCHE PATENTSCHRIFT**

(45) Veröffentlichungstag und Bekanntmachung des Hinweises auf die Patenterteilung:
**26.09.2012 Patentblatt 2012/39**

(21) Anmeldenummer: **06818816.8**

(22) Anmeldetag: **24.11.2006**

(51) Int Cl.:
*G02C 7/02* (2006.01)      *G02C 7/06* (2006.01)

(86) Internationale Anmeldenummer:
**PCT/EP2006/011301**

(87) Internationale Veröffentlichungsnummer:
**WO 2007/062784 (07.06.2007 Gazette 2007/23)**

(54) **VERFAHREN ZUM BERECHNEN DER VERGRÖSSERUNG UND/ODER VERZERRUNG UND VERFAHREN ZUM HERSTELLEN EINES BRILLENGLASES MIT GERINGER VERGRÖSSERUNG UND/ODER VERZERRUNG**

METHOD FOR CALCULATION OF THE MAGNIFICATION AND/OR DISTORTION AND METHOD FOR PRODUCTION OF A SPECTACLE LENS WITH LOW MAGNIFICATION AND/OR DISTORTION

PROCÉDÉ DE CALCUL DE L AGRANDISSEMENT ET/OU DE DISTORSION ET PROCÉDÉ DE FABRICATION D UN VERRE DE LUNETTES D AGRANDISSEMENT ET/OU DE DISTORSION RÉDUIT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.12.2005 DE 102005057533**

(43) Veröffentlichungstag der Anmeldung:
**03.09.2008 Patentblatt 2008/36**

(73) Patentinhaber: **Rodenstock GmbH**
**80469 München (DE)**

(72) Erfinder:
• **BECKEN, Wolfgang**
**81541 München (DE)**

• **ESSER, Gregor**
**81735 München (DE)**
• **ALTHEIMER, Helmut**
**87650 Baisweil-Lauchdorf (DE)**
• **UTTENWEILER, Dietmar**
**82057 Icking (DE)**

(74) Vertreter: **Müller-Boré & Partner**
**Patentanwälte**
**Grafinger Straße 2**
**81671 München (DE)**

(56) Entgegenhaltungen:
**EP-A1- 0 809 126      WO-A-01/81985**
**WO-A-01/92948      DE-A1- 10 313 275**

**Beschreibung**

Die Erfindung betrifft ein Verfahren zum Berechnen der lokalen Vergrößerung und/oder der lokalen Verzerrung eines Brillenglases, ein Verfahren zum Auswerten eines Brillenglases sowie ein entsprechendes Computerprogrammerzeugnis, Speichermedium und Vorrichtung. Ferner betrifft die Erfindung ein Verfahren zur Herstellung eines Brillenglases unter Berücksichtigung der Vergrößerung und/oder der Verzerrung des Brillenglases und ein entsprechendes Computerprogrammerzeugnis, Speichermedium und Vorrichtung zur Herstellung eines Brillenglases.

In der EP-A-0 809 126 ist ein progressives Brillenglas beschrieben, bei dem die Unterschiede in der Vergrößerung zwischen dem Nah- und Fernbereich reduziert werden sollen, wobei die Vergrößerung nach den klassischen Formeln berechnet wird. Hierzu wird auf das Lehrbuch von Heinz Diepes und Ralf Blendowske "Optik und Technik der Brille", Ausgabe 2002, Optische Fachveröffentlichung GmbH, Heidelberg verwiesen, auf das im Übrigen zur Erläuterung aller hier nicht näher beschriebenen Begriffe ausdrücklich Bezug genommen wird.

In der Druckschrift WO 01/81985 wird zum Berechnen der Vergrößerung eines Brillenglases ein numerisches Verfahren vorgeschlagen, gemäß welchem es möglich ist, die Vergrößerung eines beliebigen Brillenglases in einem beliebigen Punkt bzw. in einer beliebigen Blickrichtung zu berechnen. Gemäß diesem numerischen Verfahren ist es notwendig, neben dem zentralen Hauptstrahl für die vorgegebene Blickrichtung mindestens noch einen weiteren Strahl durchzurechnen. Im Bereich Brillenoptik ist jedoch die Strahldurchrechnung in der Regel ein sehr zeitaufwendiges Verfahren. Dies trifft insbesondere gerade dann zu, wenn die Brillenglasflächen nicht als einfache Kugeloberflächen, sondern als asphärische oder progressive Flächen ausgebildet sind. In diesem Fall stellt die Strahldurchrechnung ein zweidimensionales Iterationsverfahren dar.

Bei unsymmetrischen Flächen und aufgrund des numerischen Verfahrens sind oftmals bis zu 180 weitere Strahlen notwendig, da die Vergrößerung nicht nur eine Funktion der Blickrichtung ist, sondern zusätzlich von der Ausrichtung des betrachteten Objektes abhängt. Dies bedeutet, daß zwei verschiedene Hauptvergrößerungen vorliegen, deren Werte und Lagen schon für eine einzige Blickrichtung aufwendig ermittelt werden müssen. Da z.B. bei einem Gleitsichtglas mehr als 5000 Bewertungsstellen bzw. Blickrichtungen vorliegen, ergibt sich bei diesem Verfahren eine sehr große Rechenzeit.

Bei der Optimierung von herkömmlichen Brillengläsern werden ausschließlich der Brechwert bzw. die Refraktionsfehler und die astigmatischen Fehler berücksichtigt und anschließend minimiert. Eine Berücksichtigung der Vergrößerung und der Verzerrung eines vorgegebenen Brillenglases erfolgt lediglich durch die Wahl der Basiskurve bzw. der Durchbiegung der Vorder- und/oder der Rückfläche des Brillenglases und durch die Wahl des Glasmaterials. Gemäß dem Stand der Technik werden jedoch die Vergrößerung und die Verzerrung der Brillengläser nicht direkt bzw. gezielt bei der Optimierung von Brillengläsern bzw. bei der Flächenoptimierung berücksichtigt.

WO 01/92948 A1 offenbart ein Verfahren zum Design einer Fläche eines Brillenglases mittels Berechnung lokaler Wellenfronten. DE 103 13 275 A1 offenbart ein Verfahren zum Berechnen eines individuellen Brillenglases.

Es ist eine Aufgabe der Erfindung ein schnelles Verfahren zum Berechnen der Vergrößerung und/oder Verzerrung bei Brillengläsern bzw. ein schnelles Verfahren zum Auswerten bzw. Untersuchen bzw. Analysieren eines Brillenglases anzugeben, welches jedoch eine genaue Berechnung der Vergrößerung und/oder der Verzerrung eines Brillenglases ermöglicht.

Ferner ist eine Aufgabe der Erfindung, ein Verfahren zur Herstellung von Brillengläsern anzugeben, welches zu einer verbesserten Verträglichkeit und folglich Akzeptanz des Brillenglases führt.

Diese Aufgabe wird durch, ein Verfahren zur Herstellung eines Brillenglases mit den Merkmalen des Anspruchs 1, ein Computerprogrammerzeugnis mit den Merkmalen des Anspruchs 10, eine Vorrichtung zur Herstellung eines Brillenglases mit den Merkmalen des Anspruchs 11, ein Verfahren zum Auswerten eines Brillenglases mit den Merkmalen des Anspruchs 12, ein Computerprogrammerzeugnis mit den Merkmalen des Anspruchs 13 und eine Vorrichtung zum Auswerten eines Brillenglases mit den Merkmalen des Anspruchs 14 gelöst. Bevorzugte Ausführungsbeispiele sind in den abhängigen Ansprüchen definiert.

Bevor auf die Erfindung in Detail eingegangen wird, werden die in der EP-A-0 809 126 benutzten, klassischen Formeln zum Berechnen der Vergrößerung eines Brillenglases kurz erläutert. Wie jedoch erfindungsgemäß erkannt worden ist, sind die in EP-A-0 809 126 angegebenen Formeln nicht geeignet, die Vergrößerung eines beliebigen Brillenglases und insbesondere eines Brillenglases mit asphärischen Flächen an einer beliebigen Stelle zu berechnen.

Die Vergrößerung $\Gamma$ eines Brillenglases ist als Quotient der Netzhautbildgröße mit Brillenglas zur Netzhautbildgröße ohne Brillenglas definiert. Zum Berechnen der Vergrößerung wird gemäß dem Stand der Technik von einem afokalen, zentrierten System Brillenglas - Auge ausgegangen, in welchem eine paraxiale Näherung gilt. In diesem Modell ist die Vergrößerung $\Gamma$ eines Brillenglases, welches zur Korrektion eines vorgegebenen Refraktionsdefizits eines Auges ausgelegt ist, gleich der Gesamtvergrößerung $N_g$ des afokalen Systems bestehend aus dem vollkorrigierenden Brillenglas und dem Refraktionsdefizit.

Die Gesamtvergrößerung des afokalen Systems Brillenglas-Refraktionsdefizit wird nach den folgenden klassischen Formeln berechnet:

$$N_g^{-1} = N_e^{-1} N_s^{-1} \qquad\qquad (1)$$

Die Gesamtvergrößerung $N_g$ setzt sich aus:

- der Eigenvergrößerung $N_e$ eines afokalen Systems bestehend aus einem gedachten, dicken Brillenglas mit einer Mittendicke $d$, einem Brechungsindex $n$ und einer objektseitigen Vorderfläche mit einem Flächenbrechwert $D_1$ ; und
- der Systemvergrößerung $N_s$ eines afokalen Systems bestehend aus einem dünnen Brillenglas mit einem Scheitel-brechwert $S'_\infty$ und dem Refraktionsdefizit.

Die Eigenvergrößerung $N_e$ und die Systemvergrößerung $N_s$ werden nach den folgenden Formeln berechnet:

$$N_e^{-1} = 1 - \frac{d}{n} D_1 \qquad\qquad (2)$$

$$N_s^{-1} = 1 - eS'_\infty \qquad\qquad (3)$$

Für den Scheitelbrechwert $S'_\infty$ des gedachten, dünnen Brillenglases gilt:

$$S'_\infty = S_2 + D_2 \qquad\qquad (4)$$

$$S_2 = N_e D_1 \qquad\qquad (5)$$

In Formeln (1) bis (5) bezeichnet $e$ den effektiven Hornhautscheitelabstand, wobei

$$e = HSA + \delta \ \text{ mit } \ \delta = \begin{cases} 3.05mm \\ 1.35mm \\ 3.85mm \end{cases} \qquad\qquad (6)$$

je nach verwendetem Modell.

Vorzugsweise wird der modifizierte Hornhautscheitelabstand nach der Formel: $e = HSA + 3.05mm$ berechnet, d.h. der modifizierte Hornhautscheitelabstand $e$ entspricht im wesentlichen dem Abstand vom bildseitigen Scheitel des Brillenglases bis zur Eintrittspupille des Auges. Der modifizierte Hornhautscheitelabstand $e$ kann jedoch nach anderen Modellen berechnet werden, beispielsweise als der Abstand vom bildseitigen Scheitel des Brillenglases bis zur Hauptebene des Auges (d.h. $\delta = 1.35mm$).

Des weiteren bezeichnet $D_i$ den Flächenbrechwert der $i$ - ten Fläche des Brillenglases berechnet nach der Formel:

$$D_i = \frac{(n-1)}{2}\left(\frac{1}{r_i^a} + \frac{1}{r_i^b}\right) \qquad\qquad (7)$$

wobei $r_i^{a,b}, i = 1,2$ die Hauptkrümmungsradien der $i$ - ten Fläche des Brillenglases sind.

Erfindungsgemäß ist erkannt worden, daß die klassischen Formeln (1) bis (7) zum Berechnen der Vergrößerung nicht geeignet sind, die Vergrößerung eines beliebigen Brillenglases an einem beliebigen Punkt des Brillenglases bzw. in beliebigen Blickrichtungen zu berechnen.

Die Erfindung stellt ein Verfahren zum Berechnen der lokalen Vergrößerung und/oder der lokalen Verzerrung eines Brillenglases in zumindest einer vorgegebenen oder vorgebbaren Blickrichtung bereit, wobei das Brillenglas zur Korrektion eines Refraktionsdefizits eines Auges ausgelegt ist und zumindest eine erste objektseitige Fläche und eine zweite augenseitige Fläche aufweist, umfassend folgende Schritte:

- Berechnen für die vorgegebene bzw. vorgebbare Blickrichtung den Verlauf eines Hauptstrahls, welcher von einem vorgegebenen oder vorgebbaren infinitesimal kleinen Objekt ausgeht und nach Brechung durch das Brillenglas durch den Augendrehpunkt des Auges, durch die Eintrittspupille des Auges oder durch die Hauptebene des Auges verläuft;
- Ermitteln der Hauptkrümmungen und -richtungen einer dem Hauptstrahl zugehörigen lokalen Wellenfront beim Brechen durch das Brillenglas;
- Berechnen der lokalen Vergrößerung und/oder der lokalen Verzerrung des Brillenglases aus den ermittelten Hauptkrümmungen und -richtungen der lokalen Wellenfront, den Daten des Verlaufs des Hauptstrahls und den Daten des Brillenglases, wobei bei dem Berechnen der lokalen Vergrößerung und/oder der lokalen Verzerrung eine endliche Entfernung des Objekts von dem Brillenglas berücksichtigt wird.

Die Daten eines Brillenglases umfassen insbesondere Daten bezüglich des Brechungsindex des Brillenglases, der Pfeilhöhen der Vorder- und der Rückfläche des Brillenglases, aus welchen die lokalen Krümmungen der Vorder- und der Rückfläche abgeleitet werden können, und/oder der (schrägen) Dicke des Brillenglases. Die Daten des Hauptstrahls umfassen vorzugsweise Daten bezüglich der Eingangsschnittweite, Einfalls- und Ausfallswinkel an der jeweiligen Fläche des Brillenglases, der Durchstoßpunkte des Hauptstrahls mit der jeweiligen Fläche des Brillenglases, und/oder Daten bezüglich der Position des Augendrehpunkts, der Eintrittspupille und/oder der Hauptebene des Auges. Die Berechnung der lokalen Wellenfront erfolgt vorzugsweise mittels Wave-Tracing.

Die Berechnung der Vergrößerung aus den Daten der lokalen Wellenfront, den Daten des Hauptstrahls sowie den Daten des Brillenglases erfolgt analytisch ohne Strahldurchrechnung eines zweiten dem Hauptstrahl benachbarten Nebenstrahls. Insbesondere zeichnet sich das Verfahren zum Berechnen der Vergrößerung eines Brillenglases nach der Erfindung dadurch aus, daß nur noch der zentrale Hauptstrahl berechnet werden muß und anschließend die Vergrößerung aus den Eigenschaften der lokalen Wellenfront berechnet werden kann. Dies bedeutet, daß sich die Vergrößerung direkt aus den Daten des zentralen Hauptstrahls mit seinen Ein- und Ausfallswinkeln an den Brillenglasflächen, der schrägen Dicke, den Hauptkrümmungen und -richtungen der ankommenden Wellenfront und/oder den Hauptkrümmungen und -richtungen der Brillenglasoberflächen am Durchstoßpunkt berechnen läßt.

Es ist deshalb für jede Blickrichtung nur ein einziges Mal notwendig, aufwendig eine Strahliteration durchzuführen. Der Rechenaufwand läßt sich somit mindestens halbieren und in der Regel sogar um einen Faktor 500 reduzieren.

Das Verfahren zum Berechnen der lokalen Vergrößerung und/oder der lokalen Verzerrung eines Brillenglases ermöglicht folglich eine genaue und realistische Ermittlung der tatsächlichen Vergrößerungs- bzw. Verzerrungseigenschaften eines Brillenglases bei gleichzeitig erheblich verringertem Rechenaufwand. Anhand der ermittelten Daten bezüglich der Vergrößerung und/oder der Verzerrung eines vorgegebenen Brillenglases kann anschließend eine Auswertung (z.B. hinsichtlich des statischen oder dynamischen Seheindrucks beim Blicken durch das Brillenglas) des Brillenglases vorgenommen werden. Ferner ist es möglich die erhaltenen Informationen über die tatsächliche Vergrößerung und/oder Verzerrung eines Brillenglases bei der Optimierung der optischen Eigenschaften des Brillenglases, z.B. mittels einer Zielfunktion zu berücksichtigen.

Ferner wird bei dem Berechnen der lokalen Vergrößerung und/oder der lokalen Verzerrung eine endliche Entfernung des Objekts vom Brillenglas berücksichtigt.

Bei dem Berechnen der Vergrößerung und/oder der Verzerrung des Brillenglases können ferner durchschnittliche Parameter (Augendrehpunkt, Eintrittspupille, und/oder Hauptebene, etc.) eines Standardauges (wie z.B. dem sogenannten Gullstrand-Auge), einer Standardgebrauchssituation (Fassungsscheibenwinkel, Vorneigung, Hornhautscheitelabstand, etc.) und/oder eines Standardobjektmodells bzw. Standardobjektentfernung berücksichtigt werden.

Die Vergrößerung und/oder die Verzerrung können unter Berücksichtigung von individuellem Parameter des Auges eines Brillenträgers, der individuellen Gebrauchssituation und/oder dem individuellen Objektentfernungsmodell berechnet werden. Somit ist es möglich, dem genauen Eindruck der von einem konkreten Brillenträger empfundenen Vergrößerung und/oder Verzerrung beim Blick durch das Brillenglas Rechnung zu tragen.

Die Daten des Brillenglases (Dicke, Pfeilhöhen der Vorder- und der Rückfläche und/oder lokale Krümmungen), können theoretische Daten sein, welche sich auf ein Referenz-Brillenglas mit den für die Korrektion des Refraktionsdefizits erforderlichen Rezeptwerten (d.h. mit den vorgegebenen sphärischen, zylindrischen, progressiven und/oder prismatischen Wirkungen) beziehen.

Es ist jedoch möglich, daß die Daten des Brillenglases durch Vermessung der Pfeilhöhen der Vorder- und oder der Rückfläche beispielsweise mittels Abtastvorrichtungen oder einem Interferometer gewonnen werden. Die Vermessung erfolgt vorzugsweise in den Punkten eines Rasters, welche in einem vorgegebenen Abstand liegen. Die vollständige Fläche kann dann z.B. mittels Spline-Funktionen rekonstruiert werden. Dadurch wird ermöglicht, daß etwaige herstellungsbedingte Abweichungen der Pfeilhöhen ebenfalls bei der Berechnung der Vergrößerung und/oder der Verzerrung berücksichtigt werden können.

Die erste und die zweite Fläche des Brillenglases können rotationssymmetrische und bevorzugt sphärische Flächen sein.

Zumindest eine der Flächen des Brillenglases kann jedoch eine rotationsasymmetrische Fläche sein. Die zumindest eine rotationsasymmetrische Fläche kann z.B.

- eine progressive Fläche mit sich kontinuierlich änderndem Brechwert zwischen einem Fern- und einem Nahbezugspunkt ; oder
- eine asphärische oder atorische Fläche

sein.

Bei dem Berechnen der lokalen Vergrößerung und/oder der lokalen Verzerrung wird ein nicht paraxialer Verlauf des Hauptstrahls berücksichtigt.

Vorzugsweise umfaßt der Berechnungs- und/oder der Optimierungsschritt die Berechung einer lokalen Vergrößerungsmatrix $N_g$ aus den Eigenschaften der lokalen Wellenfront. Die Vergrößerung des Brillenglases kann als der Mittelwert der Eigenwerte der Vergrößerungsmatrix $N_g$ und die Verzerrung als die Differenz der Eigenwerte der Vergrößerungsmatrix $N_g$ berechnet werden.

In paraxialer Näherung kann die lokale Vergrößerungsmatrix $N_g$ nach den folgenden Formeln berechnet werden, wobei die einzelnen lokalen Faktoren bzw. Größen grundsätzlich an den Durchstoßpunkten des Hauptstrahls mit der jeweiligen Fläche des Brillenglases ausgewertet werden:

$$\mathbf{N}_g^{-1} = \sigma \cdot \mathbf{N}_e^{-1} \mathbf{N}_s^{-1}$$

$$\mathbf{N}_e^{-1} = 1 - \frac{d}{n} \mathbf{S}_1^{'}$$

$$\mathbf{N}_s^{-1} = 1 - e \mathbf{S}_2^{'}$$

$$\mathbf{S}_2^{'} = \mathbf{S}_2 + \mathbf{D}_2$$

$$\mathbf{S}_2 = \mathbf{N}_e \mathbf{S}_1^{'}$$

$$\mathbf{S}_1^{'} = \mathbf{S}_1 + \mathbf{D}_1$$

$$\mathbf{S}_1 = \frac{1}{s_1} 1$$

wobei:

σ    einen Skalenfaktor bezeichnet zur Berücksichtigung einer endlichen Eingansschnittweite $s_1$ berechnet nach der Formel:

$$\sigma = \frac{|s_1|}{|s_1 + d + e|} \; ;$$

$s_1$     einen Vektor mit Länge $s_1$ in Lichtrichtung des objektseitigen Hauptstrahls zwischen dem in einer vorgegebenen Blickrichtung betrachteten Objekt und dem Durchstoßpunkt des Hauptstrahls mit der ersten Fläche bezeichnet;

d     einen Vektor mit Länge $d$ in Lichtrichtung des Hauptstrahls zwischen dem Durchstoßpunkt des Hauptstrahls HS mit der ersten Fläche und dem Durchstoßpunkt des Hauptstrahls mit der zweiten Fläche bezeichnet;

e     einen Vektor mit Länge e in Lichtrichtung des bildseitigen Hauptstrahls HS zwischen dem Durchstoßpunkt des Hauptstrahls mit der zweiten Fläche und der Eintrittspupille des Auges, dem Augendrehpunkt des Auges oder der Hauptebene des Auges bezeichnet;

$N_e^{-1}$     die lokale inverse Matrix der Eigenvergrößerung bezeichnet;

$N_s^{-1}$     die lokale inverse Matrix der Systemvergrößerung bezeichnet;

$S_1$     die lokale Krümmungs- bzw. Vergenzmatrix der einfallenden sphärischen Wellenfront an der ersten Fläche des Brillenglases bezeichnet;

$S'_i, i=1,2$     die lokale Krümmungs- bzw. Vergenzmatrix der Wellenfront nach der Brechung an der $i$ - ten Fläche des Brillenglases bezeichnet; und

$S_2$     die lokale Krümmungs- bzw. Vergenzmatrix der auf der zweiten, augenseitigen Fläche des Brillenglases einfallenden Wellenfront bezeichnet;

$D_i, i=1,2$     die lokale Flächenbrechwertmatrix der $i$-ten Fläche des Brillenglases bezeichnet, welche nach den folgenden Formeln berechnet wird:

$$\mathbf{D}_i = \begin{pmatrix} Sph_i - \dfrac{Zyl_i}{2}\cos 2\psi_i & -\dfrac{Zyl_i}{2}\sin 2\psi_i \\ -\dfrac{Zyl_i}{2}\sin 2\psi_i & Sph_i + \dfrac{Zyl_i}{2}\cos 2\psi_i \end{pmatrix}$$

$$Sph_i = \frac{(n-1)}{2}\left(\frac{1}{r_i^a} + \frac{1}{r_i^b}\right)$$

$$Zyl_i = \frac{(n-1)}{2}\left(\frac{1}{r_i^a} - \frac{1}{r_i^b}\right), i = 1,2 \; ;$$

wobei   $r_i^{a,b}, i = 1,2$   die lokalen Hauptkrümmungsradien der $i$ - ten Fläche in dem jeweiligen Durchstoßpunkt des Hauptstrahls mit der $i$ - ten Fläche des Brillenglases bezeichnen; und

$\psi_i$     den Winkel zwischen dem Normalenvektor $\mathbf{p}_i$ der Brechungsebene an der $i$-ten Fläche und der Richtung $\mathbf{q}_i$, in die der stärker gekrümmte Hauptschnitt verläuft, bezeichnet.

Der Vektor $\mathbf{e}$ entspricht dem effektiven Hornhautscheitelabstand $e$, welcher in der Berechnung der Vergrößerung nach den klassischen Formeln 1 bis 5 eingeht. Je nach verwendetem Modell der Vergrößerung (Blickwinkelvergrößerung, Sehwinkelvergrößerung, etc.) kann der Vektor $\mathbf{e}$ ein Vektor zwischen dem Durchstoßpunkt des Hauptstrahls mit der zweiten Fläche und der Eintrittspupille des Auges (z.B. im Fall der Sehwinkelvergrößerung), dem Augendrehpunkt des Auges (z.B. im Fall der Blickwinkelvergrößerung) oder der Hauptebene des Auges sein.

In paraxialer Annäherung unter Annahme von rotationssymmetrischen Flächen kann die lokale Vergrößerungsmatrix $\mathbf{N}_g$, die inverse Matrix der Eigenvergrößerung $\mathbf{N}_e^{-1}$, , die inverse Matrix der Systemvergrößerung $\mathbf{N}_s^{-1}$, die lokale Krümmungs- bzw. Vergenzmatrix der einfallenden sphärischen Wellenfront $\mathbf{S}_1$ an der ersten Fläche des Brillenglases, die lokale Krümmungs- bzw. Vergenzmatrix der Wellenfront nach der Brechung an der $i$ - ten Fläche des Brillenglases $\mathbf{S'}_i$, $i$ =1,2 und die Krümmungs- bzw. Vergenzmatrix $\mathbf{S}_2$ der auf der zweiten, augenseitigen Fläche des Brillenglases einfallenden Wellenfront als proportional der Einheitsmatrix 1 und folglich als skalare Größe dargestellt werden.

Die obigen Formeln können jedoch weiter erweitert werden, so daß zusätzlich zu einer endlichen Eingangsschnittweite $s_1$ und beliebigen asphärischen Flächen des Brillenglases auch ein beliebiger Verlauf des Hauptstrahls (d.h. beliebige Ein- und Ausfallswinkel) berücksichtigt wird.

In diesem allgemeinen Fall kann die Vergrößerungsmatrix $\mathbf{N}_g$ nach den folgenden Formeln berechnet werden, wobei die einzelnen lokalen Faktoren bzw. Größen grundsätzlich an den Durchstoßpunkten des Hauptstrahls mit der jeweiligen Fläche des Brillenglases ausgewertet werden:

$$\mathbf{N}_g^{-1} = \sigma \cdot \mathbf{R}_1^{-1} \mathbf{T}_1^{-1} \mathbf{N}_e^{-1} \mathbf{R}_{12} \mathbf{T}_2^{-1} \mathbf{N}_s^{-1} \mathbf{R}_2$$

$$\mathbf{N}_e^{-1} = 1 - \frac{d}{n} \mathbf{S}_1^{'}$$

$$\mathbf{N}_s^{-1} = 1 - e \mathbf{S}_2^{'} ,$$

wobei:

$\sigma$ einen Skalenfaktor bezeichnet zur Berücksichtigung einer endlichen Eingansschnittweite $s_1$ berechnet nach der Formel:

$$\sigma = \frac{|\mathbf{s}_1|}{|\mathbf{s}_1 + \mathbf{d} + \mathbf{e}|} ;$$

$s_1$ einen Vektor mit Länge $s_1$ in Lichtrichtung des objektseitigen Hauptstrahls zwischen dem in einer vorgegebenen Blickrichtung betrachteten Objekt und dem Durchstoßpunkt des Hauptstrahls mit der ersten Fläche bezeichnet;

$\mathbf{d}$ einen Vektor mit Länge $d_1$ in Lichtrichtung des Hauptstrahls zwischen dem Durchstoßpunkt des Hauptstrahls HS mit der ersten Fläche und dem Durchstoßpunkt des Hauptstrahls mit der zweiten Fläche bezeichnet;

$\mathbf{e}$ einen Vektor mit Länge $e$ in Lichtrichtung des bildseitigen Hauptstrahls zwischen dem Durchstoßpunkt des Hauptstrahls mit der zweiten Fläche und der Eintrittspupille des Auges, dem Augendrehpunkt des Auges oder der Hauptebene des Auges bezeichnet;

$\mathbf{n}$ den Brechungsindex des Brillenglases bezeichnet;

$\mathbf{N}_e^{-1}$ die lokale inverse Matrix der Eigenvergrößerung bezeichnet;

$\mathbf{N}_s^{-1}$ die lokale inverse Matrix der Systemvergrößerung bezeichnet;und wobei:

| | |
|---|---|
| $$\mathbf{R}_1 = \mathbf{R}(\phi_1) = \begin{pmatrix} \cos\phi_1 & -\sin\phi_1 \\ \sin\phi_1 & \cos\phi_1 \end{pmatrix}$$ | die 2x2- Drehmatrix innerhalb der Ebene senkrecht zum objektseitigen Hauptstrahl $\mathbf{s}$ vom System der ersten Fläche, definiert durch den Normalenvektor $\mathbf{p}_1$ senkrecht zur Brechungsebene an der ersten Fläche, auf eine geeignete Bezugsrichtung definiert durch den Bezugsrichtungsvektor $\mathbf{p}_0$, bezeichnet; |
| $\phi_1$ | den Winkel zwischen dem Normalenvektor $\mathbf{p}_1$ und dem Bezugsrichtungsvektor $\mathbf{p}_0$ bezeichnet; |
| $$\mathbf{R}_2 = \mathbf{R}(\phi_2) = \begin{pmatrix} \cos\phi_2 & -\sin\phi_2 \\ \sin\phi_2 & \cos\phi_2 \end{pmatrix}$$ | die 2x2- Drehmatrix innerhalb der Ebene senkrecht zum objektseitigen Hauptstrahl $\mathbf{e}$ vom System der zweiten Fläche, definiert durch den Normalenvektor $\mathbf{p}_2$ senkrecht zur Brechungsebene an der zweiten Fläche, auf die Bezugsrichtung $\mathbf{p}_0$, bezeichnet; |

(fortgesetzt)

| | |
|---|---|
| $\phi_2$ | den Winkel zwischen dem Normalenvektor $\mathbf{p}_2$ und dem Bezugsrichtungsvektor $\mathbf{p}_0$ bezeichnet; |
| $$\mathbf{R}_{12} = \mathbf{R}(\phi_{12}) = \begin{pmatrix} \cos\phi_{12} & -\sin\phi_{12} \\ \sin\phi_{12} & \cos\phi_{12} \end{pmatrix}$$ | die 2x2-Drehmatrix innerhalb der Ebene senkrecht zum Hauptstrahl $\mathbf{d}$ zwischen den Flächen des Brillenglases, welche den Normalenvektor $\mathbf{p}_1$ in den Normalenvektor $\mathbf{p}_2$ überführt, bezeichnet; |
| $\phi_{12}$ | den Winkel zwischen den Normalenvektoren $\mathbf{p}_1$ und $\mathbf{p}_2$ bezeichnet; |
| $$\mathbf{T}_i = \mathbf{C}_i \mathbf{C}_i'^{-1}, i = 1,2$$ $$\mathbf{C}_i = \begin{pmatrix} \cos\alpha_i & 0 \\ 0 & 1 \end{pmatrix}, i = 1,2$$ $$\mathbf{C}'_i = \begin{pmatrix} \cos\alpha'_i & 0 \\ 0 & 1 \end{pmatrix}, i = 1,2$$ | die 2x2-Neigungsmatrizen zur Berücksichtigung des Einflusses eines schrägen Einfalls des Hauptstrahls an der $i$-ten Fläche des Brillenglases auf die Vergrößerung bezeichnet; |
| $\alpha_i$ | den Einfallswinkel an der $i$-ten Fläche, definiert als der Winkel zwischen dem Vektor entlang des auf der $i$-ten Fläche des Brillenglases einfallenden Hauptstrahls und dem Normalenvektor $\mathbf{n}_i, i = 1,2$ senkrecht zur $i$-ten Fläche, bezeichnet; |
| $\alpha_i$' | den Ausfallswinkel an der $i$-ten Fläche des Brillenglases, definiert als der Winkel zwischen dem Vektor entlang des von der $i$-ten Fläche austretenden Hauptstrahls und dem Normalenvektor $\mathbf{n}_i, i = 1,2$ senkrecht zur $i$-ten Fläche, bezeichnet; |
| $$\mathbf{S}_1 = \frac{1}{s_1}\mathbf{1}$$ | die Krümmungs- bzw. Vergenzmatrix der auf der ersten Fläche einfallenden sphärischen Wellenfront bezeichnet; |
| $$\mathbf{S}_i^{'} = \mathbf{T}_i \mathbf{S}_i \mathbf{T}_i + \tilde{\mathbf{D}}_i$$ | die lokale Krümmungs- bzw. Vergenzmatrizen der Wellenfronten nach der Brechung an der $i$-ten Fläche des Brillenglases, berechnet nach dem Brechungsgesetz unter Berücksichtigung des schrägen Einfallswinkels des Hauptstrahls, bezeichnet; |
| $$\mathbf{S}_2 = \mathbf{R}_{12}^{-1} \mathbf{N}_e \mathbf{S}'_1 \mathbf{R}_{12}$$ | die lokale Krümmungs- bzw. Vergenzmatrix der auf die zweite Fläche einfallenden Wellenfront, welche nach dem Transfer von der ersten Fläche berechnet wird, bezeichnet; |
| $$\tilde{\mathbf{D}}_i = \nu_i \mathbf{C}_i'^{-1} \mathbf{D}_i \mathbf{C}_i'^{-1}$$ | die korrigierte lokale Flächenbrechwertmatrix der $i$-ten Fläche des Brillenglases, welche einen nicht paraxialen Einfall der Wellenfront berücksichtigt, bezeichnet; |
| $$\mathbf{D}_i = \begin{pmatrix} Sph_i - \frac{Zyl_i}{2}\cos 2\psi_i & -\frac{Zyl_i}{2}\sin 2\psi_i \\ -\frac{Zyl_i}{2}\sin 2\psi_i & Sph_i + \frac{Zyl_i}{2}\cos 2\psi_i \end{pmatrix}$$ | die lokale Flächenbrechwertmatrix der $i$-ten Fläche des Brillenglases bezeichnet; |

(fortgesetzt)

| | |
|---|---|
| $\psi_i$ | den Winkel zwischen dem Normalenvektor $\mathbf{p}_i$ der Brechungsebene an der $i$-ten Fläche des Brillenglases und der Richtung $\mathbf{q}_i$, in die der stärker gekrümmte Hauptschnitt verläuft, bezeichnet; |
| $Sph_i = \dfrac{(n-1)}{2}\left(\dfrac{1}{r_i^a} + \dfrac{1}{r_i^b}\right), i = 1,2$ | das sphärische Äquivalentder $i$-ten Fläche des Brillenglases bezeichnet; |
| $Zyl_i = \dfrac{(n-1)}{2}\left(\dfrac{1}{r_i^a} - \dfrac{1}{r_i^b}\right), i = 1,2$ | den Zylinder der $i$-ten Fläche des Brillenglases bezeichnet; |
| $r_i^{a,b}, i = 1,2$ | die Hauptkrümmungsradien der $i$-ten Fläche des Brillenglases bezeichnet; |
| $v_1 = \dfrac{n\cos\alpha_1' - \cos\alpha_1}{n-1}$ | den Korrekturfaktor zur Berücksichtigung des schrägen Einfallswinkels des Hauptstrahls an der ersten Fläche bezeichnet; |
| $v_2 = \dfrac{\cos\alpha_2' - n\cos\alpha_2}{1-n}$ | den Korrekturfaktor zur Berücksichtigung des schrägen Einfallswinkels des Hauptstrahls an der zweiten Fläche bezeichnet. |

Das Berechnen der lokalen Vergrößerung und/oder Verzerrung des Brillenglases kann für eine Mehrzahl von vorgegeben oder vorgebbaren Blickrichtungen durchgeführt werden. Vorzugsweise wird dadurch eine genaue Verteilung der lokalen Vergrößerung und/oder Verzerrung des gesamten Brillenglases erhalten.

Gemäß der Erfindung wird ferner ein Verfahren zum Auswerten bzw. Untersuchen bzw. Analysieren eines Brillenglases bereitgestellt, umfassend die Schritte:

- Erfassen von Messdaten des Brillenglases, insbesondere Daten bezüglich der Dicke, der Pfeilhöhen der Vorder- und der Rückfläche des Brillenglases und/oder der lokalen Krümmungen der Vorder- und Rückfläche des Brillenglases;
- Berechnen der lokalen Vergrößerung und/oder der Verzerrung des Brillenglases nach dem oben beschriebenen Verfahren zum Berechnen der lokalen Vergrößerung und/oder der lokalen Verzerrung eines Brillenglases.

Das Verfahren zum Auswerten eines Brillenglases umfaßt ferner einen Visualisierungsschritt, bei dem die Verteilung der berechneten lokalen Vergrößerung und/oder Verzerrung des Brillenglases z.B. mittels Isolinien oder Farbkodierung visualisiert wird.

Das erfindungsgemäße Auswerteverfahren ermöglicht es, die Verteilung der tatsächlichen lokalen Vergrößerung und/oder der lokalen Verzerrung über die gesamte Oberfläche des zu untersuchenden Brillenglases einschließlich der . Peripherie genau und ohne großen Rechenaufwand zu ermitteln. Die Berechnung der lokalen Vergrößerungs- und/oder Verzerrungseigenschaften des Brillenglases kann daher in Echtzeit bzw. online erfolgen. Da die tatsächlichen Vergrößerungs- bzw. Verzerrungseigenschaften des zu untersuchenden Brillenglases berücksichtigt werden, ist es ferner möglich, eine präzisere und realistischere Auswertung des Brillenglases, insbesondere eine präzisere Auswertung des tatsächlichen statischen und/oder dynamischen Seheindrucks beim Blicken durch das Brillenglas und somit der Verträglichkeit und der Akzeptanz des Brillenglases durch den Brillenträger, vorzunehmen.

Gemäß der Erfindung wird ein Computerprogrammerzeugnis bereitgestellt, welches ausgelegt ist, wenn geladen und ausgeführt auf einem Computer, das oben beschriebene Verfahren Verfahren zum Auswerten bzw. Untersuchen bzw. Analysieren eines Brillenglases durchzuführen.

Ferner wird gemäß der Erfindung ein Speichermedium mit einem darauf gespeichertem Computerprogramm bereitgestellt, wobei das Computerprogramm dazu ausgelegt ist, wenn geladen und ausgeführt auf einem Computer, das oben beschriebene. Verfahren zum Auswerten bzw. Untersuchen bzw. Analysieren eines Brillenglases durchzuführen.

Gemäß der Erfindung wird ferner eine Vorrichtung vorgeschlagen, welche derart ausgelegt ist, das oben beschriebene Verfahren zum Auswerten bzw. Untersuchen bzw. Analysieren eines Brillenglases unter Berücksichtigung der lokalen Vergrößerung und/oder Verzerrung des Brillenglases durchzuführen. Die erfindungsgemäße Vorrichtung zum Auswerten eines Brillenglass unter Berücksichtigung der lokalen Vergrößerung und/oder der lokalen Verzerrung des Brillenglases in zumindest einer vorgegebenen oder vorgebbaren Blickrichtung, wobei das Brillenglas zur Korrektion eines Refraktionsdefizits eines Auges ausgelegt ist und zumindest eine erste objektseitige Fläche und eine zweite augenseitige Fläche aufweist, umfaßt:

- Erfassungsmittel zum Erfassen von Daten des Brillenglases;
- Berechnungsmittel zum Berechnen anhand der Daten des Brillenglases des Verlaufs eines Hauptstrahls für die vorgegebene bzw. vorgebbare Blickrichtung, wobei der Hauptstrahl von einem vorgegebenen oder vorgebbaren infinitesimal kleinen Objekt ausgeht und nach Brechung durch das Brillenglas durch den Augendrehpunkt des Auges, durch die Eintrittspupille des Auges oder durch die Hauptebene des Auges verläuft;
- Berechnungsmittel zum Berechnen der Hauptkrümmungen und -richtungen einer dem Hauptstrahl zugehörigen lokalen Wellenfront beim Brechen durch das Brillenglas;
- Berechnungsmittel zum Berechnen der lokalen Vergrößerung und/oder der lokalen Verzerrung des Brillenglases aus den ermittelten Hauptkrümmungen und -richtungen der lokalen Wellenfront, den Daten des Verlaufs des Hauptstrahls und den Daten des Brillenglases.

Gemäß der Erfindung wird ferner ein Verfahren zur Herstellung eines Brillenglases unter Berücksichtigung der Vergrößerung und/oder der Verzerrung des Brillenglases vorgeschlagen, wobei das Brillenglas zur Korrektion eines Refraktionsdefizits eines Auges ausgelegt ist und zumindest eine erste objektseitige Fläche und eine zweite augenseitige Fläche aufweist, wobei das Verfahren einen Berechnungs- bzw. Optimierungsschritt umfaßt, welcher derart erfolgt, daß eine Zielfunktion $F$ minimiert wird, wobei

$$\min F = \min(\sum_{i} G_{V,i}(N_{Ist}(i) - N_{Soll}(i))^2 + G_{Z,i}(Z_{Ist}(i) - Z_{Soll}(i))^2)$$

,

und wobei:

$N_{Ist}(i)$   die tatsächliche Vergrößerung des Brillenglases an der i -ten Bewertungsstelle;
$N_{Soll}(i)$   die geforderte Vergrößerung des Brillenglases an der $i$ -ten Bewertungsstelle;
$G_{v,i}$   die Gewichtung der Vergrößerung des Brillenglases an der $i$ -ten Bewertungsstelle;
$Z_{Ist}(i)$   die tatsächliche Verzerrung des Brillenglases an der $i$ -ten Bewertu ngsstelle;
$Z_{Soll}(i)$   die geforderte Verzerrung an der $i$ -ten Bewertungsstelle;
$G_{z,i}$   die Gewichtung der Verzerrung an der $i$ - ten Bewertungsstelle

bezeichnet.

Die $i$-te Bewertungsstelle bezieht sich auf den jeweiligen Durchstoßpunkt des jeweiligen Hauptstrahls mit der Vorder- oder Rückfläche des Brillenglases. Der Index i dient dazu, die verschiedenen Hauptstrahlen zu indizieren, die im Falle einer Optimierung nacheinander zur Berechnung der Zielfunktion herangezogen werden.

Wie bereits oben erläutert werden bei der Optimierung von herkömmlichen Brillengläsern bzw. bei der Flächenoptimierung der Vorder- und Rückflächen der herkömmlichen Brillengläser ausschließlich der Brechwert bzw. die Refraktionsfehler und die astigmatischen Fehler berücksichtigt und anschließend minimiert. Eine Berücksichtigung der Vergrößerung und der Verzerrung eines vorgegebenen Brillenglases erfolgt lediglich durch die Wahl der Basiskurve bzw. der Durchbiegung der Vorder- und/oder der Rückfläche des Brillenglases und durch die Wahl des Glasmaterials. Die Vergrößerung und die Verzerrung der Brillengläser werden gemäß dem Stand der Technik jedoch nicht direkt bzw. gezielt bei der Optimierung von Brillengläsern bzw. bei der Flächenoptimierung berücksichtigt.

Bei der Abbildung durch das Brillenglas und der Entstehung des Netzhautbildes spielen die Vergrößerung und die Verzerrung jedoch eine entscheidende Rolle: Sie quantifizieren die Größenänderungen eines Objektes beim Betrachten durch das Brillenglas. Während die Größe der astigmatischen Fehler ein Maß für die Verschlechterung der Bildschärfe darstellt, ist die Verzerrung das Maß für die Ähnlichkeit von Objekt und Bild. Große Verzerrungsunterschiede zwischen linkem und rechtem Brillenglas stören die binokulare Fusion (Verschmelzung) der beiden Netzhautbilder im Gehirn, da die Bilder im linken und rechten Auge geometrisch nicht mehr ähnlich sind. Die Folge können Raumverfälschungen, asthenopische Beschwerden bis hin zu Doppelbildern, und damit eine völlige Ablehnung der Brille, sein. Auch eine starke Änderung der Vergrößerung und insbesondere der Verzerrung innerhalb des Brillenglases ist unerwünscht, da sie sowohl bei Blickbewegungen (direktes Sehen) als auch bei Kopfbewegungen (indirektes Sehen) erhebliche Beeinträchtigungen des Sehens zur Folge hat.

Gemäß der Erfindung wird ein Optimierungsverfahren vorgeschlagen, wobei die Vergrößerung und/oder die Verzerrung direkt bei der Optimierung des Brillenglases bzw. bei der Flächenoptimierung der Vorder- und/oder der Rückfläche des Brillenglases durch Minimierung einer vorgegebenen Zielfunktion berücksichtigt werden. Somit kann ein Brillenglas erhalten werden, welches minimale Vergrößerungsunterschiede zwischen einem zentralen Bereich des Brillenglases und dem peripheren Bereich bzw. zwischen Fern- und Nahteil bei progressiven Brillengläser, etc. aufweist. Dadurch werden die Verträglichkeit und die Akzeptanz des Brillenglases erheblich verbessert.

Die nach dem oben beschriebenen erfindungsgemäßen Optimierungsverfahren unter Berücksichtigung der Vergrößerung und/oder Verzerrung optimierten Brillengläser bzw. Brillenglasflächen können z.B. mittels numerisch gesteuerten Werkzeugen aus Mineralglas oder Kunststoff hergestellt werden.

Vorzugsweise sind die Gewichtung $G_{v,i}$ der Vergrößerung und/oder die Gewichtung $G_{z,i}$ der Verzerrung gleich 1. Weiter bevorzugt sind die Sollwerte $N_{Soll}(i)$ und $Z_{Soll}(i)$ der Vergrößerung und der Verzerrung gleich Null. Es hat sich überraschenderweise herausgestellt, daß obwohl lediglich ein der Parameter Vergrößerung oder Verzerrung bei der Optimierung des Brillenglases berücksichtigt wird, die Verteilung des anderen, nicht berücksichtigten Parameters ebenfalls erheblich verbessert wird.

Wenn die Vergrößerung und/oder die Verzerrung als einzige oder als weitere Parameter in die Zielfunktion bei der Optimierung aufgenommen werden sollen, so spielt die Rechenzeit eine entscheidende Rolle. Dies trifft insbesondere auf individuelle Brillengläser zu, bei denen die asphärische Fläche online auf Bestellung optimiert und berechnet werden muß. In diesem Fall darf die Rechenzeit maximal nur eine bis einige wenige Minuten betragen. Die Vergrößerung und/ oder die Verzerrung an der $i$-ten Bewertungsstelle des Brillenglases werden deshalb vorzugsweise nach dem oben beschriebenen Verfahren zum Berechnen der lokalen Vergrößerung und/oder der lokalen Verzerrung eines Brillenglases berechnet.

Weiter bevorzugt erfolgt der Berechnungs- bzw. Optimierungsschritt derart, daß zusätzlich die Refraktionsfehler und/oder die astigmatischen Fehler des Brillenglases minimiert werden.

Gemäß der Erfindung wird ein Computerprogrammerzeugnis bereitgestellt, welches dazu ausgelegt ist, wenn geladen und ausgeführt auf einem Computer, das oben beschriebene Verfahren zur Optimierung eines Brillenglases unter Berücksichtigung der Vergrößerung und/oder der Verzerrung des Brillenglases durchzuführen, wobei das Verfahren zur Optimierung des Brillenglases einen Berechnungs- bzw. Optimierungsschritt umfaßt, welcher derart erfolgt, daß eine Zielfunktion $F$ minimiert wird:

$$\min F = \min\left(\sum_i G_{V,i}(N_{Ist}(i) - N_{Soll}(i))^2 + G_{z,i}(Z_{Ist}(i) - Z_{Soll}(i))^2\right),$$

wobei:

$N_{Ist}(i)$     die tatsächliche Vergrößerung des Brillenglases an der $i$-ten Bewertungsstelle;
$N_{Soll}(i)$     die geforderte Vergrößerung des Brillenglases an der $i$-ten Bewertungsstelle;
$G_{v,i}$     die Gewichtung der Vergrößerung des Brillenglases an der $i$-ten Bewertungsstelle;
$Z_{Ist}(i)$     die tatsächliche Verzerrung des Brillenglases an der $i$-ten Bewertungsstelle;
$Z_{Soll}(i)$     die geforderte Verzerrung an der $i$-ten Bewertungsstelle;
$G_{z,i}$     die Gewichtung der Verzerrung an der $i$-ten Bewertungsstelle

bezeichnet.

Ferner wird gemäß der Erfindung ein Speichermedium mit darauf gespeichertem Computerprogramm bereitgestellt, wobei das Computerprogramm dazu ausgelegt ist, wenn geladen und ausgeführt auf einem Computer, das oben beschriebene Verfahren zur Optimierung eines Brillenglases unter Berücksichtigung der Vergrößerung und/oder der Verzerrung des Brillenglases durchzuführen, wobei das Verfahren zur Optimierung des Brillenglases einen Berechnungs- bzw. Optimierungsschritt umfaßt, wobei der Berechnungs- bzw. Optimierungsschritt derart erfolgt, daß eine Zielfunktion $F$ minimiert wird, wobei

$$\min F = \min\left(\sum_i G_{V,i}(N_{Ist}(i) - N_{Soll}(i))^2 + G_{z,i}(Z_{Ist}(i) - Z_{Soll}(i))^2\right),$$

und wobei:

$N_{Ist}(i)$     die tatsächliche Vergrößerung des Brillenglases an der $i$-ten Bewertungsstelle;
$N_{Soll}(i)$     die geforderte Vergrößerung des Brillenglases an der $i$-ten Bewertungsstelle;

$G_{v,i}$      die Gewichtung der Vergrößerung des Brillenglases an der $i$ - ten Bewertungsstelle;
$Z_{Ist}(i)$      die tatsächliche Verzerrung des Brillenglases an der $i$-ten Bewertungsstelle;
$Z_{Soll}(i)$      die geforderte Verzerrung an der $i$ - ten Bewertungsstelle;
$C_{z,i}$      die Gewichtung der Verzerrung an der $i$ -ten Bewertungsstelle

bezeichnet.

Gemäß der Erfindung wird ferner eine Vorrichtung vorgeschlagen, welche derart ausgelegt ist, das oben beschriebene Verfahren zur Herstellung eines Brillenglases unter Berücksichtigung der Vergrößerung und/oder der Verzerrung des Brillenglases durchzuführen. Die erfindungsgemäße Vorrichtung zur Herstellung eines Brillenglases unter Berücksichtigung der Vergrößerung und/oder der Verzerrung des Brillenglases, welches zur Korrektion eines Refraktionsdefizits eines Auges ausgelegt ist und zumindest eine erste objektseitige und eine zweite augenseitige Fläche aufweist, umfaßt:

- Erfassungsmittel zum Erfassen von Zieldaten eines Brillenglases;
- Berechnungs- und Optimierungsmittel zum Berechnen und Optimieren zumindest einer Fläche des Brillenglases, wobei die Berechnung bzw. Optimierung derart erfolgt, daß eine Zielfunktion $F$ minimiert wird:

$$\min F = \min(\sum_i G_{v,i}(N_{Ist}(i) - N_{Soll}(i))^2 + G_{z,i}(Z_{Ist}(i) - Z_{Soll}(i))^2)$$ ,

wobei:

$N_{Ist}(i)$      die tatsächliche Vergrößerung des Brillenglases an der $i$-ten Bewertungsstelle;
$N_{Soll}(i)$      die geforderte Vergrößerung des Brillenglases an der $i$ -ten Bewertungsstelle;
$G_{v,i}$      die Gewichtung der Vergrößerung des Brillenglases an der $i$-ten Bewertungsstelle;
$Z_{Ist}(i)$      die tatsächliche Verzerrung des Brillenglases an der $i$ -ten Bewertungsstelle;
$Z_{Soll}(i)$      die geforderte Verzerrung an der $i$ -ten Bewertungsstelle;
$G_{z,i}$      die Gewichtung der Verzerrung an der $i$-ten Bewertungsstelle

bezeichnet.

Unter Zieldaten eines Brillenglases werden insbesondere die geforderten Rezeptdaten des zu einer Korrektion eines Refraktionsdefizits eines Auges ausgelegten Brillenglases verstanden. Die Rezeptdaten eines Brillenglases umfassen somit die geforderte sphärische, zylindrische, prismatische und/oder progressive Wirkung des Brillenglases. Ferner können die Zieldaten des Brillenglases insbesondere den Brechungsindex, die Durchbiegung der Vorder- und/ oder Rückfläche; und/oder die Mittendicke umfassen. Die Zieldaten des Brillenglases können ferner Daten bezüglich der Anordnung des Brillenglases vor dem Auge des Brillenträgers bzw. Daten bezüglich der Gebrauchssituation umfassen. Die Gebrauchssituation kann insbesondere durch die Seiten- und Vorneigung des Brillenglases, den Hornhautscheitelabstand, etc. charakterisiert werden. Ebenfalls können die Zieldaten des Brillenglases Daten bezüglich des Modells des zu betrachtenden Objektraums bzw. für die Objektentfernung umfassen.

Die Gebrauchssituation kann eine durchschnittliche Gebrauchssituation oder eine individuell für einen bestimmten Brillenträger ermittelte Gebrauchssituation sein. Das Modell des zu betrachtenden Objektraums kann ebenfalls ein durchschnittliches Modell oder ein individuell für einen bestimmten Brillenträger, z.B. in Abhängigkeit von der Sehaufgabe festgelegtes Modell sein.

Die Berechnung der Vergrößerung und/oder Verzerrung des Brillenglases erfolgt vorzugsweise nach dem oben beschriebenen Verfahren zum Berechnen der lokalen Vergrößerung und/oder Verzerrung eines Brillenglases.

Die Erfindung wird nachfolgend anhand von Ausführungsbeispielen unter Bezugnahme auf die Zeichnungen beispielhaft beschreiben. Es zeigt:

Fig. 1      ein Flußdiagramm des erfindungsgemäßen Verfahrens;
Fig. 2      eine schematische Darstellung des Verlaufs des Hauptstrahls bei Brechung an einem Brillenglas;
Fig. 3      eine schematische Darstellung der Änderung der Eigenschaften der lokalen Wellenfront beim Brechen an einer Grenzfläche;
Fig. 4      eine schematische Darstellung der Änderung des Abstands eines Nachbarstrahls vom Hauptstrahl beim Durchgang durch eine brechende Fläche, betrachtet in der Brechungsebene;
Fig. 5      eine schematische Darstellung des Verlauf des Hauptstrahls und die Änderung der Wellenfront in einer paraxialen Näherung;
Fig. 6      eine schematische Darstellung aller Winkel und Vektoren an der brechenden Fläche, die für die Beschreibung der Brechung und der Hauptkrümmungsrichtungen der brechenden Fläche relevant sind;

Fig. 7a bis 7c    Diagramme, welche den Einfluß einer endlichen Eingangsschnittweite $s_1$ auf die Vergrößerung dreier progressiver Brillengläser im Nahbezugspunkt illustrieren;

Fig.8    ein Diagramm, welches den Einfluß der Durchbiegung der Vorderfläche auf die Vergrößerung des Brillenglases illustriert;

Fig. 9    ein Diagramm, welches den Einfluß der Dicke des Brillenglases auf die Vergrößerung des Brillenglases illustriert;

Fig. 10a-d    Verteilungen der Vergrößerung (Fig. 10a,c) und der Verzerrung (Fig. 10b,d) eines erfindungsgemäß optimierten Brillenglases mit einer sphärischen Wirkung von -4,0 dpt und einer zylindrischen Wirkung von 0,0 dpt,

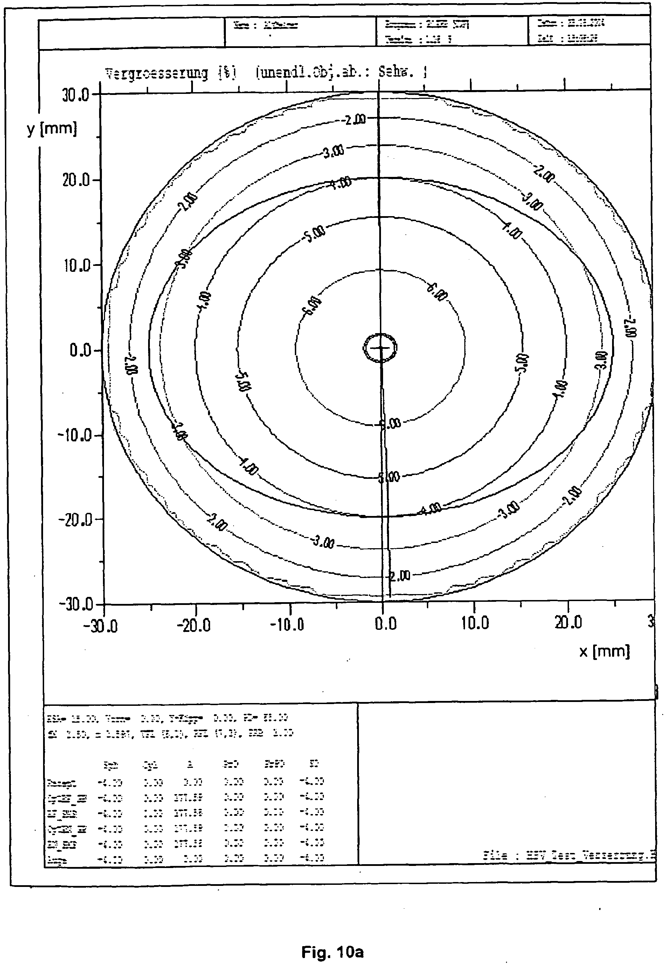

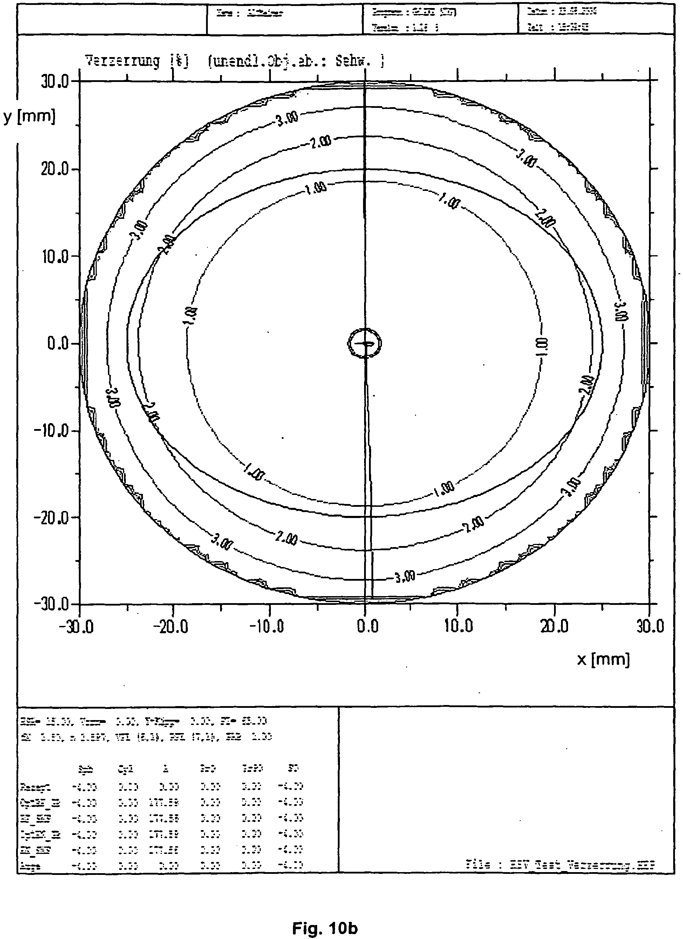

Fig. 10a,b    die Verteilungen der Vergrößerung und der Verzerrung, wobei die Vergrößerung und Verzerrung unter Berücksichtigung eines unendlichen Objektabstands berechnet wurden;

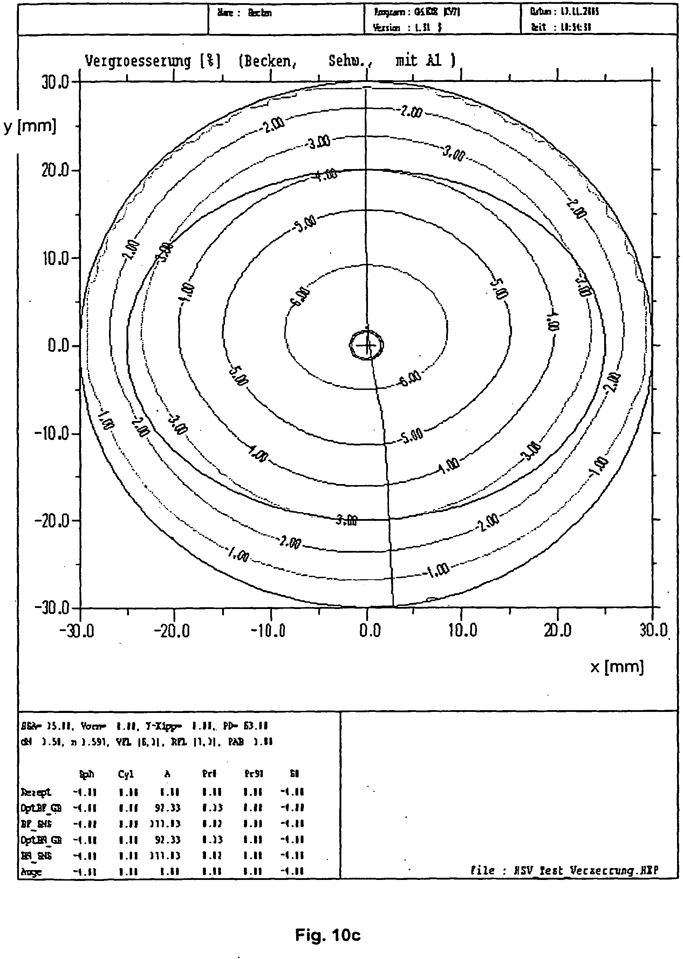

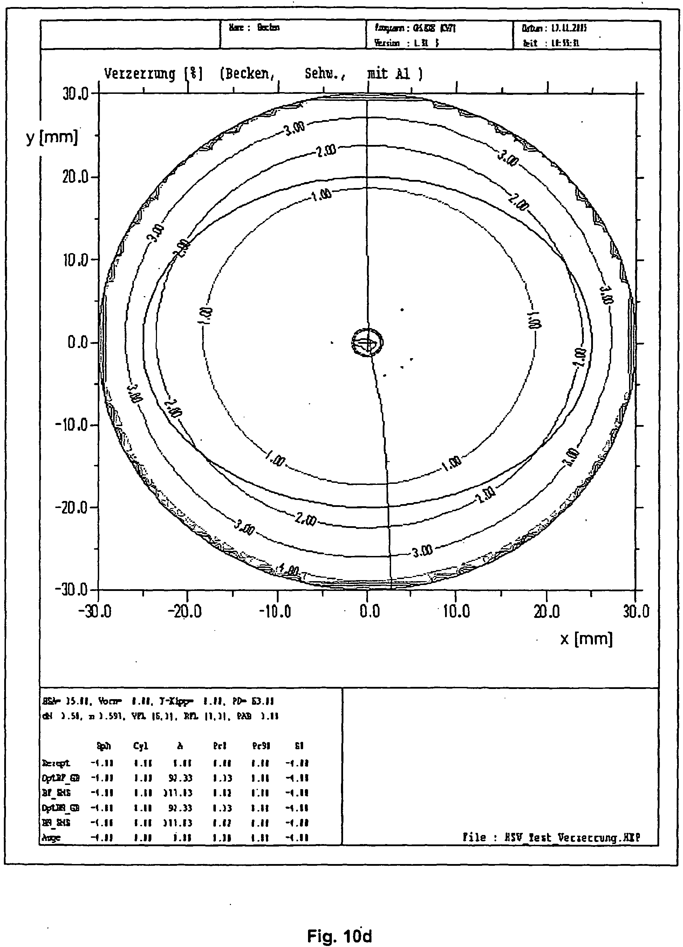

Fig. 10c,d    die Verteilungen der Vergrößerung und Verzerrung, wobei die Vergrößerung und die Verzerrung unter Berücksichtigung eines Objektabstandmodels berechnet wurden, gemäß welchem der unendliche Objektabstand im oberen Abschnitt des Brillenglases fließend in einen Objektabstand von -2,6 dpt bei x = 0 mm, y = -20 mm übergeht;

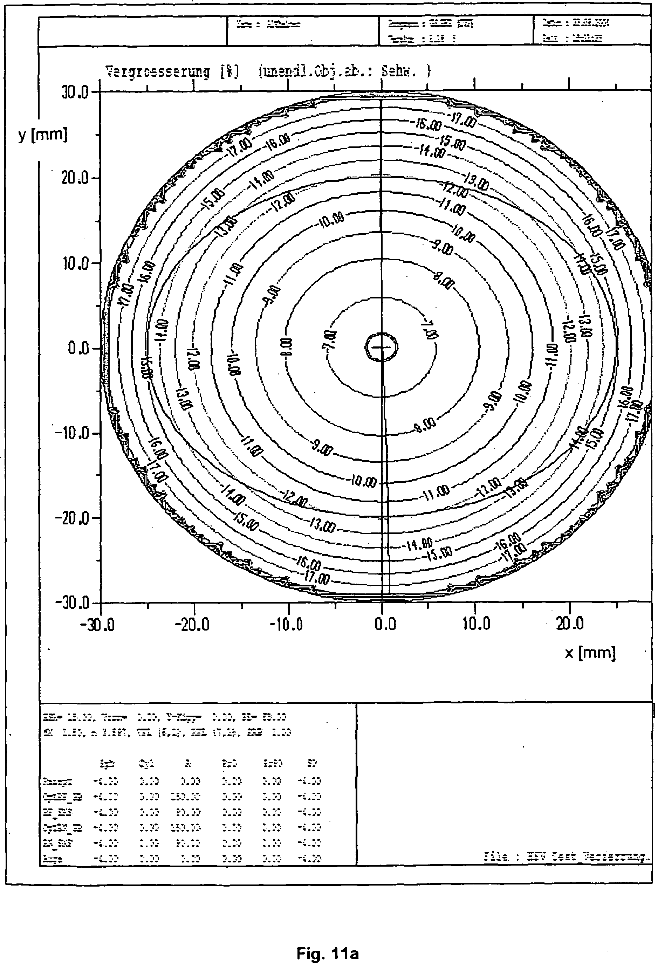

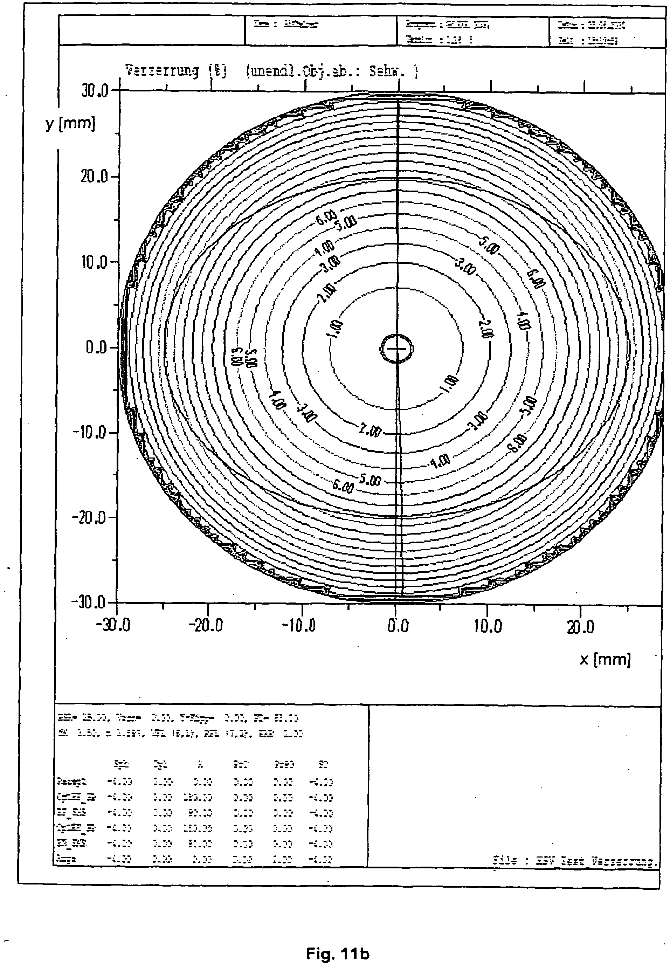

Fig. 11 a,b    Verteilungen der Vergrößerung (Fig. 11a) und der Verzerrung (Fig. 11 b) eines herkömmlichen Brillenglases mit einer sphärischen Wirkung von -4,0 dpt und einer zylindrischen Wirkung von 0,0 dpt, wobei die Vergrößerung und die Verzerrung bei unendlichem Objektabstand berechnet wurden;

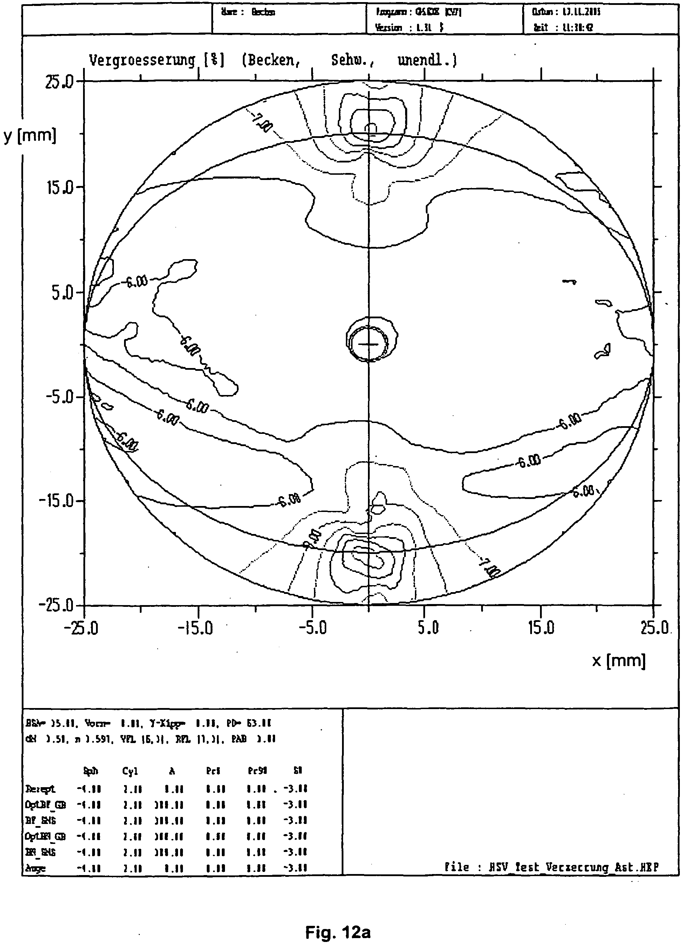

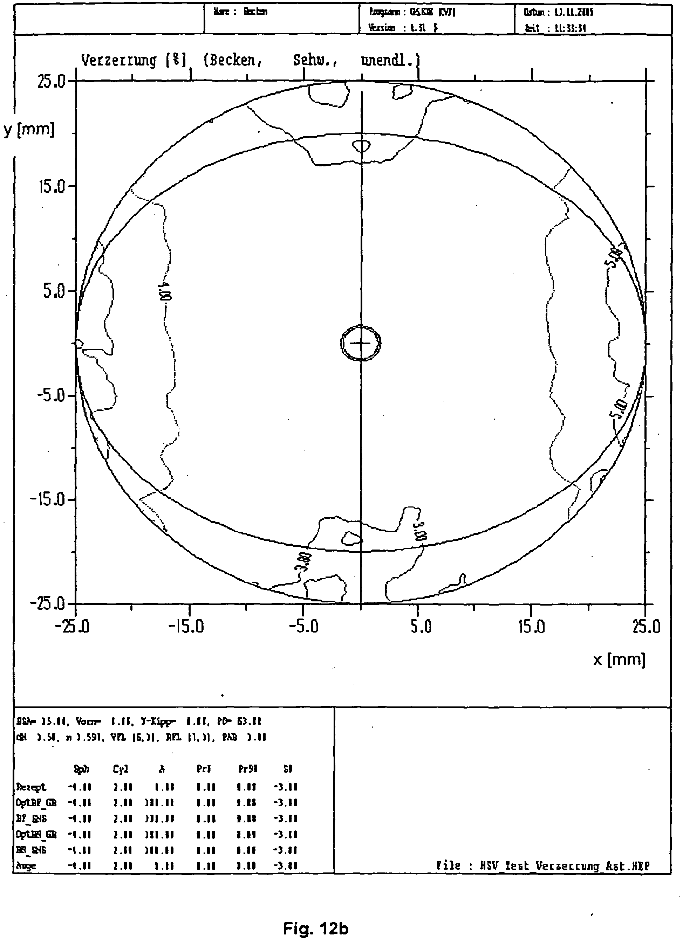

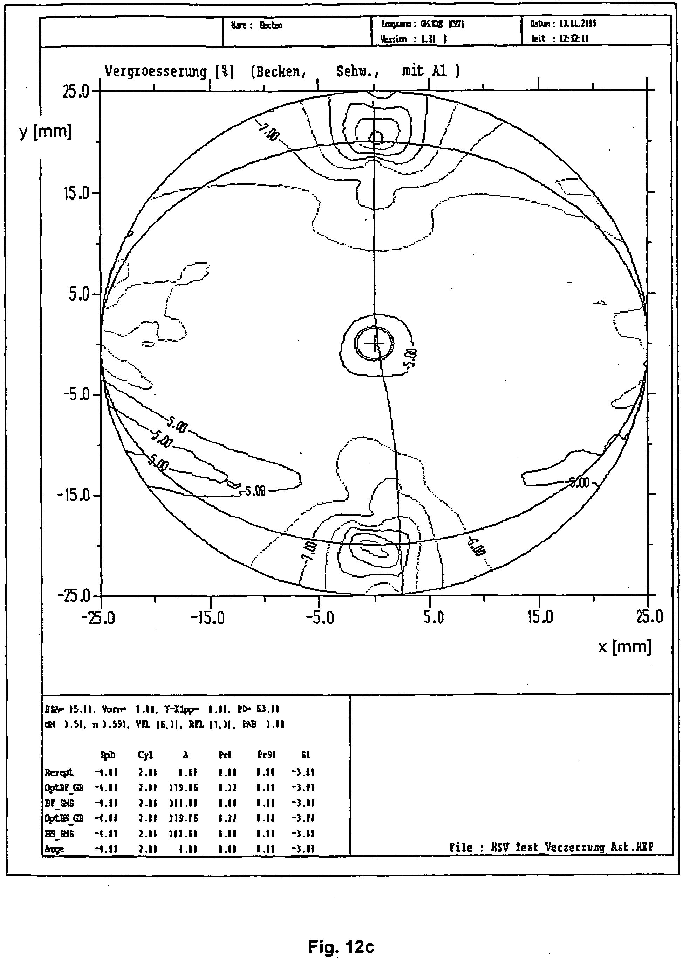

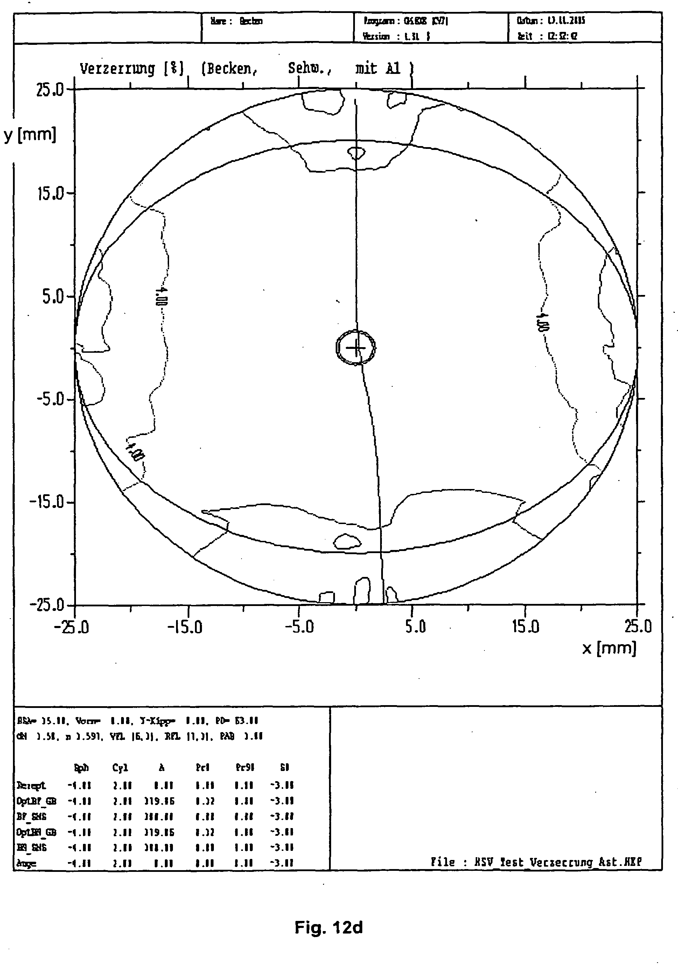

Fig. 12a-d    Verteilungen der Vergrößerung (Fig. 12a,c) und der Verzerrung (Fig. 12b,d) eines erfindungsgemäß optimierten Brillenglases mit einer sphärischen Wirkung von -4,0 dpt und einer zylindrischen Wirkung von 2,0 dpt, Achse 0˚;

Fig. 12a,b    Verteilungen der Vergrößerung und der Verzerrung, wobei die Vergrößerung und die Verzerrung bei unendlichem Objektabstand berechnet wurden;

Fig. 12c,d    Verteilungen der Vergrößerung und der Verzerrung, wobei die Vergrößerung und die Verzerrung unter Berücksichtigung eines Objektabstandmodels berechnet wurden, gemäß welchem der unendliche Objektabstand im oberen Abschnitt des Brillenglases fließend in einen Objektabstand von -2,6 dpt bei x = 0 mm, y = -20 mm übergeht;

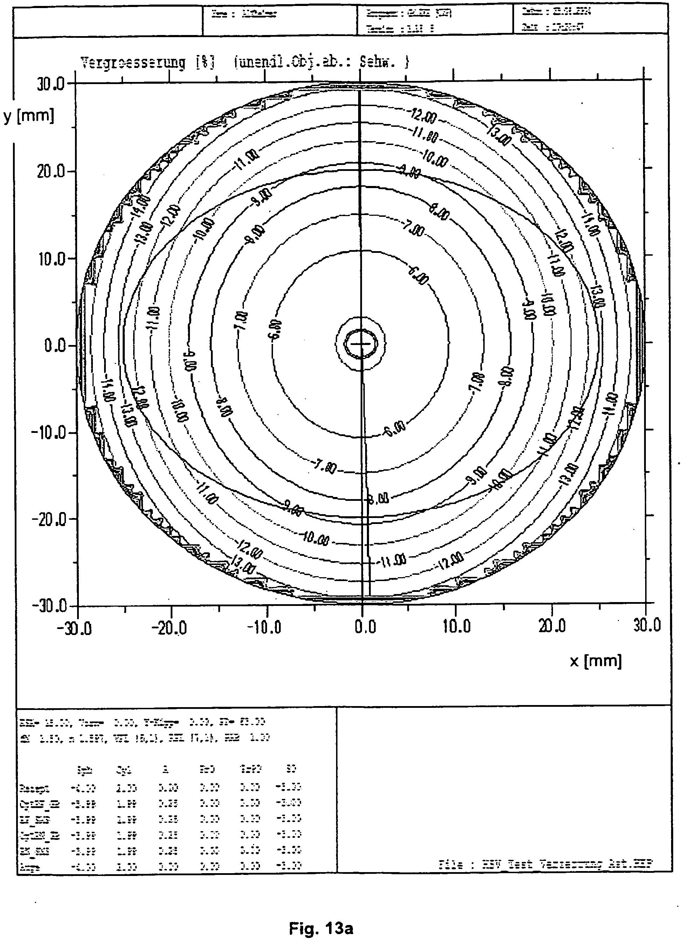

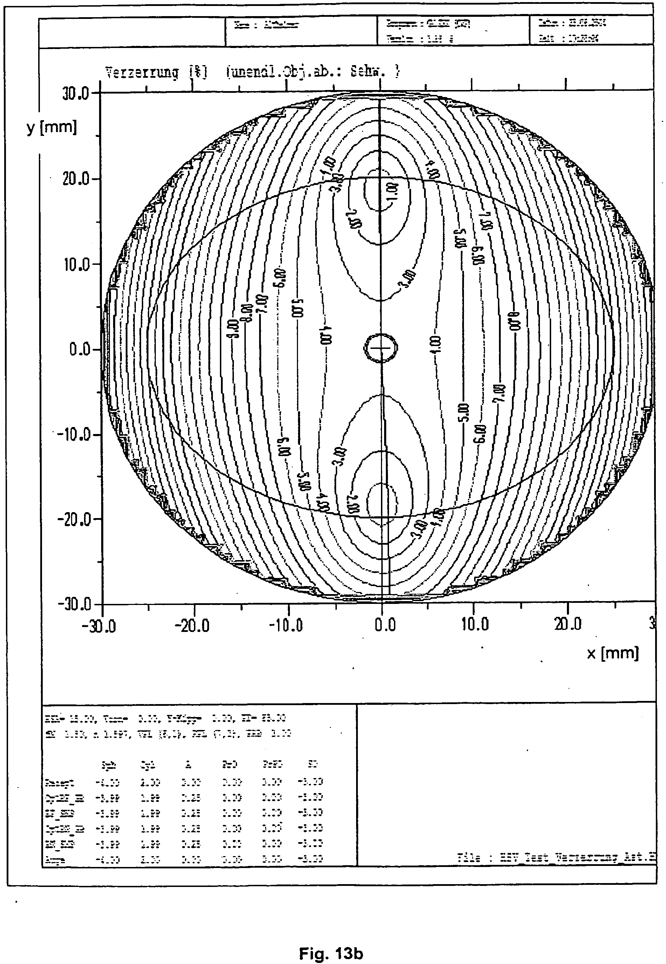

Fig. 13a,b    Verteilungen der Vergrößerung (Fig. 13a) und der Verzerrung (Fig. 13b) eines herkömmlichen Brillenglases mit einer sphärischen Wirkung von -4,0 dpt und einer zylindrischen Wirkung von 2,0 dpt, Achse 0˚, wobei die Vergrößerung und die Verzerrung bei unendlichem Objektabstand berechnet wurden;

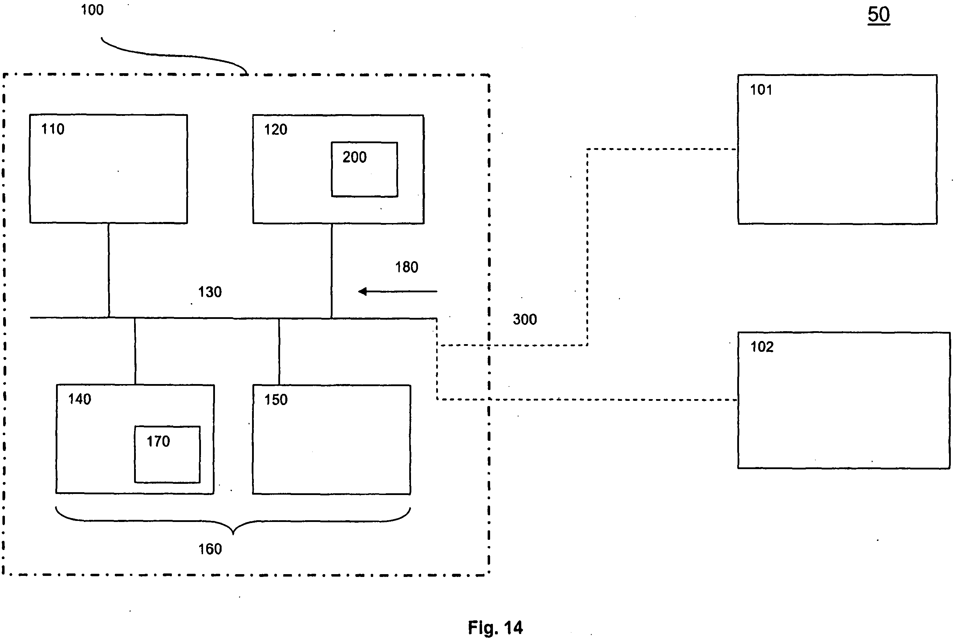

Fig. 14    eine schematische Darstellung eines Beispiels der bevorzugten Vorrichtung zum Berechnen der lokalen Vergrößerung und/oder der lokalen Verzerrung eines Brillenglases und/oder zum Berechnen bzw. Optimieren der zumindest einen Fläche des Brillenglases.

Die Vergrößerung eines Brillenglases wird als Quotient zwischen der Netzhautbildgröße mit Brillenglas und der Netzhautbildgröße ohne Brillenglas definiert.

Zur Berechnung der Vergrößerung wird zunächst ein geeignetes Koordinatensystem eingeführt. Im Fall der Blickwinkelvergrößerung kann das Koordinatensystem für eine gegebene Blickrichtung durch folgende Schritte definiert werden:

a) Es wird zunächst ein kartesisches Koordinatensystem zu einem gedachten Auge (z.B. einem Modell-Auge) in Primärstellung definiert, so daß die z-Richtung in Lichtrichtung zeigt, die y-Richtung im Raum nach oben und die x-Richtung aus Sicht des Blickenden nach rechts. Der Punkt (x,y,z)=(0,0,0) liegt im Augendrehpunkt Z'.

b) Jedem Punkt (x,y,z) werden Polarkoordinaten zugeordnet, gemäß der Transformation:

$$\begin{aligned}
x &= r\cos\vartheta\sin\varphi & & & r &= \sqrt{x^2 + y^2 + z^2} \\
y &= r\sin\varphi & & \text{bzw.} & \varphi &= -\arctan\frac{x}{z} & & (8) \\
z &= -r\cos\vartheta\cos\varphi & & & \vartheta &= \arcsin\frac{y}{\sqrt{x^2+y^2+z^2}}
\end{aligned}$$

c) Das Auge wird auf die gegebene Blickrichtung rotiert. Das Polarkoordinatensystem wird entsprechend eines Modells für die Bezugsrichtung der Torsion mitrotiert. Auf das Modell der Torsion wird in Detail in Zusammenhang mit der Formel 9 eingegangen.

d) Der Durchstoßpunkt des Hauptstrahles durch die Einheitskugel um den Augendrehpunkt Z' hat die Polarkoordi-

naten ($r$ = 1, $\varphi$ = 0, $\vartheta$ = 0). Alle anderen Nachbarstrahlen besitzen von Null verschiedene Winkelkoordinaten ($\varphi$ , $\vartheta$ ).

Im Falle der Sehwinkelvergrößerung kann dasselbe Koordinatensystem benutzt werden, mit dem Unterschied, daß das Rotationszentrum (x,y,z)=(0,0,0) für das kartesische Koordinatensystem statt in dem Augendrehpunkt in der Eintrittspupille liegt oder in dem dem verwendeten Modell entsprechenden Punkt (ggf. z.B. auch die Hauptebene).

Die Vergrößerung r eines Brillenglases kann folgendermaßen berechnen werden. In dem blickwinkelbasierten, 2-dimensionalen Koordinatensystem wird die Veränderung eines infinitesimal kleinen Objektes beim Durchblicken durch das Brillenglas im Vergleich zum Blick ohne Brillenglas betrachtet.

Das infinitesimal kleine Objekt, dargestellt durch einen Pfeil, hätte ohne Brille betrachtet die Fußpunktkoordinaten ($\varphi,\vartheta$) = (0,0), die Spitze des Pfeils hat die Koordinaten ($d\varphi,d\vartheta$). Die ungestrichenen Koordinaten entsprechen dem Blick ohne Brille bzw. Brillenglas. Diese Situation gehört zu der Blickrichtung, die das Auge ohne Brille annimmt und zu der Torsionsstellung, die nach dem benutzten Bezugsrichtungsmodell zu dieser Blickrichtung gehört. Im Vergleich dazu gehört zum Blick durch die Brille auf *dasselbe* Objekt aufgrund der prismatischen Wirkung im allgemeinen eine andere Blickrichtung und daher auch eine andere Torsionsstellung des Auges. In dem zu der Blickrichtung mit Brille gehörenden (gestrichenen) Koordinatensystem sieht das Objekt nun anders aus. Zwar besitzt der Fußpunkt auch die Koordinaten ($\varphi',\vartheta'$) = (0,0), aber die Spitze liegt nun bei ($d\varphi',d\vartheta'$). Im allgemeinen Fall kann eine solche Veränderung durch eine lineare Abbildung beschrieben werden, welche ($d\varphi,d\vartheta$) in ($d\varphi',d\vartheta'$) überführt:

$$\begin{pmatrix} d\varphi \\ d\vartheta \end{pmatrix} = \mathbf{N}_g^{-1} \begin{pmatrix} d\varphi' \\ d\vartheta' \end{pmatrix} \tag{9}$$

In Formel 9 bezeichnet $\mathbf{N}_g$ die Vergrößerungsmatrix des Brillenglases.

Zur Festlegung der Bezugsrichtung der Torsion können verschiedene Modelle eingesetzt werden. Vorzugsweise wird die Bezugsrichtung der Torsion nach der Listingsche Regel für die Ferne ermittelt. Die Bezugsrichtung der Torsion kann sich jedoch auf die Listingsche Regel für die Nähe beziehen oder als Bezugsrichtung die Schnittgerade aus der Horizontalebene und der Ebene senkrecht zum Hauptstrahl ermittelt werden. Formeln hierfür sind zusammen mit dem Formelsatz zu den Formeln 35 bis 37 angegeben. Wesentlich ist hier aber, daß sich die verschiedenen Modelle nur hinsichtlich einer vor- oder nachgelagerten Torsionsbewegung unterscheiden, und die Werte r und Z für die Vergrößerung bzw. die Verzerrung invariant unter einer solchen Rotation sind.

Die Vergrößerungsmatrix $N_g$ kann als eine 2x2-Matrix der Form:

$$\mathbf{N}_g = \begin{pmatrix} a & b \\ c & d \end{pmatrix} \tag{10}$$

dargestellt werden. Die Eigenwerte einer symmetrisierten Form der Vergrößerungsmatrix $\mathbf{N}_g$ sind die Hauptvergrößerungen, deren Mittelwert ergibt die Vergrößerung r und deren Differenz die Verzerrung Z. Für die Vergrößerung (angegeben als Faktor oder als Prozent) des Brillenglases gelten folglich die folgenden Formeln:

$$\Gamma = \tfrac{1}{2}\sqrt{(b-c)^2 + (a+d)^2} \qquad \text{(11a) als Faktor bzw.}$$

$$\Gamma = (\tfrac{1}{2}\sqrt{(b-c)^2 + (a+d)^2} - 1)*100\% \qquad \text{(11b) in Prozent.}$$

Entsprechend kann die Verzerrung nach den Formeln:

$$Z = \sqrt{(b+c)^2 + (a-d)^2} \qquad \text{(12a) als Faktor bzw.}$$

$$Z = (\sqrt{(b+c)^2 + (a-d)^2} - 1) * 100\%$$

**(12b) in Prozent**

berechnet werden.

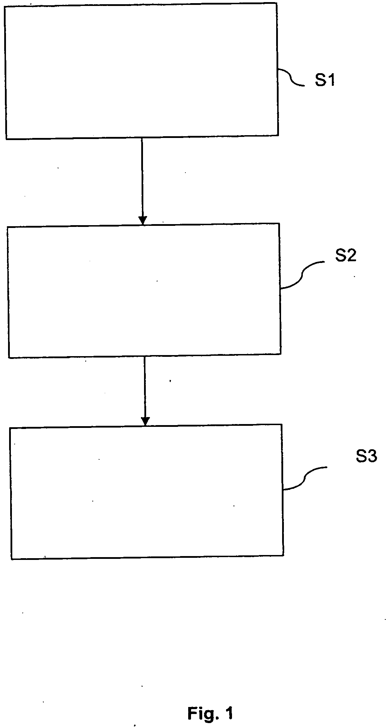

Fig. 1 ist ein Flußdiagramm, welches das erfindungsgemäße Verfahren zum Berechnen der lokalen Vergrößerung eines Brillenglases bei Brechung durch das Brillenglas illustriert.

In einem ersten Schritt S1 wird der Verlauf eines von einem Referenzobjektpunkt ausgehenden Hauptstrahls mittels Strahldurchrechnung (Ray-Tracing) bestimmt. Daraus können die Parameter des Hauptstrahls wie Einfalls- bzw. Ausfallswinkel, Durchstoßpunkte mit der Grenzfläche, etc. ermittelt werden.

Im Fall der Sehwinkelvergrößerung ist der Hauptstrahl als derjenige Strahl definiert, welcher nach Brechung durch das Brillenglas durch die Eintrittspupille des Auges verläuft und auf die Netzhaut trifft. Im Fall der Blickwinkelvergrößerung ist der Hauptstrahl als derjenige Strahl definiert, welcher nach dem Brechen durch das Brillenglas durch den Augendrehpunkt Z' verläuft und auf der Netzhaut trifft. Es ist ebenfalls möglich, einen Hauptstrahl, welcher durch die Hauptebene des Auges verläuft, zu berücksichtigen.

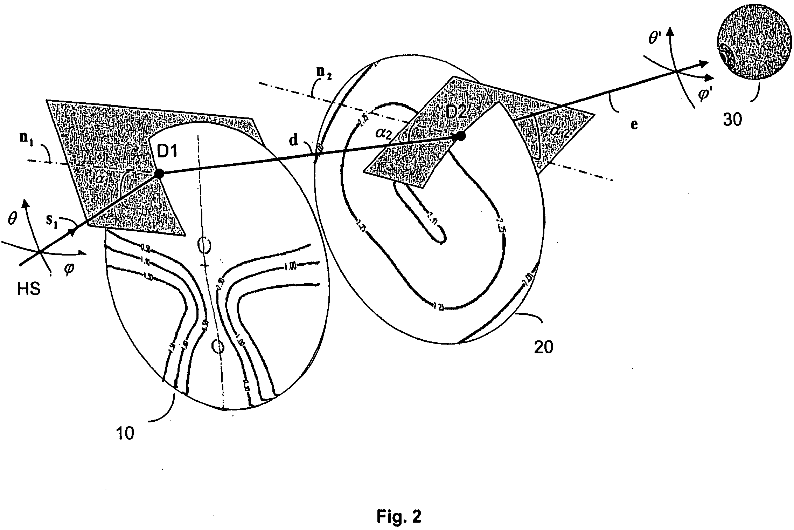

Fig. 2 ist eine schematische Darstellung des Verlaufs des Hauptstrahls HS durch ein Brillenglas. Das Brillenglas umfaßt eine erste, objektseitige Vorderfläche 10 und eine zweite, augen- bzw. bildseitige Rückfläche 20. Die beiden Flächen können beliebige Flächen (z.B. sphärische, asphärische, torische, atorische oder progressive Flächen) sein. In dem in Fig. 2 dargestellten Beispiel ist die Vorderfläche 10 eine progressive Fläche und die Rückfläche 20 eine atorische Fläche.

Der Hauptstrahl HS kann als Summe folgender Komponente bzw. Vektoren dargestellt werden:

- Vektor $s_1$ in Lichtrichtung des objektseitigen Hauptstrahls HS zwischen dem in einer vorgegebenen Blickrichtung betrachteten Objektpunkt O und dem Durchstoßpunkt D1 des Hauptstrahls HS mit der Vorderfläche 10;
- Vektor d in Lichtrichtung des Hauptstrahls HS zwischen dem Durchstoßpunkt D1 des Hauptstrahls HS mit der Vorderfläche 10 und dem Durchstoßpunkt D2 des Hauptstrahls HS mit der Rückfläche 20;
- Vektor e in Lichtrichtung des bildseitigen Hauptstrahls HS zwischen dem Durchstoßpunkt D2 des Hauptstrahls HS mit der Rückfläche 20 und vorzugsweise der Eintrittspupille des Auges 30 im Fall der Sehwinkelvergrößerung oder dem vorzugsweise Augendrehpunkt des Auges 30 im Fall der Blickwinkelvergrößerung.

Der Vektor **e** bezieht sich auf den Punkt, durch den alle Hauptstrahlen verlaufen. Dieser Punkt kann je nach dem gewählten Vergrößerungsmodell variieren. Bei der Blickwinkelvergrößerung bezieht sich das Winkelverhältnis in der Definition der Vergrößerung auf den Winkel der Blickauslenkung, die das Auge beim Blickwechsel von einem Objektfußpunkt zur Objektspitze ausführen muß. Bei der Sehwinkelvergrößerung ist im Gegensatz dazu der Winkel relevant, unter dem das Netzhautbild von der Eintrittspupille aus bei festgehaltenem Auge gesehen wird. Beide Typen der Vergrößerung lassen sich nach ein und derselben Formel berechnen, ausschlaggebend ist, daß sich der Vektor **e** in jedem Fall auf den Punkt bezieht, durch den alle Hauptstrahlen verlaufen. Im Falle der Blickwinkelvergrößerung ist das der Augendrehpunkt Z', im Falle der Sehwinkelvergrößerung die Mitte der Eintrittspupille.

Mittels einer Strahlrechnung können die entsprechenden Parameter der Vektoren $\mathbf{s}_1$ (Richtung, Länge $s_1$), d (Richtung, Länge $d$) und **e** (Richtung, Länge $e$) ermittelt werden. Die Länge $s_1$ des Vektors $s_1$ wird ebenfalls als Eingansschnittweite bezeichnet.

Durch die Strahlrechnung (Ray-Tracing) des Verlaufs des Hauptstrahls können:

- die Durchstoßpunkte D1 und D2 des Hauptstrahls HS mit der Vorder- und der Rückfläche;
- die Ein- und Ausfallswinkel $\alpha_1$ und $\alpha_1$', welche der Hauptstrahl mit einem Normalenvektor $n_1$ zu der Vorderfläche 10 im Durchstoßpunkt D1 schließt;
- die Ein- und Ausfallswinkel $\alpha_2$ und $\alpha_2$', welche der Hauptstrahl mit einem Normalenvektor $n_2$ zu der Rückfläche 20 im Durchstoßpunkt D2 schließt;

ermittelt werden.

Die Vorzeichen der Normalenvektoren sind dabei so festgelegt, daß die Normalenvektoren in Lichtrichtung zeigen.

Sobald der Verlauf des Hauptstrahls bestimmt ist, wird in einem zweiten Schritt S2 die Veränderung der dem Hauptstrahl zugehörigen lokalen Wellenfront beim Brechen durch das Brillenglas berechnet. Die Eigenschaften der dem Hauptstrahl zugehörigen Wellenfront beim Brechen durch das Brillenglas können direkt mittels Wave-Tracing aus den folgenden Daten berechnet werden:

- den bereits ermittelten Eigenschaften des zentralen Hauptstrahls (den Ein- und Ausfallswinkeln an den Brillenflächen, den Durchstoßpunkten mit der jeweiligen Fläche des Brillenglases);

- den vorgegebenen Eigenschaften des Brillenglases (Brechungsindex, Dicke, Hauptkrümmungen und -richtungen der jeweiligen Fläche des Brillenglases in den Durchstoßpunkte des Hauptstrahls mit der jeweiligen Fläche des Brillenglases); und

- den Hauptkrümmungen und -richtungen der ankommenden Wellenfront, welche von dem angenommenen Modell der Objektentfernung in der vorgegebenen bzw. vorgebbaren Blickrichtung abhängen.

In einem dritten Schritt S3 wird ohne neue Strahldurchrechnung eines zum Hauptstrahl benachbarten Strahls die Vergrößerung des Brillenglases aus den ermittelten Eigenschaften (Hauptkrümmungen und Hauptrichtungen) der dem Hauptstrahl zugehörigen lokalen Wellenfront berechnet.

Dabei wird insbesondere - abweichend vom Stand der Technik - eine endliche Eingangsschnittweite bzw. ein endlicher Objektabstand $s_1$ berücksichtigt. In anderen Worten wird berücksichtigt, daß zumindest eine Hauptkrümmung der ankommenden lokalen Wellenfront nicht gleich Null ist.

In einer bevorzugten Ausführungsform ist die ankommende Wellenfront sphärisch mit gleichen, von Null unterschiedlichen Hauptkrümmungen.

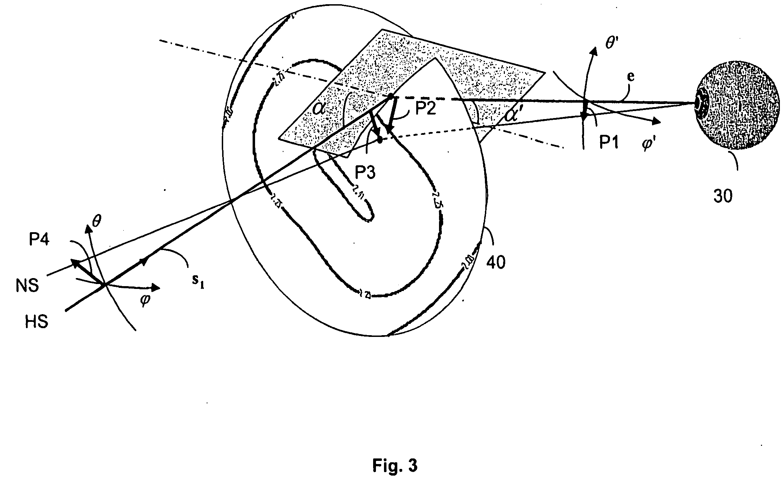

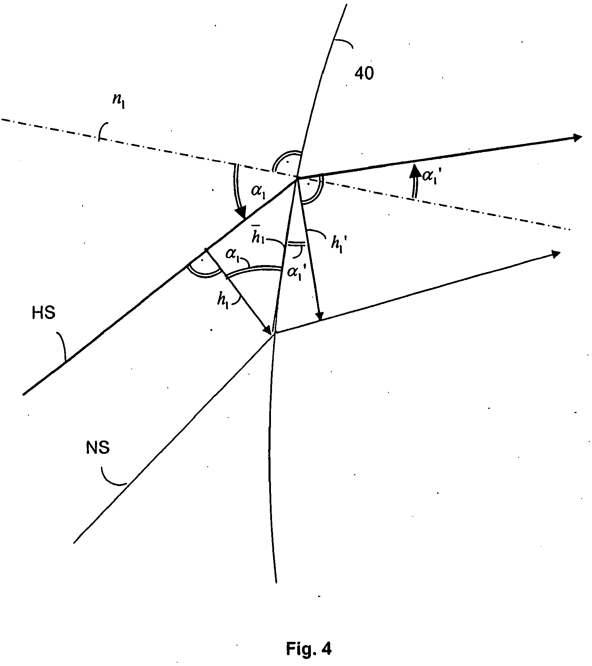

Die Ermittlung der Eigenschaften der lokalen Wellenfront mittels Wave-Tracing wird anhand von Figuren 3 und 4 illustriert. Fig. 3 ist eine schematische Darstellung des Verlaufs des Hauptstrahls und der Änderung der lokalen Wellenfront an einer Grenzfläche bzw. brechenden Fläche 40 (z.B. Vorder- oder Rückfläche des Brillenglases). Fig. 4 stellt eine schematische Darstellung der Änderung des Abstands eines Nachbarstrahls NS vom Hauptstrahl HS beim Durchgang durch eine brechende Fläche 40, betrachtet in der Brechungsebene dar. In Fig. 4 bezeichnen $\alpha_1$ den Einfallswinkel, $\alpha_1'$ den Ausfallswinkel des Hauptstrahls HS, $n_1$ den Normalenvektor zu der brechenden Fläche 40 in dem Durchstoßpunkt des Hauptstrahls mit der brechenden Fläche 40.

Ein wesentlicher Schritt der Vergrößerungsberechnung besteht darin, den (infinitesimalen) Abstand eines gedachten Nachbarstrahles NS zu einem Hauptstrahl HS zu betrachten und zu verfolgen, wie sich dieser bei der Brechung an der Grenzfläche ändert. Dieser Abstand ist in Fig. 3 durch die nummerierten Pfeile P1 bis P4 dargestellt. Der Pfeil P1 bestimmt, unter welchem Winkel Haupt- und Nachbarstrahl vom Auge aus gesehen werden und geht somit unmittelbar in die Definition der Vergrößerung ein. Pfeil P2 symbolisiert diesen Abstand an der Rückseite einer brechenden Fläche, Pfeil P3 direkt vor der Brechung an der Grenzfläche 40. Pfeil P4 beschreibt den Abstand in einer vorbestimmten Entfernung bzw. an einem vorbestimmten Ort vor der brechenden Fläche 40. Dieser Ort kann in der eigentlichen Berechnung z.B. an der Rückseite einer weiteren brechenden Fläche liegen oder am Objekt selbst. Der Pfeil P4 besitzt im allgemeinen eine andere Länge und gegebenenfalls eine andere Orientierung als Pfeil P3, die daher rührt, daß Haupt- und Nachbarstrahl vor der brechenden Fläche im allgemeinen windschief verlaufen.

Die Veränderung des infinitesimal kleinen Objekts beim Brechen an einer brechenden Fläche wird detaillierter in Fig. 4 illustriert.

Wie aus Fig. 4 ersichtlich:

$$h_1 = \overline{h} \cos \alpha_1 \qquad \Rightarrow h_1 = h_1' \frac{\cos \alpha_1}{\cos \alpha_1'}, \qquad (13)$$
$$h_1' = \overline{h} \cos \alpha_1'$$

wobei

$h_1$ den Abstand zwischen Haupt- und Nachbarstrahl vor der Brechung bezeichnet;
$h_1'$ den Abstand zwischen Haupt- und Nachbarstrahl nach der Brechung bezeichnet; und
$\overline{h}$ den Abstand der Durchstoßpunkte des jeweils Hauptstrahls HS (Punkt D1) und des Nachbarstrahls NS (Punkt D1') mit der brechende Fläche 40 bezeichnet.

In einer ersten Näherung kann die Vergrößerung des Brillenglases aufgrund eines vereinfachten Modells des Systems Brillenglas-Auge berechnet werden. In diesem Modell werden koaxiale Strahlen berücksichtigt. An die Objektentfernung werden jedoch erfindungsgemäß keine Anforderungen gestellt.

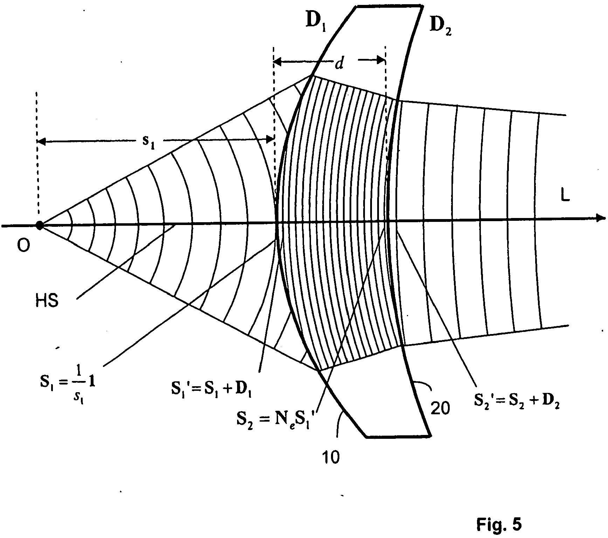

Figur 5 illustriert den Verlauf des Hauptstrahls und die Änderung der lokalen Wellenfront in paraxialer Näherung für den Fall, daß der Hauptstrahl senkrecht auf die Flächen auftrifft.

In Fig. 5 bezeichnet HS den Hauptstrahl, der hier aufgrund seines zu den Flächen senkrechten Verlaufs ungebrochen vom Objekt aus durch das Glas in Lichtrichtung L fortschreitet. $\mathbf{S}_1$ bezeichnet die Krümmungsmatrix der vom Objekt einfallenden Wellenfront am Ort der Vorderfläche 10 des Brillenglases, $\mathbf{S}_1$' dagegen die Krümmungsmatrix der von der Vorderseite 10 ins Glasinnere auslaufenden Wellenfront. Ferner bezeichnen in Fig. 5 $s_1$ die Eingangsschnittweite und $d$ die Mittendicke des Brillenglases.

$\mathbf{D}_1$ bezieht sich auf die Flächenbrechwertmatrix der Vorderfläche 10 und $\mathbf{D}_2$ auf die Flächenbrechwertmatrix der Rückseite 20 des Brillenglases.

Während die Wellenfront $\mathbf{S}_1$ noch sphärisch und daher proportional zur Einheitsmatrix ist, ist $\mathbf{S}_1$' im allgemeinen nur dann sphärisch, wenn die Vorderfläche 10 bzw. $\mathbf{D}_1$ sphärisch ist, andernfalls ist $\mathbf{S}_1$' zylindrisch. Während seines Verlaufs durch das Brillenglas nimmt die Krümmung der Wellenfronten umso stärker zu, je länger die zurückzulegende Strecke $d$ ist. An der Rückfläche 20 kommen daher Wellenfronten mit der Krümmungsmatrix $\mathbf{S}_2$ an. Bei der Brechung an der Rückfläche 20 laufen dann schließlich Wellenfronten mit der Krümmungsmatrix $\mathbf{S}_2$' aus.

In einer bevorzugten Ausführungsform weist das Brillenglas eine erste und eine zweite rotationssymmetrische Fläche (z.B. Sphäre) auf. Der Flächenbrechwert der $i$-ten Fläche ( $i=1,2$ ) kann nach der Formel:

$$D_i = \frac{(n-1)}{2}\left(\frac{1}{r_{1,2}^a} + \frac{1}{r_{1,2}^b}\right), i = 1,2 \tag{14}$$

berechnet werden, wobei

$n$ den Brechungsindex des Brillenglases bezeichnet; und $r_i^{a,b}, i = 1,2$ die Hauptkrümmungen der $i$-ten Fläche bezeichnet.

Wie bereits oben ausführlich erläutert wurde, kann mittels Strahldurchrechnung der Verlauf des Hauptstrahls und insbesondere die Komponente (Richtung und Länge) der oben genannten Vektoren $\mathbf{s}_1$, $\mathbf{d}$ und $\mathbf{e}$ ermittelt werden.

Die Vergrößerungsmatrix $\mathbf{N}_g$ kann aufgrund der Daten des Brillenglases, der Daten der ankommenden Wellenfront sowie der ermittelten Daten des Hauptstrahls analytisch berechnet werden. In paraxialer Näherung ist im vorliegenden rotationssymmetrischen Fall die Vergrößerungsmatrix $\mathbf{N}_g$ proportional der Einheitsmatrix $\mathbf{1}$ und kann folglich als Skalar geschrieben werden:

$$\mathbf{N}_g = N_g \mathbf{1} \tag{15}$$

wobei $N_g$ die gesuchte skalare Vergrößerung des Brillenglases darstellt.

Unter Berücksichtigung einer endlichen Eingangsschnittweite $s_1$ kann die Vergrößerung $N_g$ nach der folgenden Formel berechnet werden:

$$N_g^{-1} = \sigma \cdot N_e^{-1} N_s^{-1} \tag{16}$$

$$N_e^{-1} = 1 - \frac{d}{n} S_1' \tag{17}$$

$$N_s^{-1} = 1 - e S_2' \tag{18}$$

Das Symbol $\sigma$ bezeichnet einen Skalenfaktor zur Berücksichtigung einer endlichen Eingangsschnittweite $s_1$, welche nach der Formel:

$$\sigma = \frac{|\mathbf{s}_1|}{|\mathbf{s}_1 + \mathbf{d} + \mathbf{e}|} \tag{19}$$

berechnet wird.

Die Vektoren $\mathbf{s_1,d,e}$ werden wie oben beschrieben durch Strahldurchrechnung des Hauptstrahls ermittelt.

Die Änderung der lokalen Wellenfront wird durch die folgenden Formeln beschrieben:

$$S_2' = S_2 + D_2 \tag{20}$$

$$S_2 = N_e S_1' \tag{21}$$

$$S_1' = S_1 + D_1 \tag{22}$$

$$S_1 = \frac{1}{s_1} \tag{23}$$

wobei:

$S_1 = \dfrac{1}{s_1}$ die Krümmung der am Durchstoßpunkt des Hauptstrahls mit der Vorderfläche einfallenden lokalen Wellenfront bezeichnet;

$S_2$ die Krümmung der am Durchstoßpunkt des Hauptstrahls mit der Rückfläche einfallenden lokalen Wellenfront bezeichnet.

Formeln 16 bis 23 sind im paraxialen Fall besonders für ein einfaches und genaues Berechnen der Vergrößerung eines Brillenglases mit sphärischen Vorder- und Rückflächen unter Berücksichtigung eines realistischen Objektmodells bzw. Modells des betrachteten Objektraums geeignet.

Gemäß einer weiteren bevorzugten Ausführungsform der Erfindung wird bei dem Berechnen der Vergrößerung eines Brillenglases zusätzlich zu einer endlichen Eingangsschnittweite ebenfalls eine nicht rotationssymmetrische Form der Brillenglasflächen berücksichtigt. Der erhaltene Ausdruck für die Vergrößerung eines Brillenglases liefert genaue Resultate für Brillengläser mit rotationsasymmetrischen Flächen, z.B. torische oder lokal torische Flächen für einen beliebigen, endlichen Objektabstand in einer koaxialen Näherung.

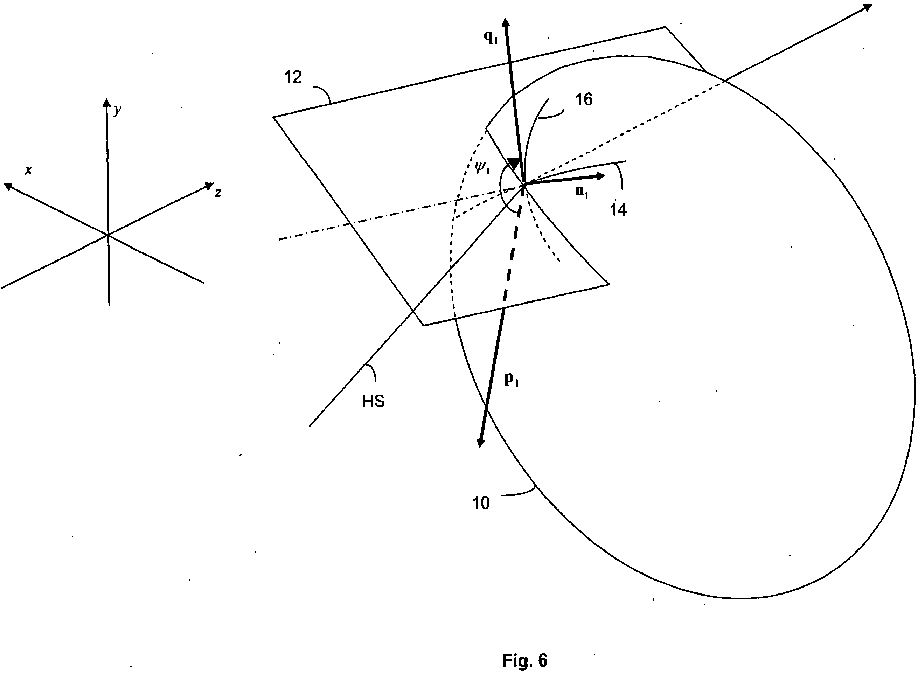

Fig. 6 stellt eine schematische Darstellung aller Winkel und Vektoren an der brechenden Fläche dar, die für die Beschreibung der Brechung und der Hauptkrümmungsrichtungen der brechenden Fläche relevant sind. Exemplarisch ist in Fig. 6 die brechende Fläche die erste ($i = 1$) bzw. die Vorderfläche (10) des Brillenglases. In Fig. 6 bezeichnen das Bezugszeichen 12 die Brechungsebene an der Vorderfläche des Brillenglases, das Bezugszeichen 14 den schwächer gekrümmter Hauptschnitt und das Bezugszeichen 16 den stärker gekrümmten Hauptschnitt, welcher in Richtung $\mathbf{q_1}$ verläuft, wobei alle Größen sich auf lokale Größen in dem Durchstoßpunkt des Hauptstrahls HS mit der Vorderfläche beziehen. Vektor $\mathbf{p_1}$ bezeichnet den Normalenvektor zu der Brechungsebene 12 an der Vorderfläche 10, Vektor $\mathbf{n_1}$ den Normalenvektor der Vorderfläche 10 in dem Durchstoßpunkt des Hauptstrahls HS mit der Vorderfläche 10.

Der lokale Flächenbrechwert in einem vorgegebenen Punkt der $i$-ten ($i=1,2$) rotationsasymmetrischen Fläche des Brillenglases kann durch eine Flächenbrechwertmatrix $\mathbf{D}_i$ dargestellt werden:

$$\mathbf{D}_i = \begin{pmatrix} Sph_i - \dfrac{Zyl_i}{2}\cos 2\psi_i & -\dfrac{Zyl_i}{2}\sin 2\psi_i \\ -\dfrac{Zyl_i}{2}\sin 2\psi_i & Sph_i + \dfrac{Zyl_i}{2}\cos 2\psi_i \end{pmatrix}, i = 1,2, \tag{24}$$

In Formel 24 bezeichnet $Sph_i, i = 1,2$ das sphärische Äquivalent und $Zyl_i, i = 1,2$ den Zylinder der $i$-ten Fläche des Brillenglases, welche folgendermaßen berechnet werden:

$$Sph_i = \frac{(n-1)}{2}\left(\frac{1}{r_i^a} + \frac{1}{r_i^b}\right) \tag{25}$$

$$Zyl_i = \frac{(n-1)}{2}\left(\frac{1}{r_i^a} - \frac{1}{r_i^b}\right), i = 1,2 \tag{26}$$

wobei:

$r_i^{a,b}, i = 1,2$ die Hauptkrümmungsradien der $i$- ten Fläche des Brillenglases sind; und

$\psi_i$ den Winkel zwischen dem Normalenvektor $\mathbf{p}_i$ der Brechungsebene an der $i$-ten Fläche und der Richtung $\mathbf{q}_i$, in die der stärker gekrümmte Hauptschnitt 16 verläuft, bezeichnet. Dabei ist das Vorzeichen dieser Richtung dadurch bestimmt, daß die x-Komponente von $\mathbf{q}_i$ positiv ist.

Der eingezeichnete Drehsinn des Winkels $\psi_i$ in der Figur 6, die exemplarisch für die Vorderfläche 10 steht (hier ist also $i$=1), verläuft in Bezug auf die x-y-Ebene des mit eingezeichneten Koordinatensystems in mathematisch positiver Richtung. Wenn der Normalenvektor der $i$- ten Fläche mit $\mathbf{n}_i$ bezeichnet wird, so ist der Winkel $\psi_i$ eindeutig festgelegt durch:

$$\begin{aligned}\sin\psi_i &= (\mathbf{p}_i \times \mathbf{q}_i) \cdot \mathbf{n}_i \\ \cos\psi_i &= \mathbf{p}_i \cdot \mathbf{q}_i\end{aligned} \tag{27}$$

Im Fall von beliebigen Flächen (die aber so im Raum stehen, daß sie vom Hauptstrahl senkrecht durchstoßen werden) in paraxialer Näherung kann die Vergrößerungsmatrix $N_g$ nach den folgenden Formeln berechnet werden, wobei alle Größen $\mathbf{N}_g^{-1}, \mathbf{N}_e^{-1}, \mathbf{N}_s^{-1}, \mathbf{S}_{1,2}, \mathbf{S}_{1,2}', \mathbf{D}_{1,2}$ jeweils in Matrizenform dargestellt werden:

$$\mathbf{N}_g^{-1} = \sigma \cdot \mathbf{N}_e^{-1}\mathbf{N}_s^{-1} \tag{28}$$

$$\mathbf{N}_e^{-1} = 1 - \frac{d}{n}\mathbf{S}_1' \tag{29}$$

$$\mathbf{N}_s^{-1} = 1 - e\mathbf{S}_2' \tag{30}$$

wobei

$\mathbf{N}_e^{-1}$ die inverse Matrix der Eigenvergrößerung bezeichnet;

$\mathbf{N}_s^{-1}$ die inverse Matrix der Systemvergrößerung bezeichnet; und

der Skalenfaktor σ gemäß Formel 19 berechnet wird.

Die Änderung der lokalen Wellenfront kann folgendermaßen beschrieben werden:

$$S_2' = S_2 + D_2 \tag{31}$$

$$S_2 = N_e S_1' \tag{32}$$

$$S_1' = S_1 + D_1 \tag{33}$$

$$S_1 = \frac{1}{s_1} 1 \tag{34}$$

wobei:

$S_1$ die Krümmungs- bzw. Vergenzmatrix der einfallenden sphärischen Wellenfront an der ersten, objektseitigen Fläche des Brillenglases bezeichnet;
$S'_i, i = 1,2$ die lokale Krümmungs- bzw. Vergenzmatrix der Wellenfront nach der Brechung an der $i$ - ten Fläche nach dem Brechungsgesetz bezeichnet;
$S_2$ die Krümmungsmatrix, der auf der zweiten, augenseitigen Fläche des Brillenglases einfallenden Wellenfront, bezeichnet, welche nach dem Transfer von der Vorderfläche zu berechnen ist.

In den obigen Formeln 28 bis 34 beziehen sich alle lokale Größen ($S'_i, D_i, S_2$, etc.) auf die entsprechenden lokalen Größen an den Durchstoßpunkten des Hauptstrahls mit der jeweiligen Fläche des Brillenglases. Formeln 28 bis 34 können als eine direkte Matrizen-Erweiterung der Formeln 16 bis 23 betrachtet werden. Die Formeln 28 bis 34 ermöglichen im paraxialen Fall ein genaues, einfaches und schnelles Berechnen der Vergrößerung eines beliebigen Brillenglases, d.h. eines Brillenglases mit rotationsasymmetrischen Flächen, insbesondere asphärischen, atorischen und progressiven Flächen, unter Berücksichtigung eines realistischen Objektmodells.
Die Vergrößerung $N_g$ und die Verzerrung $Z$ werden nach Formeln 11a, 11b bzw. 12a, 12b aus den Parametern der Vergrößerungsmatrix $N_g$ berechnet.
Formeln 16 bis 23 sowie Formeln 28 bis 34 gelten für eine paraxiale Näherung, d.h. einen senkrechten Einfall der lokalen Wellenfront an der Vorderfläche des Brillenglases. Diese Formeln können jedoch weiter erweitert werden, so daß zusätzlich zu einer endlichen Eingangsschnittweite $s_1$ und beliebigen asphärischen Flächen des Brillenglases auch ein beliebiger Verlauf des Hauptstrahls (d.h. beliebige Einfalls- und Ausfallswinkel), wie in Fig. 2 dargestellt, berücksichtigt wird.
Die Vergrößerungsmatrix $N_g$ kann in diesem allgemeinen Fall am praktischsten als inverse Matrix dargestellt werden:

$$N_g^{-1} = \sigma \cdot R_1^{-1} T_1^{-1} N_e^{-1} R_{12} T_2^{-1} N_s^{-1} R_2 \tag{35}$$

Der Skalenfaktor $\sigma$ wird nach der Formel 19 unter Berücksichtigung der durch die Strahldurchrechnung ermittelten Parameter des Hauptstrahls bzw. der Vektoren $s_1, d, e$ ermittelt.

Die inverse Matrix der Eigenvergrößerung $N_e^{-1}$ und die inverse Matrix der Systemvergrößerung $N_s^{-1}$ werden nach den Formeln:

$$N_e^{-1} = 1 - \frac{d}{n} S_1' \tag{36}$$

$$N_s^{-1} = 1 - e S_2' \tag{37}$$

berechnet.

Die Ausdrücke für die Krümmungsmatrizen $\mathbf{S'}_i$ der Wellenfront nach der Brechung an der $i$ - ten Fläche des Brillenglases bzw. für die Krümmungsmatrix $\mathbf{S}_2$ der auf der zweiten, objektseitigen Fläche des Brillenglases einfallenden Wellenfront, welche in die Berechnung der $\mathbf{N}_e^{-1}$ und $\mathbf{N}_s^{-1}$ eingehen, werden korrigiert, so daß auch ein beliebig schräger Einfall des Hauptstrahls bzw. ein nicht paraxialer Einfall der ankommenden Wellenfront berücksichtigt wird (vgl. Tabelle 1).

Ebenfalls werden die Ausdrücke für die lokale Flächenbrechwertmatrix der $i$-ten Fläche an dem Durchstoßpunkt der $i$-ten Fläche mit dem Hauptstrahl korrigiert, so daß auch ein nicht paraxialer Einfall der Wellenfront berücksichtigt wird (vgl. Tabelle 1).

Tabelle 1 gibt die Bedeutung der einzelnen Faktoren in den Formeln 35 bis 37 an, wobei der Index $i$ =1,2 den Bezug auf die Vorderfläche ($i$ = 1) bzw. Rückfläche ($i$ = 2) des Brillenglases bezeichnet. Die einzelnen Faktoren bzw. Größen werden grundsätzlich an den Durchstoßpunkten des Hauptstrahls mit der jeweiligen Fläche des Brillenglases ausgewertet. Die nicht gestrichenen Faktoren bzw. Größen werden objektseitig der jeweiligen Fläche und die gestrichenen Faktoren bzw. Größen bildseitig der jeweiligen Fläche ausgewertet.

Auch wenn die Resultate für die Vergrößerung und die Verzerrung (Formeln (11) und (12)) unabhängig von der Wahl des Modells sind, welches die Bezugsrichtung der Rotation um den augenseitigen bzw. bildseitigen Hauptstrahl bestimmt, wird hier das vorzugsweise verwendete Modell der Listingsche Regel für die Ferne angegeben. Rotiert das Auge gemäß der Listingschen Regel für die Ferne aus der Primärstellung in eine bestimmte Blickrichtung, welche durch die Hauptstrahlkomponenten ($x,y,z$) charakterisiert ist, so schließt nach der Rotation die neue x-Richtung im allgemeinen einen endlichen Winkel mit dem Einheitsvektor $\mathbf{p}_i = (p_{i,x}, p_{i,y}, p_{i,z}), i$ =1,2 senkrecht zur Brechungsebene an der $i$-ten Fläche ein. Das Vorzeichen von $\mathbf{p}_i$ wird dabei durch das Kreuzprodukt $\mathbf{p}_i = \mathbf{HS}_i \times \mathbf{n}_i, i$ =1,2 bestimmt, wobei $\mathbf{n}_i$ der in Lichtrichtung orientierte Normalenvektor der $i$-ten Fläche ist und $\mathbf{HS}_i$ der auf die jeweilige Fläche zulaufende Teil des Hauptstrahles ist, d.h. $\mathbf{HS}_1 = \mathbf{s}_1$ und $\mathbf{HS}_2 = \mathbf{d}$. Die bei der Berechnung der Vergrößerungsmatrix auftretenden Matrizen $\mathbf{R}_i, i$ =1,2, besitzen die Aufgabe, von dem System Auge, das durch die neue x-Richtung gegeben ist, auf das System zur Brechungsdurchrechnung zu transformieren, das durch den Vektor $\mathbf{p}_i$ gegeben ist. Die in Tabelle 1 gegebene Matrixdefinition bezieht sich auf den dazugehörigen Drehwinkel, der durch:

$$\sin\phi_i = \frac{p_{i,y}x^2 - (p_{i,z} + p_{i,x}x)y}{x^2 + y^2} \quad \text{und} \quad \cos\phi_i = \frac{-p_{i,z}x + y(-p_{i,y}x + p_{i,x}y)}{x^2 + y^2} \qquad (38)$$

gegeben ist.

In anderen Worten besteht eine sinngemäße Zuordnung der Beiträge in Formel 35 darin, daß die Rotationsmatrizen $\mathbf{R}_1, \mathbf{R}_2$ die Koordinatentransformationen zwischen der anhand von Formel 8 festgelegten Bezugsrichtung um den Hauptstrahl und dem System der Brechungsebene beschreiben, $\mathbf{R}_{12}$ beschreibt die Transformation zwischen den Systemen der Brechungsebenen der beiden Flächen 10 und 20 des Brillenglases. $\mathbf{N}_e^{-1}$ beschreibt die Veränderung der Krümmung der Wellenfronten beim Transfer von der Vorder- zur Rückfläche sowie die Verdrehung des Abstandspfeils zwischen den beiden Flächen aufgrund der windschiefen Orientierung zwischen Haupt- und Nachbarstrahl. Schließlich beschreiben $\mathbf{T}_1^{-1}$ und $\mathbf{T}_2^{-1}$ die Veränderung dieses Abstandes bei der Brechung an der jeweiligen Fläche. Diese Matrizen sind diagonal und besitzen in der Komponente senkrecht zur Brechungsebene eine 1, weil sich der Abstand zwischen Haupt- und Nachbarstrahl in der Komponente senkrecht zur Brechungsebene nicht ändert. Innerhalb der Brechungsebene dagegen tritt das Verhältnis der Kosinusse von Ein- und Ausfallswinkel auf, wie in Figur 4 gezeigt.

**Tabelle 1:** Formelsatz zur Auswertung des Resultates in den Formeln 35 bis 37

| | |
|---|---|
| $\mathbf{R}_1 = R(\phi_1)$ | 2x2- Drehmatrix innerhalb der Ebene senkrecht zum objektseitigen Hauptstrahl $\mathbf{s}_1$ vom System der Vorderfläche, definiert durch den Normalenvektor $\mathbf{p}_1$ senkrecht zur Brechungsebene an der Vorderfläche, auf eine geeignete Bezugsrichtung $\mathbf{p}_0$, die zum gewählten Modell gehört. ; |

(fortgesetzt)

| | |
|---|---|
| $\phi_1$ | Winkel zwischen dem Normalenvektor $\mathbf{p_1}$ und dem Bezugsrichtungsvektor $\mathbf{p_0}$ ; |
| $\mathbf{R_2} = \mathbf{R}(\phi_2)$ | 2x2- Drehmatrix innerhalb der Ebene senkrecht zum objektseitigen Hauptstrahl e vom System der Rückfläche, definiert durch den Normalenvektor $\mathbf{p_2}$ senkrecht zur Brechungsebene der Rückfläche, auf die entsprechende Bezugsrichtung $\mathbf{p_0}$, die zum selben Modell gehört wie die |
| | Drehmatrix $\mathbf{R_1}$; |
| $\phi_2$ | Winkel zwischen dem Normalenvektor $\mathbf{p_2}$ und dem Bezugsrichtungsvektor $\mathbf{p_0}$ ; |
| $\mathbf{R_{12}} = \mathbf{R}(\phi_{12})$ | 2x2-Drehmatrix innerhalb der Ebene senkrecht zum Hauptstrahl $\mathbf{d}$ zwischen den Flächen, die den Normalenvektor $\mathbf{p_1}$ senkrecht zur Brechungsebene an der Vorderfläche in den entsprechenden Normalenvektor $\mathbf{p_2}$ an der Rückfläche (d.h. Vektor senkrecht zur Brechungsebene an der Rückfläche) überführt; |
| $\phi_{12}$ | Winkel zwischen den Normalenvektoren $\mathbf{p_1}$ und $\mathbf{p_2}$ ; |
| $$\mathbf{R}(\varphi) = \begin{pmatrix} \cos\phi & -\sin\phi \\ \sin\phi & \cos\phi \end{pmatrix} \qquad (39)$$ | allgemeine Form der 2x2- Drehmatrix; |
| $$\mathbf{T}_i = \mathbf{C}_i\mathbf{C}_i'^{-1}, i = 1,2$$ $$\mathbf{C}_i = \begin{pmatrix} \cos\alpha_i & 0 \\ 0 & 1 \end{pmatrix}, i = 1,2$$ $$\mathbf{C}_i' = \begin{pmatrix} \cos\alpha'_i & 0 \\ 0 & 1 \end{pmatrix}, i = 1,2 \qquad (40)$$ | 2x2-Neigungsmatrizen zur Berücksichtigung des Einflusses eines schrägen Einfalls des Hauptstrahls an der $i$-ten Fläche auf die Vergrößerung; |
| $\alpha_i$ | Einfallswinkel an der $i$-ten Fläche, d.h. Winkel zwischen dem Vektor entlang des auf der $i$-ten Fläche einfallenden Hauptstrahls und dem Normalenvektor $\mathbf{n_i}, i = 1,2$ senkrecht zur $i$-ten Fläche; |
| $\alpha_i'$ | Ausfallswinkel an der $i$-ten Fläche, d.h. Winkel zwischen dem Vektor entlang des von der $i$-ten Fläche austretenden Hauptstrahls und dem Normalenvektor $\mathbf{n_i}, i = 1,2$ senkrecht zur $i$-ten Fläche |
| $$\mathbf{S}_1 = \frac{1}{s_1}\mathbf{1} \qquad (41)$$ | lokale Krümmungs- bzw. Vergenzmatrix der auf der Vorderfläche einfallenden sphärischen Wellenfront; |
| $$\mathbf{S}_i' = \mathbf{T}_i\mathbf{S}_i\mathbf{T}_i + \tilde{\mathbf{D}}_i \qquad (42)$$ | lokale Krümmungs- bzw. Vergenzmatrizen der Wellenfronten nach der Brechung an der $i$-ten Fläche, berechnet nach dem Brechungsgesetz unter Berücksichtigung des schrägen Einfallswinkels des Hauptstrahls; |

(fortgesetzt)

| | | |
|---|---|---|
| $$\mathbf{S}_2 = \mathbf{R}_{12}^{-1}\mathbf{N}_e\mathbf{S}_1'\,\mathbf{R}_{12}$$ | (43) | lokale Krümmungs- bzw. Vergenzmatrix der auf die Rückfläche einfallenden Wellenfront, welche nach dem Transfer von der Vorderfläche berechnet wird; |
| $$\widetilde{\mathbf{D}}_i = v_i\mathbf{C}_i'^{-1}\,\mathbf{D}_i\mathbf{C}_i'^{-1}$$ | (44) | korrigierte lokale Flächenbrechwertmatrix der $i$-ten Fläche an dem Durchstoßpunkt der $i$-ten Fläche mit dem Hauptstrahl, welche einen nicht paraxialen Einfall der Wellenfront berücksichtigt; |
| $\mathbf{D}_i$ | | lokale Flächenbrechwertmatrix der $i$-ten Fläche berechnet nach den Formeln 24 bis 26; |
| $$v_1 = \frac{n\cos\alpha_1' - \cos\alpha_1}{n-1}$$ | | Korrekturfaktor zur Berücksichtigung des schrägen Einfallswinkels des Hauptstrahls an der Vorderfläche; |
| $$v_2 = \frac{\cos\alpha_2' - n\cos\alpha_2}{1-n}$$ | | Korrekturfaktor zur Berücksichtigung des schrägen Einfallswinkels des Hauptstrahls an der Rückfläche; |

Der allgemeine Ausdruck für die Vergrößerungsmatrix $\mathbf{N}_g$ nach der Formel 35 geht in einfachen Spezialfällen in die klassische Formel (vgl. Formeln 1 bis 7) für die Vergrößerung $N_g$ über.

Insbesondere gilt:

a) Im paraxialen Fall und unter der Annahme zylindrischer Flächen werden alle Ein- und Ausfallswinkel Null. Alle $\mathbf{C}_j$- Matrizen, $\mathbf{T}_j$ - Matrizen und $\mathbf{R}_j$-Matrizen werden folglich gleich der Einheitsmatrix **1**, und alle $v_j$ Korrekturfaktoren gleich Eins;

b) Für unendlichen Objektabstand wird die Krümmung $\mathbf{S}_1$ der einfallenden Wellenfront gleich Null und $\mathbf{S}_2'$ wird zu $\mathbf{S}_\infty'$. Entsprechend gilt für die Ausdrücke $\mathbf{N}_e^{-1} = \mathbf{1} - \frac{d}{n}\mathbf{D}_1$ und $\mathbf{N}_s^{-1} = \mathbf{1} - e\mathbf{S}_\infty'$. Der Skalenfaktor σ wird gleich Eins;

c) Sind als weitere Vereinfachung die Flächen sogar reine Sphären statt zylindrischer Flächen, dann sind $\mathbf{N}_e^{-1}$ und $\mathbf{N}_s^{-1}$ und somit auch $\mathbf{N}_g^{-1}$ Vielfache der Einheitsmatrix und können skalar dargestellt werden, und zwar genau in der Form der klassischen Formel 1 für die Vergrößerung eines Brillenglases.

Formel 35 kann für eine beliebige Anzahl von Flächen erweitert werden. In dem Fall von beispielsweise 4 Flächen kann die Vergrößerungsmatrix nach den folgenden Formeln berechnet werden:

$$\begin{aligned}\mathbf{N}_1^{-1} &= \mathbf{1} - e_1\mathbf{S}_1'\\ \mathbf{S}_1' &= \widetilde{\mathbf{D}}_1 + \mathbf{T}_1\mathbf{S}_1\mathbf{T}_1\end{aligned} \qquad (47)$$

$$\begin{aligned}\mathbf{N}_2^{-1} &= \mathbf{1} - e_2\mathbf{S}_2'\\ \mathbf{S}_2' &= \widetilde{\mathbf{D}}_2 + \mathbf{T}_2\mathbf{S}_2\mathbf{T}_2\\ \mathbf{S}_2 &= \mathbf{R}_{12}^{-1}\mathbf{N}_1\mathbf{S}_1'\mathbf{R}_{12}\\ \mathbf{R}_{12} &= \mathbf{R}_{12}(\phi_{12})\end{aligned} \qquad (48)$$

$$N_3^{-1} = 1 - e_3 S_3'$$
$$S_3' = \tilde{D}_3 + T_3 S_3 T_3$$
$$S_3 = R_{23}^{-1} N_2 S_2' R_{23} \tag{49}$$
$$R_{23} = R_{23}(\phi_{23})$$

$$N_4^{-1} = 1 - e_4 S_4'$$
$$S_4' = \tilde{D}_4 + T_4 S_4 T_4$$
$$S_4 = R_{34}^{-1} N_3 S_3' R_{34} \tag{50}$$
$$R_{34} = R_{34}(\phi_{34})$$

wobei die Bedeutung der einzelnen Faktoren aus der Tabelle 1 bezogen auf den jeweiligen Flächen zu entnehmen sind. Hier beschreiben:

- die Formeln 47 die Vergrößerungsmatrix $N_1^{-1}$ und die lokale Wellenfront $S'_1$ nach der Brechung an der ersten Fläche,

- die Formeln 48 die Vergrößerungsmatrix $N_2^{-1}$ und die lokale Wellenfront $S'_2$ nach der Brechung an der zweiten Fläche,

- die Formeln 49 die Vergrößerungsmatrix $N_3^{-1}$ und die lokale Wellenfront $S'_3$ nach der Brechung an der dritten Fläche;

- und die Formel 50 die Vergrößerungsmatrix $N_4^{-1}$ und die lokale Wellenfront $S'_4$ nach der vierten Fläche.

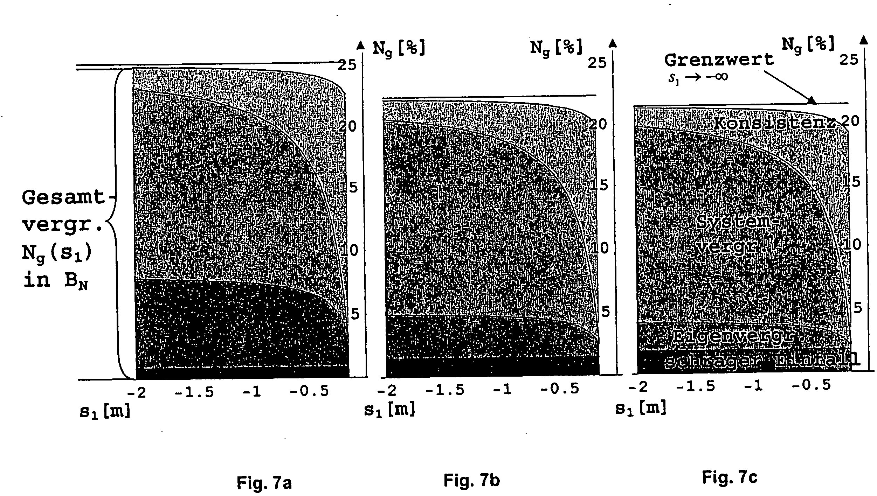

Fig. 7a bis 7c zeigen den Einfluß einer endlichen Eingangsschnittweite $s_1$ auf die Vergrößerung eines progressiven Brillenglases im Nahbezugspunkt. Fig. 7a bis 7c beziehen sich auf drei unterschiedliche Typen von konventionellen, auf dem Markt erhältlichen progressiven Brillengläsern Progressiv LIFE 1 (Fig. 7a), Progressiv LIFE 2 (Fig. 7b), Impression ILT (Fig. 7c) der Firma Rodenstock GmbH. Alle progressiven Brillengläser weisen eine sphärische Wirkung von 5,0 dpt und eine Addition von 2,0 dpt auf.

Tabelle 2 zeigt die geometrischen Parameter der in Fig. 7a bis 7c dargestellten progressiven Brillengläser und die berechnete Eigen- und Gesamtvergrößerung nach der jeweiligen Formel 35 bis 37 i.V.m. Formel 11 b (analog) für verschiedene Brillengläser (Progressive LIFE 1, Progressive LIFE 2, Impression ILT) im Nahbezugspunkt $B_N$ in Prozent, wobei die Grenzwerte für gedachten unendlichen Objektabstand $s_1 \rightarrow -\infty$ angegeben sind.

Tabelle 2

|  | Progressive LIFE 1 | Progressive LIFE 2 | Impression ILT |
|---|---|---|---|
| Durchbiegung der Vorderfläche $D_1$ | +10,2 dpt | +9,2 dpt | +7,4 dpt |
| Mittendicke d | 10,2 mm | 5,96 mm | 4,96 mm |
| Brechungsindex n | 1,502 | 1,596 | 1,597 |

(fortgesetzt)

|  | Progressive LIFE 1 | Progressive LIFE 2 | Impression ILT |
|---|---|---|---|
| $N_e(s_1 \rightarrow -\infty)$ | 7,3% | 3,5% | 2,3% |
| $N_g(s_1 \rightarrow -\infty)$ | 25,2% | 22,2% | 21,5% |

Die Größenordnung der Zahlenwerte der Gesamtvergrößerung $N_g(s_1)$ im Nahbezugspunkt $B_N$ ändert sich bei allen Brillengläsern nur schwach und in ähnlicher Weise als Funktion des Objektabstands $s_1$. Die Aufteilung der Gesamtvergrößerung in Systemvergrößerung $N_s(s_1)$ und Eigenvergrößerung $N_e(s_1)$ verliert bei endlichem Objektabstand ihren strengen Sinn, weil die fiktiven Größen $N_s$ und $N_e$ zum paraxialen Modell des Afokalsystems bei unendlichem Objektabstand passen. Unter allgemeinen Bedingungen gibt es jedoch zusätzlich noch Beiträge zu $N_g(s_1)$, die sich weder $N_s$ noch $N_e$ zuordnen lassen, wie z.B. der Effekt des schrägen Einfalls oder der Effekt der Skalierungskonsistenz σ bei endlichem Objektabstand. Es kann dennoch sehr interessant sein, aus den Teilmatrizen $N_e(s_1)$ und $N_s(s_1)$ die Eigenwerte und die jeweiligen Mittelwerte analog zu den Gleichungen (11a,b) zu bilden und die Zahlenwerte dann als Beiträge der Systemvergrößerung $N_s(s_1)$ und der Eigenvergrößerung $N_e(s_1)$ zu interpretieren. Deshalb sind diese Zahlenwerte zusätzlich zu $N_g(s_1)$ in die Fig. 7a bis 7c als Funktion des Objektabstandes mit aufgenommen. Mit der unteren Linie "schräger Einfall" ist der objektabstandsunabhängige Einfluss bezeichnet, welcher von den Matrizen $\mathbf{T}_i$ herrührt, und welcher als das Verhältnis:

$$N_{schräger E\ inf\ all} = \frac{N_g(s_1 \rightarrow -\infty)}{N_e(s_1 \rightarrow -\infty) N_s(s_1 \rightarrow -\infty)} \qquad (51)$$

.

definiert wird.

Der in Fig.. 7a bis 7c mit "Konsistenz" bezeichnete Anteil stellt den Rest dar, nämlich die Funktion:

$$Konsistenz\ (s_1) = N_g(s_1) - N_s(s_1) - N_e(s_1) - N_{schräger E\ inf\ all} \qquad (52)$$

Auf der Abszisse der Figuren 7a bis 7c ist jeweils der bei der Berechnung der Vergrößerung des jeweiligen Brillenglases berücksichtigten Objektabstand in Meter aufgetragen. Das negative Vorzeichen bezeichnet objektseitige Abstände. Auf der jeweiligen Ordinate der Figuren 7a bis 7c sind (von unten nach oben) die Größen:

$$N_{schräger E\ inf\ all}\ , (N_{schräger E\ inf\ all} + N_e(s_1))\ , (N_{schräger E\ inf\ all} + N_e(s_1) + N_s(s_1))\ , \qquad (53)$$

$$(N_{schräger E\ inf\ all} + N_e(s_1) + N_s(s_1) + Konsistenz\ (s_1)) = N_g(s_1) \qquad (54)$$

aufgetragen.

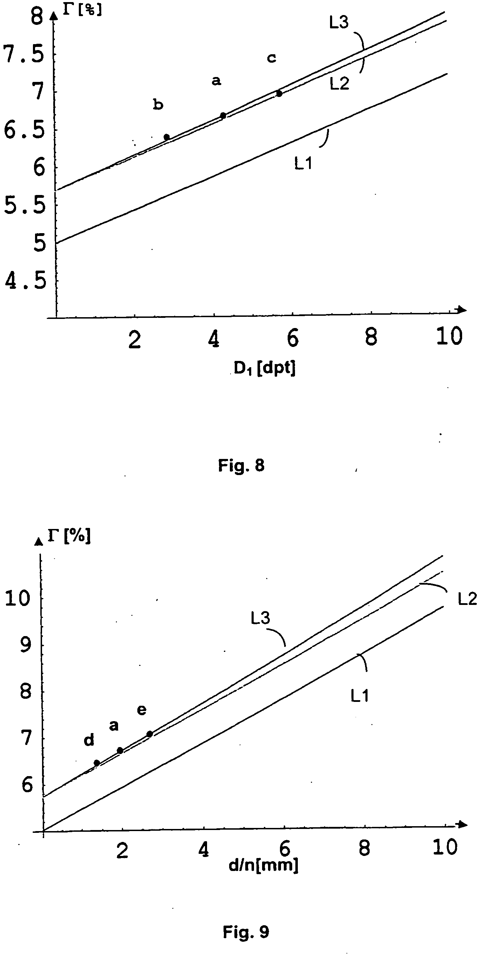

Fig. 8 zeigt den Einfluß der Durchbiegung der Vorderfläche auf die Gesamtvergrößerung des Brillenglases in Abhängigkeit von dem verwendeten Modell der Vergrößerung.

Fig. 9 zeigt den Einfluß der Mittendicke des Brillenglases auf die Gesamtvergrößerung des Brillenglases in Abhängigkeit von dem verwendeten Modell der Vergrößerung.

Die in Fig. 8 und 9 gezeigten Brillengläser sind auf dem Markt erhältliche, konventionelle Brillengläser der Typenbezeichnung Impression ILT der Firma Rodenstock GmbH, welche folgende Parameter aufweisen: Sph=0.5dpt, Zyl=0.0dpt, Add=2.0dpt.

Auf der Abszisse in Fig. 8 ist die Durchbiegung bzw. der Flächenbrechwert der Vorderfläche in dpt aufgetragen. Auf der Ordinate ist die Vergrößerung r in Prozent aufgetragen (vgl. Formel 11 b). Auf der Abszisse in Fig. 9 ist das Verhältnis der Mittendicke des Brillenglases zu dem Brechungsindex des Brillenglases in mm aufgetragen. Auf der Ordinate ist die Vergrößerung r in Prozent aufgetragen (vgl. Formel 11 b).

In Figuren 8 und 9 bezieht sich Linie L1 auf die Gesamtvergrößerung des Brillenglases berechnet nach der klassischen Formel 1. Linie L2 bezieht sich auf die nach Formel 11b i.V.m. Formel 16 berechnete Vergrößerung (d.h. Vergrößerung in skalarer Näherung). Linie L3 bezieht sich auf den nach Formel 11 b i.V.m. Formel 35 berechneten genauen Ausdruck für die Vergrößerung.

Wie aus Fig. 8 und 9 ersichtlich ist, weicht die nach der klassischen Formel 1 berechnete Vergrößerung des Brillenglases insbesondere für höhere Durchbiegungen der Vorderfläche bzw. für größere Mittendicken zum Teil erheblich von der tatsächlichen Vergrößerung des Brillenglases berechnet unter Berücksichtigung eines realistischen Objektmodells ab. Dabei sind die Unterschiede in der Vergrößerung berechnet in skalarer Näherung (Formel 16) und der Vergrößerung berechnet nach der genauen Formel (Formel 35) relativ gering.

Die nach den obigen Formeln berechneten Vergrößerung und/oder Verzerrung des Brillenglases können bei einer Auswertung des Brillenglases, insbesondere des statischen und dynamischen Seheindrucks durch das Brillenglas, berücksichtigt werden. Die Daten des auszuwertenden Brillenglases (Dicke, Pfeilhöhen, und/oder lokale Krümmungen der Vorder- und Rückfläche) können theoretische Daten oder Messdaten eines vorgegebenen Brillenglases sein. Da die Berechnung der Vergrößerung und/oder der Verzerrung ohne großen Rechenaufwand erfolgt, kann eine Auswertung des Brillenglases unter Berücksichtigung der tatsächlichen lokalen Vergrößerung und/oder der lokalen Verzerrung auch für komplexe asphärische, atorische und progressive Brillengläser in Echtzeit bzw. online erfolgen. Die mittels Isolinien oder Farbkodierung visualisierte Verteilung der lokalen Vergrößerung und/oder Verzerrung des Brillenglases kann beispielsweise unterstützend für die Beratung der Kunden durch den Augenoptiker bzw. für die Auswahl des optimalen Brillenglases (Material, Fassung, Durchbiegung, Dicke, etc.) eingesetzt werden. Ein weiterer Vorteil des erfindungsgemäßen Berechnungs- bzw. Auswertungsverfahrens ist, daß individuelle Parameter der Augen des Brillenträgers (Rezeptwerte, Pupillendistanz; Hornhautscheitelabstand, etc), der Gebrauchsstellung (Vorneigung, Fassungsscheibenwinkel, etc) und/oder des Objektmodels (Objektabstände in Abhängigkeit von der zur erfüllenden Sehaufgabe) bei der Berechnung der lokalen Vergrößerung und/oder Verzerrung und Auswertung des Brillenglases ebenfalls berücksichtigt werden können. Somit kann dem genauen Eindruck der von einem konkreten Brillenträger empfundenen Vergrößerung und/oder Verzehrung beim Blick durch das Brillenglas Rechnung getragen werden.

Ebenfalls können die nach einer der obengenanten Formeln berechneten Vergrößerung und/oder Verzerrung bei der Optimierung des Brillenglases und insbesondere bei der Flächenoptimierung berücksichtigt werden.

Die Optimierung des Brillenglases bzw. der Flächen des Brillenglases erfolgt derart, daß eine Zielfunktion F minimiert wird:

$$\min F = \min(\sum_i G_{V,i}(N_{Ist}(i) - N_{Soll}(i))^2 + G_{Z,i}(Z_{Ist}(i) - Z_{Soll}(i))^2) \tag{55}$$

wobei:

$N_{Is}(i)$      die tatsächliche Vergrößerung des Brillenglases an der $i$-ten Bewertungsstelle;
$N_{Soll}(i)$      die geforderte Vergrößerung des Brillenglases an der $i$-ten Bewertungsstelle;
$G_v.i$      die Gewichtung der Vergrößerung des Brillenglases an der $i$-ten Bewertungsstelle;
$Z_{Ist}(i)$      die tatsächliche Verzerrung des Brillenglases an der $i$-ten Bewertungsstelle;
$Z_{Soll}(i)$      die geforderte Verzerrung an der $i$-ten Bewertungsstelle;
$G_{z.i}$      die Gewichtung der Verzerrung an der $i$-ten Bewertungsstelle

bezeichnet.

Das Optimierungsverfahren kann mehrere Iterationsschritte umfassen.

In einer bevorzugten Ausführungsform erfolgt die erfindungsgemäße Optimierung nur unter Berücksichtigung der Vergrößerung oder der Verzerrung des Brillenglases. In diesem Fall ist entsprechend die Gewichtung $G_{v,i}$ der Vergrößerung in der Zielfunktion $F$ oder die Gewichtung $G_{z,i}$ der Verzerrung in der Zielfunktion $F$ gleich Null.

Zusätzlich zu der Vergrößerung und/oder der Verzerrung der Brillengläser kann bevorzugt die Optimierung des Brillenglases derart erfolgen, daß ebenfalls die Verteilung des Brechwerts bzw. der Refraktionsfehler und/oder der astigmatischen Fehler berücksichtigt wird. Die Optimierung hinsichtlich der Refraktionsfehler und/oder der astigmatischen Fehler erfolgt bevorzugt unter Berücksichtigung des Gebrauchswerts und/oder des Werts des Astigmatismus in Gebrauchsstellung des Brillenglases.

Bei der Berechnung der lokalen Vergrößerung und/oder Verzerrung des Brillenglases sowie bei der Optimierung des Brillenglases können durchschnittliche Werte für die Eigenschaften eines Standardauges (Pupillenabstand, Position der Hauptebenen, des Augendrehpunkts, der Eintrittspupille, etc.) berücksichtigt werden. Ferner kann das Brillenglas in einer durchschnittlichen Gebrauchssituation (charakterisiert durch die Seiten- und Vorneigung des Brillenglases, den Hornhautscheitelabstand, etc.) angeordnet werden. Ebenfalls kann ein durchschnittliches Modell des zu betrachtenden Objektraums bzw. für die Objektentfernung berücksichtigt werden. Die Optimierung des Brillenglases erfolgt vorzugsweise unter Berücksichtigung der Verteilung der lokalen Vergrößerung und/oder der Verzerrung berechnet in diesem Modell des Systems Brillenglas-Auge sowie vorzugsweise unter Berücksichtigung der Verteilung des Gebrauchswerts (bzw. Brechwert des Brillenglases in Gebrauchsstellung) und/oder des Astigmatismus des Brillenglases in Gebrauchsstellung. Ziel der Optimierung ist eine möglich kleine lokale Veränderung der Vergrößerung des Brillenglases und/oder minimale Werte der Verzerrung sowie ferner möglichst kleine Refraktionsfehler und/oder astigmatische Fehler, und zwar vorzugsweise bezogen auf den Gebrauchswert bzw. Astigmatismus in Gebrauchsstellung.

Ein so optimiertes Brillenglas weist nicht nur vorteilhafte Eigenschaften hinsichtlich der Verteilung der Vergrößerung und/oder der Verzerrung sondern ebenfalls vorteilhafte Eigenschaften hinsichtlich der Refraktions- und astigmatischen Fehler auf.

In einer anderen besonders bevorzugten Ausführungsform erfolgt die Berechnung der lokalen Vergrößerung und/oder der lokalen Verzerrung sowie die Optimierung des Brillenglases bzw. die Flächenoptimierung des Brillenglases unter Berücksichtigung der individuellen Parameter des Auges des Brillenglasträgers (Pupillenabstand, Position der Hauptebenen, des Augendrehpunkts, der Eintrittspupille, etc), der individuellen Gebrauchssituation, in welcher das Brillenglas angeordnet ist (z.B. Seitein- und Vorneigung des Brillenglases angeordnet in einer Brillenfassung, den Hornhautscheitelabstand, Pupillenabstand, etc), des Verwendungszwecks des Brillenglases (Lesebrille, Sportbrille, etc) und/oder des individuellen Modells des zu betrachtenden Objektraums. Die individuellen Daten können z.B. bei der Bestellung des Brillenglases durch einen Augenoptiker ermittelt werden und zusammen mit der Rezeptdaten des Brillenglases (sphärische, zylindrische, prismatische und/oder progressive Wirkung) an eine erfindungsgemäße Vorrichtung zum Berechnen der Vergrößerung und/oder der Verzerrung des Brillenglases und/oder an eine erfindungsgemäße Vorrichtung zum Herstellen eines Brillenglases vorzugsweise per Datenfernübertragung bzw. "online übertragen werden.

Somit ist es möglich, die tatsächliche von dem Brillenglasträger empfundene Vergrößerung und/oder die Verzerrung beim Durchblicken durch das in einer vorgegebenen Fassung angeordnete Brillenglas zu ermitteln und somit den Auswahl eines bestimmten Brillenglases und/oder einer bestimmten Brillenfassung zu unterstützen.

Ferner ist es möglich, die individuellen Daten zusammen mit den Rezeptdaten des Brillenglases vorzugsweise per Datenfernübertragung bzw. "online" an eine erfindungsgemäße Vorrichtung zur Herstellung eines Brillenglases zu übermitteln. Die Optimierung des Brillenglases unter Berücksichtigung der Verteilung der Vergrößerung und/oder der Verzerrung (als einziger oder als zusätzliche Parameter) erfolgt aufgrund der übermittelten, individuellen Daten und Rezeptdaten. Vorzugsweise ist eine der beiden Flächen des Brillenglases, welche vorzugsweise die objektseitige Vorderfläche ist, eine einfache rotationssymmetrische Fläche. Die Optimierung des Brillenglases umfaßt eine Flächenoptimierung der gegenüberliegenden Fläche, welche vorzugsweise die augenseitige Rückfläche ist, so daß die obengenante Zielfunktion minimiert wird. Die so optimierte Fläche ist in der Regel eine nicht rotationssymmetrische Fläche, z.B. eine asphärische oder eine atorische Fläche. Die unter Berücksichtigung der Vergrößerung und/oder Verzerrung optimierten Brillengläser bzw. Brillenglasflächen können z.B. mittels numerisch gesteuerten Werkzeugen aus Mineralglas oder Kunststoff hergestellt werden.

Fig. 10a bis 13b zeigen die Verteilung der lokalen Vergrößerung und der lokalen Verzerrung von Einstärkengläsern als Isolinien der gleichen Vergrößerung bzw. Verzerrung in Prozent, wobei der Abstand zwischen zwei Isolinien 1 % beträgt. Die lokale Vergrößerung und die lokale Verzerrung wurden jeweils nach Formel 11 b oder 12b i.V.m. Formel 35 berechnet, wobei bei der Berechnung ein Hauptstrahl, welcher durch die Eintrittspupille des Auges verläuft, berücksichtigt wurde. Mit anderen Worten handelt es sich bei der dargestellten Vergrößerung und Verzerrung um die Sehwinkelvergrößerung und -verzerrung.

Ferner wurde bei der Berechnung der in Figuren 10a bis 13b dargestellten Vergrößerung und Verzerrung eine vorgegebene Gebrauchsstellung des Brillenglases berücksichtigt, welche durch folgende Parameter charakterisiert ist:

Hornhautscheitelabstand (HSA) = 15,00 mm;
Vorneigung = 0,0 Grad;
Fassungsscheibenwinkel = 0,0 Grad;
Pupillendistanz = 63,0 mm;
Augendrehpunktabstand e = 28,5mm;
Objektabstandmodell:

Figuren 10a,b, 11a,b, 12a,b und 13a,b: Objekt im Unendlichen für alle Blickrichtungen; oder
Figuren 10c,d und Figuren 12c,d: unendlicher Objektabstand im oberen Abschnitt des Brillenglases, welcher fließend in einen Objektabstand von -2,6 dpt bei x = 0 mm, y = -20 mm übergeht.

Alle Figuren 10a bis 13b sind auf ein kartesisches Koordinatensystem bezogen, das tangential zur Vorderfläche des Brillenglases liegt und dessen Ursprung sich in Nullblickrichtung vor dem Auge befindet. Die x-y-Ebene steht senkrecht auf der Nullblickrichtung, alle Koordinatenwerte x und y sind in mm angegeben.

Die in Fig. 10a-d und 11a,b dargestellten Brillengläser weisen eine sphärische Wirkung von -4,0 dpt (sph = -4,0 dpt), eine zylindrische Wirkung von 0,0 dpt (zyl = 0,0 dpt), eine prismatische Wirkung von 0,0 cm/m, einen Brechungsindex n = 1,597, eine Durchbiegung bzw. Krümmung der Vorderfläche D1 = 2,0 dpt sowie eine Mittendicke $d_M$ = 1;5 mm auf.

Fig. 11a und 11b beziehen sich auf ein konventionelles Einstärken-Brillenglas, wobei die Rückfläche als sphärische Fläche ausgebildet ist. Die dabei maximal auftretende Verzerrung dieses Brillenglases beträgt am Rand des Brillenglases ungefähr 19% (vgl. Fig. 11 b). Die Vergrößerung des Brillenglases beträgt in der Glasmitte ungefähr -7% und in der Peripherie des Brillenglases ungefähr -17% (vgl. Fig. 11 a).

Fig. 10a bis 10d beziehen sich auf ein Einstärken-Brillenglas, dessen Rückfläche nach einem Optimierungsverfahren gemäß der Erfindung unter Berücksichtung der Vergrößerung und/oder Verzerrung des Brillenglases optimiert ist, wobei bei der Optimierung des Brillenglases ein unendlicher Objektabstand in allen Blickrichtungen berücksichtigt wurde.

Fig. 10 a,b zeigen die lokale Vergrößerung (in Prozent) und die lokale Verzerrung (in Prozent) dieses erfindungsgemäß optimierten Brillenglases, welche jeweils nach Formel 11b bzw. 12b i.V.m. Formel 35, unter Berücksichtigung eines unendlichen Objektabstands ($s_1 \rightarrow \infty$) in allen Blickrichtungen, berechnet wurden. Fig. 10c,d zeigen die lokale Vergrößerung (in Prozent) bzw. die lokale Verzerrung (in Prozent) desselben erfindungsgemäß optimierten Brillenglases, welche jeweils nach Formel 11b bzw. 12b i.V.m. Formel 35, unter Berücksichtigung eines Objektabstandmodels, gemäß welchem der unendliche Objektabstand im oberen Abschnitt des Brillenglases fließend in einen Objektabstand von -2,6 dpt bei x = 0 mm, y = -20 mm übergeht, berechnet wurden.

Wie aus Fig. 10b ersichtlich ist, verringert sich der maximal auftretende Wert der Verzerrung auf unter 4%. Die Vergrößerung in der Peripherie des Brillenglases erreicht einen Wert von nur-2% (vgl. Fig. 10a).

Die Verteilungen der lokalen Vergrößerung und der lokalen Verzerrung, dargestellt in Fig. 10a,b einerseits und in Fig. 10c,d anderseits, sind aufgrund des gewählten Objektabstandmodels, welches im oberen Brillenglasbereich einen unendlichen Objektabstand vorsieht, im wesentlichen identisch. Bei einem Vergleich der Figuren 10a,b mit den Figuren 10c,d sind jedoch Unterschiede im Bereich y < 0 mm zu erkennen. Der maximal auftretende Wert der Verzerrung in Fig. 10d ist jedoch ebenfalls kleiner als 4% (vgl. Fig. 10d). Die Vergrößerung in der Peripherie des Brillenglases erreicht einen Wert von nur -1% (vgl. Fig. 10c).

Entsprechende Verbesserungen können für Einstärken-Brillengläser mit zylindrischer Verordnung erzielt werden. Figuren 12a bis 13b beziehen sich auf Einstärken-Brillengläser mit einer sphärischen Verordnung von -4,0 dpt (sph = -4,0 dpt) und einer zylindrischen Verordnung von 2,0 dpt mit einer Achse von 0˚ (zyl = 2,0 dpt, Achse = 0˚). Die in Fig. 12a bis 13b dargestellten Einstärken-Brillengläser weisen ferner einen Brechungsindex n=1,597, eine Durchbiegung bzw. Krümmung der Vorderfläche D1 = 2,0 dpt sowie eine Mittendicke $d_M$=1,5 mm auf.

In Fig. 13a und 13b sind die Vergrößerung in Prozent (Fig. 13a) und die Verzerrung in Prozent (Fig. 13b) (dargestellt als Isolinien der gleichen Vergrößerung bzw. Verzerrung) eines Einstärken-Brillenglases gemäß dem Stand der Technik angegeben, wobei die Rückfläche konventionell als eine torische Fläche ausgebildet ist. Dieses konventionelle Brillenglas weist Verzerrungen bis zu 24% (vgl. Fig. 13b) und Vergrößerungen von bis zu -15% auf (vgl. Fig. 13a). Die in Fig. 13a und 13b dargestellten Vergrößerung und Verzerrung wurden in Gebrauchstellung des Brillenglases, unter Berücksichtigung eines unendlichen Objektabstands in allen Blickrichtungen, berechnet.

Fig. 12a bis 12d zeigen die Vergrößerung (Fig. 12a, 12c) und die Verzerrung (Fig. 12b, 12d) (dargestellt als Isolinien der gleichen Vergrößerung bzw. Verzerrung) eines Einstärken-Brillenglases, welches erfindungsgemäß unter Berücksichtigung der Verzerrung optimiert worden ist, wobei bei der Optimierung des Brillenglases ein unendlicher Objektabstand in allen Blickrichtungen berücksichtigt wurde.

Die in Fig. 12a und 12b dargestellten lokalen Vergrößerung (in Prozent) und Verzerrung (in Prozent) wurden jeweils nach Formel 11 b bzw. 12b i.V.m. Formel 35, unter Berücksichtigung eines unendlichen Objektabstands in allen Blickrichtungen, berechnet. Bei der Berechnung der in Fig. 12c und 12d dargestellten Vergrößerung und Verzerrung des erfindungsgemäß optimierten Brillenglases wurde ein Objektabstandmodel berücksichtigt, gemäß welchem der unendliche Objektabstand im oberen Abschnitt des Brillenglases fließend in einen Objektabstand von -2,6 dpt bei x = 0 mm, y = -20 mm übergeht.

Wird das Brillenglas entsprechend der Erfindung optimiert, wobei bei der Optimierung die Verzerrung des Brillenglases berücksichtigt wird, so verringert sich der Wert der maximal auftretenden Vergrößerung (vgl. Fig. 12a, Fig. 12c) auf -7%. Die maximal auftretende Verzerrung erreicht einen Wert von nur -4% (vgl. Fig. 12b, Fig. 12d). Überaschenderweise hat sich herausgestellt, daß obwohl nur die Verzerrung in der Zielfunktion aufgenommen wird, eine erhebliche Verbesserung der Vergrößerung ebenfalls erzielt werden kann. In großen Bereichen des erfindungsgemäß optimierten Brillenglases liegt die Vergrößerung im Betrag sogar unter 6% (vgl. Fig. 12a).

Fig. 14 zeigt eine schematische Darstellung eines Beispiels der bevorzugten Vorrichtung zum Berechnen der lokalen Vergrößerung und/oder der lokalen Verzerrung eines Brillenglases und/oder zum Berechnen bzw. Optimieren der zumindest einen Fläche des Brillenglases.

Die bevorzugte Vorrichtung umfaßt ein Computersystem 50, mit zumindest einem ersten Computer 100. Das Computersystem 50 kann jedoch optional eine Vielzahl von Computern 10q, q = 1, 2, ..., welche durch ein (mono-, bi- und/oder multidirektionales) Netzwerk miteinander 300 verbunden sind, umfassen.

Der Computer 100 weist einen Prozessor 110, einen Speicher 120, einen Bus 130 auf. Ferner kann der Computer 100 eine Eingabevorrichtung 140 und/oder eine Ausgabevorrichtung 150 umfassen. Die Elemente 110 bis 170 des Computers 900 verallgemeinern die entsprechenden Elemente der Computer 101, 102, etc. Der Computer 100 ist beispielsweise ein konventioneller Personalcomputer (PC), ein Multiprozessorcomputer, eine Mainframecomputer, eine tragbarer PC (Laptop) oder ein stationärer PC oder dergleichen.

Weiterhin wird ein Computerprogrammerzeugnis bzw. -produkt 200 bereitgestellt, welches derart ausgelegt ist, daß es - wenn geladen und ausgeführt auf einem Computer - ein Verfahren zum Berechnen der lokalen Vergrößerung und/oder der lokalen Verzerrung eines Brillenglases durchführen kann. Das Computerprogrammerzeugnis 200 kann auf einem körperlichen Speichermedium bzw. Programmträger 210 gespeichert werden. Das Computerprogrammerzeugnis kann ferner als Programmsignal vorliegen.

Der Prozessor 110 des Computers 100 ist beispielsweise ein Zentralprozessor (CPU), ein Mikrocontroller (MCU), oder ein digitaler Signalprozessor (DSP).

Der Speicher 120 symbolisiert Elemente, die Daten und Befehle entweder zeitlich begrenzt oder dauerhaft speichern. Obwohl zum besseren Verständnis der Speicher 120 als Teil des Computers 100 gezeigt ist, kann die Speicherfunktion an anderen Stellen, z.B im Prozessor selbst (z.B. Cache, Register) und/oder auch im Netzwerk 300, beispielsweise in den Computern 101/102 implementiert werden. Der Speicher 120 kann ein Read-Only-Memory (ROM), ein Random-Access-Memory (RAM), ein programmierbares oder nicht-programmierbares PROM oder ein Speicher mit anderen Zugriffsoptionen sein. Der Speicher 120 kann physisch auf einem computerlesbaren Programmträger, zum Beispiel auf:

(a) einem magnetischen Träger (Festplatte, Diskette, Magnetband);
(b) einem optischen Träger (CD-ROM, DVD);
(c) einem Halbleiterträger (DRAM, SRAM, EPROM, EEPROM);

implementiert bzw. gespeichert werden.

Wahlweise ist der Speicher 120 über verschiedene Medien verteilt. Teile des Speichers 120 können fest oder austauschbar angebracht sein. Zum Lesen und Schreiben benutzt der Computer 100 bekannte Mittel wie z.B. Diskettenlaufwerke, etc.

Der Speicher 120 speichert Unterstützungskomponenten wie zum Beispiel ein Bios (Basic Input Output System), ein Betriebssystem (OS), eine Programmbibliothek, einen Compiler, einen Interpreter und/oder ein Tabellen- bzw. Textverarbeitungsprogramm. Diese Komponenten sind zum besseren Verständnis nicht dargestellt. Unterstützungskomponenten sind kommerziell verfügbar und können auf dem Computer 100 von Fachleuten installiert bzw. in diesem implementiert werden.

Der Prozessor 110, der Speicher 120, die Eingabe- und die Ausgabevorrichtung sind über zumindest einen Bus 130 verbunden und/oder wahlweise über das (mono-, bi- bzw. multidirektionale) Netzwerk 300 (z.B. das Internet) angeschlossen bzw. stehen miteinander in Verbindung. Der Bus 130 sowie das Netzwerk 300 stellen logische und/oder physische Verbindungen dar, die sowohl Befehle als auch Datensignale übertragen. Die Signale innerhalb des Computers 100 sind überwiegend elektrische Signale, wohingegen die Signale im Netzwerk elektrische, magnetische und/ oder optische Signale oder auch drahtlose Funksignale sein können.

Netzwerkumgebungen (wie das Netzwerk 300) sind in Büros, unternehmensweiten Computernetzwerken, Intranets und im Internet (d.h. World Wide Web) üblich. Die physische Entfernung zwischen den Computern im Netzwerk ist ohne Bedeutung. Das Netzwerk 300 kann ein drahtloses oder ein verdrahtetes Netzwerk sein. Als mögliche Beispiele für Implementierungen des Netzwerks 300 seien hier angeführt: ein lokales Netzwerk (LAN), ein kabelloses lokales Netzwerk (WLAN), ein Wide Area Network (WAN), ein ISDN-Netz, eine Infrarotverbindung (IR), eine Funkverbindung wie beispielsweise das Universal Mobile Telecommunication System (UMTS) oder eine Satellitenverbindung. Übertragungsprotokolle und Datenformate sind bekannt. Beispiele dafür sind: TCP/IP (Transmission Control Protocol/Internet Protocol), HTTP (Hypertext Transfer Protocol), URL (Unique Resource Locator), HTML (Hypertext Markup Language), XML (Extensible Markup Language), WML (Wireless Application Markup Language), Wireless Application Protocol (WAP) usw.

Die Eingabe- und Ausgabevorrichtungen können Teil einer Benutzerschnittstelle 160 sein.

Die Eingabevorrichtung 140 steht für eine Vorrichtung, die Daten und Anweisungen zur Verarbeitung durch den Computer 100 bereitstellt. Beispielsweise ist die Eingabevorrichtung 140 eine Tastatur, eine Zeigevorrichtung (Maus, Trackball, Cursorpfeile), Mikrofon, Joystick; Scanner. Obwohl es sich bei den Beispielen allesamt um Vorrichtungen mit menschlicher Interaktion, vorzugsweise durch eine graphische Benutzerschnittstelle, handelt, kann die Vorrichtung 140 auch ohne menschliche Interaktion auskommen, wie zum Beispiel ein drahtloser Empfänger (z.B. mittels Satelliten- oder terrestrischer Antenne), ein Sensor (z.B. ein Thermometer), ein Zähler (z.B. ein Stückzahlzähler in einer Fabrik).

Die Eingabevorrichtung 140 kann zum Lesen des Speichermediums bzw. Trägers 170 verwendet werden.

Die Ausgabevorrichtung 150 bezeichnet eine Vorrichtung, die Anweisungen und Daten anzeigt, die bereits verarbeitet wurden. Beispiele dafür sind ein Monitor oder eine anderer Anzeige (Kathodenstrahlröhre, Flachbildschirm, Flüssigkristallanzeige, Lautsprecher, Drucker, Vibrationsalarm). Ähnlich wie bei der Eingabevorrichtung 140 kommuniziert die Ausgabevorrichtung 150 bevorzugt mit dem Benutzer, vorzugsweise durch eine graphische Benutzerschnittstelle. Die Ausgabevorrichtung kann ebenfalls mit anderen Computern 101, 102, etc. kommunizieren.

Die Eingabevorrichtung 140 und die Ausgabevorrichtung 150 können in einer einzigen Vorrichtung kombiniert werden. Beide Vorrichtungen 140, 150 können wahlweise bereitgestellt werden.

Das Computerprogrammerzeugnis bzw. -produkt 200 umfaßt Programminstruktionen und wahlweise Daten, die den Prozessor 110 unter anderem dazu veranlassen, die Verfahrensschritte des Verfahrens gemäß der Erfindung oder bevorzugte Ausführungsformen hiervon auszuführen. Mit anderen Worten definiert das Computerprogramm 200 die Funktion des Computers 100 und dessen Interaktion mit dem Netzwerksystem 300. Das Computerprogrammerzeugnis 200 kann beispielsweise als Quellcode in einer beliebigen Programmiersprache und/oder als Binärcode in kompilierter Form (d.h. maschinenlesbaren Form) vorliegen. Ein Fachmann ist in der Lage, das Computerprogrammerzeugnis 200 in Verbindung mit jeder der zuvor erläuterten Unterstützungskomponente (z.B. Compiler, Interpreter, Betriebssystem) zu benutzen.

Obwohl das Computerprogrammerzeugnis 200 als im Speicher 120 gespeichert dargestellt ist, kann das Computerprogrammerzeugnis 100 aber auch an beliebig anderer Stelle gespeichert sein. Das Computerprogrammerzeugnis 200 kann ebenfalls auf dem Speichermedium bzw. Programmträger 170 gespeichert sein.

Das Speichermedium 170 ist beispielhaft als außerhalb des Computers 100 dargestellt. Um das Computerprogrammerzeugnis 200 auf den Computer 100 zu übertragen, kann das Speichermedium 170 in das Eingabegerät 140 eingeführt werden. Das Speichermedium 170 kann als ein beliebiger, computerlesbarer Träger implementiert werden, wie zum Beispiel als eines der zuvor erläuterten Medien (vgl. Speicher 120). Das Programmsignal 180, welches vorzugsweise über das Netzwerk 300 zum Computer 100 übertragen wird, kann ebenfalls das Computerprogrammerzeugnis 200 beinhalten bzw. ein Teil hiervon sein.

Schnittstellen zum Koppeln der einzelnen Komponenten des Computersystems 50 sind ebenfalls bekannt. Zur Vereinfachung sind die Schnittstellen nicht dargestellt. Eine Schnittstelle kann beispielsweise eine serielle Schnittstelle, eine parallele Schnittstelle, ein Gameport, ein universeller serieller Bus (USB), ein internes oder externes Modem, ein Grafikadapter und/oder eine Soundkarte aufweisen.

Die unter Berücksichtigung der lokalen Vergrößerung und/oder Verzerrung optimierten Brillengläser bzw. Brillenglasflächen können z.B. mittels numerisch gesteuerten Werkzeugen aus Mineralglas oder Kunststoff hergestellt werden.

**Bezugszeichenliste**

| | |
|---|---|
| 10 | Vorder- bzw. objektseitige Fläche des Brillenglases |
| 12 | Brechungsebene |
| 14 | Schwächer gekrümmter Hauptschnitt |
| 16 | Stärker gekrümmter Hauptschnitt |
| 20 | Rück- bzw. augen- bzw. bildseitige Fläche des Brillenglases |
| 30 | Modelauge |
| 40 | brechende bzw. Grenzfläche |
| 50 | Computersystem |
| 100,10q | Computer |
| 110 | Prozessor |
| 120 | Speicher |
| 130 | Bus |
| 140 | Eingabevorrichtung |
| 150 | Ausgabevorrichtung |
| 160 | Benutzerschnittstelle |
| 170 | Speichermedium |
| 180 | Programmsignal |
| 200 | Computerprogrammerzeugnis |
| 300 | Netzwerk |
| S1-S3 | Berechnungsschritte |
| HS | Hauptstrahls |

NS    Nebenstrahl
O     Objektpunkt
D1    Durchstoßpunkt des Hauptstrahls mit der Vorderfläche
D1'   Durchstoßpunkt des Nebenstrahls mit der Vorderfläche
D2    Durchstoßpunkt des Hauptstrahls mit der Rückfläche
Z'    Augendrehpunkt
P1-P4  infinitesimal kleines Objekt

**Patentansprüche**

1. Verfahren zur Herstellung eines Brillenglases unter Berücksichtigung der Vergrößerung und/oder der Verzerrung des Brillenglases, wobei das Brillenglas zur Korrektion eines Refraktionsdefizits eines Auges ausgelegt ist und zumindest eine erste objektseitige Fläche und eine zweite augenseitige Fläche aufweist, umfassend einen Berechnungs- bzw. Optimierungsschritt, wobei der Berechnungs- bzw. Optimierungsschritt derart erfolgt, daß eine Zielfunktion $F$ minimiert wird, wobei

$$\min F = \min\left(\sum_i G_{V,i}(N_{Ist}(i) - N_{Soll}(i))^2 + G_{Z,i}(Z_{Ist}(i) - Z_{Soll}(i))^2\right),$$

und wobei:

$N_{Ist}(i)$ die tatsächliche Vergrößerung des Brillenglases an der i-ten Bewertungsstelle;
$N_{Soll}(i)$ die geforderte Vergrößerung des Brillenglases an der $i$-ten Bewertungsstelle;
$G_{V,i}$ die Gewichtung der Vergrößerung des Brillenglases an der $i$-ten Bewertungsstelle;
$Z_{Ist}(i)$ die tatsächliche Verzerrung des Brillenglases an der $i$-ten Bewertungsstelle;
$Z_{Soll}(i)$ die geforderte Verzerrung an der $i$-ten Bewertungsstelle; und
$G_{Z,i}$ die Gewichtung der Verzerrung an der $i$-ten Bewertungsstelle

bezeichnet, und
wobei die Vergrößerung und/oder die Verzerrung an der $i$-ten Bewertungsstelle nach einem Verfahren zum Berechnen der lokalen Vergrößerung und/oder der lokalen Verzerrung eines Brillenglases in zumindest einer vorgegebenen oder vorgebbaren Blickrichtung umfassend folgende Schritte:

- Berechnen für die vorgegebene bzw. vorgebbare Blickrichtung des Verlaufs eines Hauptstrahls (HS), welcher von einem vorgegebenen oder vorgebbaren infinitesimal kleinen Objekt ausgeht und nach Brechung durch das Brillenglas durch den Augendrehpunkt (Z') des Auges (30), durch die Eintrittspupille des Auges (30) oder durch die Hauptebene des Auges (30) verläuft;
- Ermitteln der Hauptkrümmungen und -richtungen einer dem Hauptstrahl (HS) zugehörigen lokalen Wellenfront beim Brechen durch das Brillenglas;
- Berechnen der lokalen Vergrößerung und/oder der lokalen Verzerrung des Brillenglases aus den ermittelten Hauptkrümmungen und -richtungen der lokalen Wellenfront, den Daten des Verlaufs des Hauptstrahls (HS) und den Daten des Brillenglases, wobei bei dem Berechnen der lokalen Vergrößerung und/oder der lokalen Verzerrung eine endliche Entfernung des Objekts vom Brillenglas berücksichtigt wird

berechnet wird.

2. Verfahren nach Anspruch 1, wobei zumindest eine der ersten und der zweiten Fläche eine rotationsasymmetrische Fläche ist, und wobei die Daten des Brillenglases Daten bezüglich der Pfeilhöhen und/oder der lokalen Krümmungen der zumindest einen rotationsasymmetrischen Fläche umfaßen.

3. Verfahren nach Anspruch 2, wobei die zumindest eine rotationsasymmetrische Fläche:

- eine progressive Fläche mit sich kontinuierlich ändernden Brechwert zwischen einem Fern- und einem Nahbezugspunkt ist; oder
- eine asphärische oder atorische Fläche ist.

4. Verfahren nach einem der Ansprüche 1 bis 3, wobei der Berechnungs- und/oder der Optimierungsschritt die Berechung einer lokalen Vergrößerungsmatrix $N_g$ aus den Eigenschaften der lokalen Wellenfront umfaßt und wobei die Vergrößerung des Brillenglases als der Mittelwert der Eigenwerte der Vergrößerungsmatrix $N_g$ und die Verzerrung als der Differenz der Eigenwerte der Vergrößerungsmatrix $N_g$ berechnet werden.

5. Verfahren nach Anspruch 4, wobei die lokale Vergrößerungsmatrix $N_g$ nach den folgenden Formeln berechnet wird, wobei die einzelnen lokalen Faktoren bzw. Größen grundsätzlich an den Durchstoßpunkten (D1, D2) des Hauptstrahls (HS) mit der jeweiligen Fläche (10, 20) des Brillenglases ausgewertet werden:

$$\mathbf{N}_g^{-1} = \sigma \cdot \mathbf{N}_e^{-1} \mathbf{N}_s^{-1}$$

$$\mathbf{N}_e^{-1} = \mathbf{1} - \frac{d}{n} \mathbf{S}_1^{'}$$

$$\mathbf{N}_s^{-1} = \mathbf{1} - e \mathbf{S}_2^{'}$$

$$\mathbf{S}_2^{'} = \mathbf{S}_2 + \mathbf{D}_2$$

$$\mathbf{S}_2 = \mathbf{N}_e \mathbf{S}_1^{'}$$

$$\mathbf{S}_1^{'} = \mathbf{S}_1 + \mathbf{D}_1$$

$$\mathbf{S}_1 = \frac{1}{s_1} \mathbf{1}$$

wobei:

$\sigma$ einen Skalenfaktor bezeichnet zur Berücksichtigung einer endlichen Eingangsschnittweite $s_1$ berechnet nach der Formel:

$$\sigma = \frac{|\mathbf{s}_1|}{|\mathbf{s}_1 + \mathbf{d} + \mathbf{e}|} \; ;$$

$s_1$ einen Vektor mit Länge $s_1$ in Lichtrichtung des objektseitigen Hauptstrahls (HS) zwischen dem in einer vorgegebenen Blickrichtung betrachteten Objekt und dem Durchstoßpunkt (D1) des Hauptstrahls (HS) mit der ersten Fläche (10) bezeichnet;
d einen Vektor mit Länge $d$ in Lichtrichtung des Hauptstrahls (HS) zwischen dem Durchstoßpunkt (D1) des Hauptstrahls (HS) mit der ersten Fläche (10) und dem Durchstoßpunkt (D2) des Hauptstrahls (HS) mit der zweiten Fläche (20) bezeichnet;
e einen Vektor mit Länge $e$ in Lichtrichtung des bildseitigen Hauptstrahls (HS) zwischen dem Durchstoßpunkt (D2) des Hauptstrahls (HS) mit der zweiten Fläche (20) und der Eintrittspupille des Auges (30), dem Augendrehpunkt (Z') des Auges (30) oder der Hauptebene des Auges (30) bezeichnet;

*n* den Brechungsindex des Brillenglases bezeichnet;

$\mathbf{N}_e^{-1}$ die lokale inverse Matrix der Eigenvergrößerung bezeichnet;

$\mathbf{N}_s^{-1}$ die lokale inverse Matrix der Systemvergrößerung bezeichnet;

$\mathbf{S}_i$, $i$ = 1,2 die lokale Krümmungsmatrix der einfallenden sphärischen Wellenfront an der $i$ -ten Fläche des Brillenglases bezeichnet;

$\mathbf{S}_i$, $i$ = 1,2 die lokale Krümmungsmatrix der Wellenfront nach der Brechung an der i - ten Fläche des Brillenglases bezeichnet;

$\mathbf{D}_i$, $i$ = 1,2 die lokale Flächenbrechwertmatrix der $i$-ten Fläche (10, 20) des Brillenglases bezeichnet, welche nach den folgenden Formeln berechnet wird:

$$\mathbf{D}_i = \begin{pmatrix} Sph_i - \dfrac{Zyl_i}{2}\cos 2\psi_i & -\dfrac{Zyl_i}{2}\sin 2\psi_i \\ -\dfrac{Zyl_i}{2}\sin 2\psi_i & Sph_i + \dfrac{Zyl_i}{2}\cos 2\psi_i \end{pmatrix}$$

$$Sph_i = \frac{(n-1)}{2}\left(\frac{1}{r_i^a} + \frac{1}{r_i^b}\right)$$

$$Zyl_i = \frac{(n-1)}{2}\left(\frac{1}{r_i^a} - \frac{1}{r_i^b}\right), i = 1,2\,;$$

wobei $r_i^{a,b}$, $i = 1,2$ die lokale Hauptkrümmungsradien der $i$-ten Fläche in dem jeweiligen Durchstoßpunkt (D1, D2) des Hauptstrahls (HS) mit der $i$-ten Fläche (10, 20) des Brillenglases bezeichnen; und

$\psi_i$ den Winkel zwischen dem Normalenvektor $\mathbf{p}_i$ der Brechungsebene an der $i$-ten Fläche (10, 20) des Brillenglases und der Richtung $\mathbf{q_i}$, in die der stärker gekrümmte Hauptschnitt verläuft, bezeichnet.

6.  Verfahren nach Anspruch 5, wobei die lokale Vergrößerungsmatrix $\mathbf{N}_g$, die lokale inverse Matrix der Eigenvergrößerung $\mathbf{N}_e^{-1}$, die lokale inverse Matrix der Systemvergrößerung $\mathbf{N}_s^{-1}$, die lokale Krümmungs- bzw. Vergenzmatrix der einfallenden sphärischen Wellenfront $\mathbf{S}_1$ an der ersten Fläche (10) des Brillenglases, die lokale Krümmungs- bzw. Vergenzmatrix der Wellenfront nach der Brechung an der $i$-ten Fläche des Brillenglases $\mathbf{S}_i$, $i$ = 1,2 und die lokale Krümmungs- bzw. Vergenzmatrix $\mathbf{S}_2$ der auf der zweiten Fläche (20) des Brillenglases einfallenden Wellenfront proportional der Einheitsmatrix **1** sind.

7.  Verfahren nach Anspruch 4, wobei die Vergrößerungsmatrix $\mathbf{N}_g$ nach den folgenden Formeln berechnet wird, wobei die einzelnen lokalen Faktoren bzw. Größen grundsätzlich an den Durchstoßpunkten (D1, D2) des Hauptstrahls (HS) mit der jeweiligen Fläche (10, 20) des Brillenglases ausgewertet werden:

$$\mathbf{N}_g^{-1} = \sigma \cdot \mathbf{R}_1^{-1}\mathbf{T}_1^{-1}\mathbf{N}_e^{-1}\mathbf{R}_{12}\mathbf{T}_2^{-1}\mathbf{N}_s^{-1}\mathbf{R}_2$$

$$\mathbf{N}_e^{-1} = \mathbf{1} - \frac{d}{n}\mathbf{S}_1'$$

$$\mathbf{N}_s^{-1} = \mathbf{1} - e\mathbf{S}_2',$$

wobei:

σ einen Skalenfaktor bezeichnet zur Berücksichtigung einer endlichen Eingansschnittweite $s_1$ berechnet nach der Formel:

$$\sigma = \frac{|\mathbf{s}_1|}{|\mathbf{s}_1 + \mathbf{d} + \mathbf{e}|};$$

$s_1$ einen Vektor mit Länge $s_1$ in Lichtrichtung des objektseitigen Hauptstrahls (HS) zwischen dem in einer vorgegebenen Blickrichtung betrachteten Objekt und dem Durchstoßpunkt (D1) des Hauptstrahls (HS) mit der ersten Fläche (10) bezeichnet;
d einen Vektor mit Länge $d_1$ in Lichtrichtung des Hauptstrahls (HS) zwischen dem Durchstoßpunkt (D1) des Hauptstrahls (HS) mit der ersten Fläche (10) und dem Durchstoßpunkt (D2) des Hauptstrahls (HS) mit der zweiten Fläche (20) bezeichnet;
e einen Vektor mit Länge $e$ in Lichtrichtung des bildseitigen Hauptstrahls (HS) zwischen dem Durchstoßpunkt (D2) des Hauptstrahls (HS) mit der zweiten Fläche (20) und der Eintrittspupille des Auges (30), dem Augendrehpunkt (Z') des Auges (30) oder der Hauptebene des Auges (30) bezeichnet;
n den Brechungsindex des Brillenglases bezeichnet;

$\mathbf{N}_e^{-1}$ die lokale inverse Matrix der Eigenvergrößerung bezeichnet;

$\mathbf{N}_s^{-1}$ die lokale inverse Matrix der Systemvergrößerung bezeichnet;

und wobei:

| | |
|---|---|
| $$\mathbf{R}_1 = \mathbf{R}(\phi_1) = \begin{pmatrix} \cos\phi_1 & -\sin\phi_1 \\ \sin\phi_1 & \cos\phi_1 \end{pmatrix}$$ | die 2x2- Drehmatrix innerhalb der Ebene senkrecht zum objektseitigen Hauptstrahl $\mathbf{s}_1$ vom System der ersten Fläche (10), definiert durch den Normalenvektor $\mathbf{p}_1$ senkrecht zur Brechungsebene an der ersten Fläche (10), auf eine geeignete Bezugsrichtung definiert durch den Bezugsrichtungsvektor $\mathbf{p}_0$, bezeichnet; |
| $\phi_1$ | den Winkel zwischen dem Normalenvektor $\mathbf{p}_1$ und dem Bezugsrichtungsvektor $\mathbf{p}_0$ bezeichnet; |
| $$\mathbf{R}_2 = \mathbf{R}(\phi_2) = \begin{pmatrix} \cos\phi_2 & -\sin\phi_2 \\ \sin\phi_2 & \cos\phi_2 \end{pmatrix}$$ | die 2x2- Drehmatrix innerhalb der Ebene senkrecht zum objektseitigen Hauptstrahl $\mathbf{e}$ vom System der zweiten Fläche (20), definiert durch den Normalenvektor $\mathbf{p}_2$ senkrecht zur Brechungsebene an der zweiten Fläche (20), auf die Bezugsrichtung |
| | $\mathbf{p}_0$, bezeichnet; |
| $\phi_2$ | den Winkel zwischen dem Normalenvektor $\mathbf{p}_2$ und dem Bezugsrichtungsvektor $\mathbf{p}_0$ bezeichnet; |

(fortgesetzt)

| | |
|---|---|
| $$\mathbf{R}_{12} = \mathbf{R}(\phi_{12}) = \begin{pmatrix} \cos\phi_{12} & -\sin\phi_{12} \\ \sin\phi_{12} & \cos\phi_{12} \end{pmatrix}$$ | die 2x2-Drehmatrix innerhalb der Ebene senkrecht zum Hauptstrahl **d** zwischen den Flächen des Brillenglases (10, 20), welche den Normalenvektor **p**$_1$ in den Normalenvektor **p**$_2$ überführt, bezeichnet; |
| $\phi_{12}$ | den Winkel zwischen den Normalenvektoren **p**$_1$ und p$_2$ bezeichnet; |
| $$\mathbf{T}_i = \mathbf{C}_i \mathbf{C}_i'^{-1}, i = 1,2$$ $$\mathbf{C}_i = \begin{pmatrix} \cos\alpha_i & 0 \\ 0 & 1 \end{pmatrix}, i = 1,2$$ $$\mathbf{C}_i' = \begin{pmatrix} \cos\alpha_i' & 0 \\ 0 & 1 \end{pmatrix}, i = 1,2$$ | die 2x2-Neigungsmatrizen zur Berücksichtigung des Einflusses eines schrägen Einfalls des Hauptstrahls (HS) an der $i$-ten Fläche (10, 20) des Brillenglases auf die Vergrößerung bezeichnet; |
| $\alpha_i$ | den Einfallswinkel an der $i$-ten Fläche des Brillenglases, definiert als der Winkel zwischen dem Vektor entlang des auf der $i$-ten Fläche einfallenden Hauptstrahls (HS) und dem Normalenvektor **n**$_i$,$i$ = 1,2 senkrecht zur $i$-ten Fläche (10, 20) des Brillenglases, bezeichnet; |
| $\alpha_i'$ | den Ausfallswinkel an der $i$-ten Fläche des Brillenglases, definiert als der Winkel zwischen dem Vektor |
| | entlang des von der $i$-ten Fläche des Brillenglases austretenden Hauptstrahls (HS) und dem Normalenvektor **n**$_i$,$i$ = 1,2 senkrecht zur $i$-ten Fläche (10, 20) des Brillenglases, bezeichnet; |
| $$\mathbf{S}_1 = \frac{1}{s_1}\mathbf{1}$$ | die Krümmungs- bzw. Vergenzmatrix der auf der ersten Fläche (10) einfallenden sphärischen Wellenfront bezeichnet; |
| $$\mathbf{S}_i' = \mathbf{T}_i \mathbf{S}_i \mathbf{T}_i + \tilde{\mathbf{D}}_i$$ | die lokale Krümmungs- bzw. Vergenzmatrizen der Wellenfronten nach der Brechung an der $i$-ten Fläche (10, 20) des Brillenglases, berechnet nach dem Brechungsgesetz unter Berücksichtigung des schrägen Einfallswinkels des Hauptstrahls (HS), bezeichnet; |
| $$\mathbf{S}_2 = \mathbf{R}_{12}^{-1} \mathbf{N}_e \mathbf{S}_1' \mathbf{R}_{12}$$ | die lokale Krümmungs- bzw. Vergenzmatrix der auf die zweite Fläche (20) einfallenden Wellenfront, welche nach dem Transfer von der ersten Fläche (10) berechnet wird, bezeichnet; |
| $$\tilde{\mathbf{D}}_i = \nu_i \mathbf{C}_i'^{-1} \mathbf{D}_i \mathbf{C}_i'^{-1}$$ | die korrigierte lokale Flächenbrechwertmatrix der $i$-ten Fläche (10, 20) des Brillenglases, welche einen nicht paraxialen Einfall der Wellenfront berücksichtigt, bezeichnet; |

(fortgesetzt)

| | |
|---|---|
| $$\mathbf{D}_i = \begin{pmatrix} Sph_i - \frac{Zyl_i}{2}\cos 2\psi_i & -\frac{Zyl_i}{2}\sin 2\psi_i \\ -\frac{Zyl_i}{2}\sin 2\psi_i & Sph_i + \frac{Zyl_i}{2}\cos 2\psi_i \end{pmatrix}$$ | die lokale Flächenbrechwertmatrix der *i*-ten Fläche (10, 20) des Brillenglases bezeichnet; |
| $\psi_i$ | den Winkel zwischen dem Normalenvektor $\mathbf{p}_i$ der Brechungsebene an der *i*-ten Fläche (10, 20) des Brillenglases und der Richtung $\mathbf{q}_i$, in die der stärker gekrümmte Hauptschnitt verläuft, bezeichnet; |
| $$Sph_i = \frac{(n-1)}{2}\left(\frac{1}{r_i^a} + \frac{1}{r_i^b}\right), i = 1,2$$ | das sphärische Äquivalent der *i*-ten Fläche (10, 20) des Brillenglases bezeichnet; |
| $$Zyl_i = \frac{(n-1)}{2}\left(\frac{1}{r_i^a} - \frac{1}{r_i^b}\right), i = 1,2$$ | den Zylinder der *i*-ten Fläche (10, 20) des Brillenglases bezeichnet; |
| $$r_i^{a,b}, i = 1,2$$ | die Hauptkrümmungsradien der *i*-ten Fläche des Brillenglases bezeichnet; |
| $$v_1 = \frac{n\cos\alpha_1' - \cos\alpha_1}{n-1}$$ | den Korrekturfaktor zur Berücksichtigung des schrägen Einfallswinkels des Hauptstrahls (HS) an der ersten Fläche (10) bezeichnet; |
| $$v_2 = \frac{\cos\alpha_2' - n\cos\alpha_2}{1-n}$$ | den Korrekturfaktor zur Berücksichtigung des schrägen Einfallswinkels des Hauptstrahls (HS) an der zweiten Fläche (20) bezeichnet. |

8. Verfahren nach einem der Ansprüche 1 bis 7, wobei die Gewichtung $G_{V,i}$ der Vergrößerung in der Zielfunktion $F$ oder die Gewichtung $G_{Z,i}$ der Verzerrung in der Zielfunktion $F$ gleich Null ist.

9. Verfahren nach einem der Ansprüche 1 bis 8, wobei der Berechnungs- bzw. Optimierungsschritt derart erfolgt, daß zusätzlich die Refraktions- und/oder der astigmatischen Fehler des Brillenglases minimiert werden.

10. Computerprogrammerzeugnis welches ausgelegt ist, wenn geladen und ausgeführt auf einem Computer, ein Verfahren zur Optimierung eines Brillenglases unter Berücksichtigung der Vergrößerung und/oder der Verzerrung des Brillenglases durchzuführen, wobei das Verfahren zur Optimierung des Brillenglases einen Berechnungs- bzw. Optimierungsschritt umfaßt, welcher derart erfolgt, daß eine Zielfunktion $F$ minimiert wird:

$$\min F = \min\left(\sum_i G_{V,i}(N_{Ist}(i) - N_{Soll}(i))^2 + G_{Z,i}(Z_{Ist}(i) - Z_{Soll}(i))^2\right),$$

wobei:

$N_{Ist}(i)$ die tatsächliche Vergrößerung des Brillenglases an der *i* - ten Bewertungsstelle;
$N_{Soll}(i)$ die geforderte Vergrößerung des Brillenglases an der *i* - ten Bewertungsstelle;
$G_{V,i}$ die Gewichtung der Vergrößerung des Brillenglases an der *i* - ten Bewertungsstelle;
$Z_{Ist}(i)$ die Tatsächliche Verzerrung des Brillenglases an der *i* - ten Bewertungsstelle;

$Z_{Soll}(i)$ die Geforderte Verzerrung an der $i$ - ten Bewertungsstelle;
$G_{Z,i}$ die Gewichtung der Verzerrung an der $i$ -ten Bewertungsstelle

bezeichnet,
wobei die Vergrößerung und/oder die Verzerrung an der $i$ - ten Bewertungsstelle nach einem Verfahren zum Berechnen der lokalen Vergrößerung und/oder der lokalen Verzerrung eines Brillenglases in zumindest einer vorgegebenen oder vorgebbaren Blickrichtung umfassend folgende Schritte:

- Berechnen für die vorgegebene bzw. vorgebbare Blickrichtung den Verlauf eines Hauptstrahls (HS), welcher von einem vorgegebenen oder vorgebbaren infinitesimal kleinen Objekt ausgeht und nach Brechung durch das Brillenglas durch den Augendrehpunkt (Z') des Auges (30), durch die Eintrittspupille des Auges (30) oder durch die Hauptebene des Auges (30) verläuft;
- Ermitteln der Hauptkrümmungen und -richtungen einer dem Hauptstrahl (HS) zugehörigen lokalen Wellenfront beim Brechen durch das Brillenglas;
- Berechnen der lokalen Vergrößerung und/oder der lokalen Verzerrung des Brillenglases aus den ermittelten Hauptkrümmungen und -richtungen der lokalen Wellenfront, den Daten des Verlaufs des Hauptstrahls (HS) und den Daten des Brillenglases, wobei bei dem Berechnen der lokalen Vergrößerung und/oder der lokalen Verzerrung eine endliche Entfernung des Objekts vom Brillenglas berücksichtigt wird

berechnet wird.

11. Vorrichtung zur Herstellung eines Brillenglases unter Berücksichtigung der Vergrößerung und/oder der Verzerrung des Brillenglases, welches zur Korrektion eines Refraktionsdefizits eines Auges ausgelegt ist und zumindest eine erste objektseitige und eine zweite augenseitige Fläche aufweist, wobei die Vorrichtung umfaßt:

- Erfassungsmittel zum Erfassen von Zieldaten eines Brillenglases;
- Berechnungs- und Optimierungsmittel zum Berechnen und Optimieren zumindest einer Fläche des Brillenglases, wobei die Berechnung bzw. Optimierung derart erfolgt, daß eine Zielfunktion $F$ minimiert wird, wobei

$$\min F = \min(\sum_i G_{V,i}(N_{Ist}(i) - N_{Soll}(i))^2 + G_{Z,i}(Z_{Ist}(i) - Z_{Soll}(i))^2),$$

und wobei:

$N_{Ist}(i)$ die tatsächliche Vergrößerung des Brillenglases an der $i$ - ten Bewertungsstelle;
$N_{Soll}(i)$ die geforderte Vergrößerung des Brillenglases an der $i$ - ten Bewertungsstelle;
$G_{V,i}$ die Gewichtung der Vergrößerung des Brillenglases an der $i$ - ten Bewertungsstelle;
$Z_{Ist}(i)$ die tatsächliche Verzerrung des Brillenglases an der $i$ - ten Bewertungsstelle;
$Z_{Soll}(i)$ die geforderte Verzerrung an der $i$ - ten Bewertungsstelle;
$G_{Z,i}$ die Gewichtung der Verzerrung an der $i$ - ten Bewertungsstelle

bezeichnet,
wobei die Vergrößerung und/oder die Verzerrung an der $i$ - ten Bewertungsstelle nach einem Verfahren zum Berechnen der lokalen Vergrößerung und/oder der lokalen Verzerrung eines Brillenglases in zumindest einer vorgegebenen oder vorgebbaren Blickrichtung umfassend folgende Schritte:
- Berechnen für die vorgegebene bzw. vorgebbare Blickrichtung den Verlauf eines Hauptstrahls (HS), welcher von einem vorgegebenen oder vorgebbaren infinitesimal kleinen Objekt ausgeht und nach Brechung durch das Brillenglas durch den Augendrehpunkt (Z') des Auges (30), durch die Eintrittspupille des Auges (30) oder durch die Hauptebene des Auges (30) verläuft;
- Ermitteln der Hauptkrümmungen und -richtungen einer dem Hauptstrahl (HS) zugehörigen lokalen Wellenfront beim Brechen durch das Brillenglas;
- Berechnen der lokalen Vergrößerung und/oder der lokalen Verzerrung des Brillenglases aus den ermittelten Hauptkrümmungen und -richtungen der lokalen Wellenfront, den Daten des Verlaufs des Hauptstrahls (HS) und den Daten des Brillenglases, wobei bei dem Berechnen der lokalen Vergrößerung und/oder der lokalen Verzerrung eine endliche Entfernung des Objekts vom Brillenglas berücksichtigt wird

berechnet wird.

**12.** Computer implementiertes Verfahren zum Auswerten eines Brillenglases unter Berücksichtigung der lokalen Vergrößerung und/oder der lokalen Verzerrung eines Brillenglases in einer Mehrzahl von vorgegebenen oder vorgebbaren Blickrichtungen, wobei das Brillenglas zur Korrektion eines Refraktionsdefizits eines Auges ausgelegt ist und zumindest eine erste objektseitige Fläche (10) und eine zweite augenseitige Fläche (20) aufweist, umfassend folgende Schritte:

- Erfassen von Messdaten des Brillenglases, insbesondere Daten bezüglich der Dicke, der Pfeilhöhen der Vorder- und der Rückfläche des Brillenglases und/oder der lokalen Krümmungen der Vorder- und Rückfläche des Brillenglases;
- Berechnen anhand der erfassten Messdaten der lokalen Vergrößerung und/oder der Verzerrung des Brillenglases in den vorgegebenen oder vorgebbaren Blickrichtungen umfassend die Schritte:

- Berechnen für jede der vorgegebenen bzw. vorgebbaren Blickrichtungen des Verlaufs eines Hauptstrahls (HS), welcher von einem vorgegebenen oder vorgebbaren infinitesimal kleinen Objekt ausgeht und nach Brechung durch das Brillenglas durch den Augendrehpunkt (Z') des Auges (30), durch die Eintrittspupille des Auges (30) oder durch die Hauptebene des Auges (30) verläuft;
- Ermitteln der Hauptkrümmungen und -richtungen einer dem Hauptstrahl (HS) zugehörigen lokalen Wellenfront beim Brechen durch das Brillenglas;
- Berechnen der lokalen Vergrößerung und/oder der lokalen Verzerrung des Brillenglases aus den ermittelten Hauptkrümmungen und -richtungen der lokalen Wellenfront, den Daten des Verlaufs des Hauptstrahls (HS) und den Daten des Brillenglases, wobei bei dem Berechnen der lokalen Vergrößerung und/oder der lokalen Verzerrung eine endliche Entfernung des Objekts vom Brillenglas berücksichtigt wird

- Visualisieren der Verteilung der berechneten lokalen Vergrößerung und/oder Verzerrung des Brillenglases.

**13.** Computerprogrammerzeugnis, welches ausgelegt ist, wenn geladen und ausgeführt auf einem Computer, ein Verfahren zum Auswerten eines Brillenglases mit den Merkmalen gemäß Anspruch 12 durchzuführen.

**14.** Vorrichtung zum Auswerten eines Brillenglases unter Berücksichtigung der lokalen Vergrößerung und/oder der lokalen Verzerrung eines Brillenglases in zumindest einer vorgegebenen oder vorgebbaren Blickrichtung, wobei das Brillenglas zur Korrektion eines Refraktionsdefizits eines Auges ausgelegt ist und zumindest eine erste objektseitige Fläche (10) und eine zweite augenseitige Fläche (20) aufweist, umfassend:

- Erfassungsmittel zum Erfassen von Messdaten des Brillenglases;
- Berechnungsmittel zum Berechnen anhand der erfassten Messdaten des Brillenglases den Verlaufs eines Hauptstrahls (HS) für die vorgegebene bzw. vorgebbare Blickrichtung, wobei der Hauptstrahl (HS) von einem vorgegebenen oder vorgebbaren infinitesimal kleinen Objekt ausgeht und nach Brechung durch das Brillenglas durch den Augendrehpunkt (Z') des Auges (30), durch die Eintrittspupille des Auges (30) oder durch die Hauptebene des Auges (30) verläuft;
- Berechnungsmittel zum Berechnen der Hauptkrümmungen und -richtungen einer dem Hauptstrahl (HS) zugehörigen lokalen Wellenfront beim Brechen durch das Brillenglas;
- Berechnungsmittel zum Berechnen der lokalen Vergrößerung und/oder der lokalen Verzerrung des Brillenglases aus den ermittelten Hauptkrümmungen und -richtungen der lokalen Wellenfront, den Daten des Verlaufs des Hauptstrahls (HS) und den Daten des Brillenglases, und
- Visualisierungsmittel zum Visualisieren der Verteilung der berechneten lokalen Vergrößerung und/oder Verzerrung des Brillenglases.

**Claims**

**1.** Method for calculation of a spectacle lens taking into consideration the magnification and/or the distortion of the spectacle lens, wherein the spectacle lens is designed to correct a refraction deficit of an eye and has at least one first object-side surface and one second eye-side surface, comprising a calculation or optimisation step, wherein the calculation or optimisation step occurs in such a manner that a target function F is minimised, wherein

$$\min F = min\left(\sum_i G_{v,i}(N_{act.}(i) - N_{des.}(i))^2 + G_{Z,i}(i) - Z_{act.}(i) - Z_{des.}(i))^2\right)$$

and wherein

$N_{act.}(i)$ represents the actual magnification of the spectacle lens at the i-th evaluation point;
$N_{des.}(i)$ represents the required magnification of the spectacle lens at the i-th evaluation point;
$G_{v,i}$ represents the weighting of the magnification of the spectacle lens at the i-th evaluation point;
$Z_{act.}(i)$ represents the actual distortion of the spectacle lens at the i-th evaluation point;
$Z_{des.}(i)$ represents the required distortion at the i-th evaluation point; and
$G_{Z,i}$ represents the weighting of the distortion at the i-th evaluation point

and
wherein the magnification and/or the distortion at the i-th evaluation point is calculated according to a method for calculation of the local magnification and/or the local distortion of a spectacle lens in at least one predetermined or predeterminable viewing direction comprising the following steps:

• calculation for the predetermined or predeterminable viewing direction of the profile of a main beam (HS), which originates from a predetermined or predeterminable infinitesimally small object and after refraction by the spectacle lens through the centre of rotation (Z') of the eye (30) runs through the inlet pupil of the eye (30) or through the main plane of the eye (30);
• determination of the main curvatures and directions of a local wavefront associated with the main beam (HS) on refraction by the spectacle lens;
• calculation of the local magnification and/or the local distortion of the spectacle lens from the determined main curvatures and directions of the local wavefront, the data of the profile of the main beam (HS) and the data of the spectacle lens, wherein a final distance of the object from the spectacle lens is taken into consideration during the calculation of the local magnification and/or the local distortion.

2. Method according to claim 1, wherein at least one of the first and the second surfaces is a rotationally symmetric surface, and wherein the data of the spectacle lens comprise data relating to the sagittae and/or the local curvatures of the at least one rotationally symmetric surface.

3. Method according to claim 2, wherein the at least one rotationally symmetric surface:

• is a progressive surface with continuously changing optical power between a remote and a near reference point; or
• is an aspheric or atoric surface.

4. Method according to one of claims 1 to 3, wherein the calculation and/or optimisation step comprises the calculation of a local magnification matrix Ng from the properties of the local wavefront and wherein the magnification of the spectacle lens is calculated as the mean value of the proper values of the magnification matrix Ng and the distortion is calculated as the difference of the proper values of the magnification matrix $N_g$.

5. Method according to claim 4, wherein the local magnification matrix Ng is calculated according to the following formulae, wherein the individual local factors or magnitudes are evaluated in principle at the intersection points (D1, D2) of the main beam (HS) with the respective surface (10, 20) of the spectacle lens:

$$N_g^{-1} = \sigma \cdot N_e^{-1} N_s^{-1}$$

$$N_e^{-1} = 1 - \frac{d}{n} S'_1$$

$$N_s^{-1} = 1 - e S'_2$$

$$S'_2 = S_2 + D_2$$

$$S_2 = N_e S'_1$$

$$S'_1 = S_1 + D_1$$

$$S_1 = \frac{1}{s_1} 1$$

wherein

σ represents a scale factor for consideration of a final input focal distance $s_1$ calculated according to the formula:

$$\sigma = \frac{|s_1|}{|s_1 + d + e|}$$

$s_1$ represents a vector with length $s_1$ in light direction of the object-side main beam (HS) between the object viewed in a predetermined viewing direction and the intersection point (D1) of the main beam (HS) with the first surface (10);
d represents a vector with length d in light direction of the main beam (HS) between the intersection point (D1) of the main beam (HS) with the first surface (10) and the intersection point (D2) of the main beam (HS) with the second surface (20);
e represents a vector with length e in light direction of the image-side main beam (HS) between the intersection point (D2) of the main beam (HS) with the second surface (20) and the inlet pupil of the eye (30), the centre of rotation (Z') of the eye (30) or the main plane of the eye (30);
n represents the refractive index of the spectacle lens;

$N_e^{-1}$   represents the local inverse matrix of the inherent magnification;

$N_s^{-1}$ represents the local inverse matrix of the system magnification;
$S_i$, i=1.2 represents the local curvature matrix of the incident spherical wavefront at the i-th surface of the spectacle lens;
$S'_i$, i=1.2 represents the local curvature matrix of the wavefront after refraction at the i-th surface of the spectacle lens;
$D_i$, i=1.2 represents the local surface power of the i-th surface (10, 20) of the spectacle lens, which is calculated according to the following formulae:

$$D_i = \begin{pmatrix} Sph_i - \frac{Zyl_i}{2} \cos 2\psi_i & -\frac{Zyl_i}{2} \sin 2\psi_i \\ -\frac{Zyl_i}{2} \sin 2\psi_i & Sph_i + \frac{Zyl_i}{2} \cos 2\psi_i \end{pmatrix}$$

$$Sph_i = \frac{(n-1)}{2}\left(\frac{1}{r_i^a} + \frac{1}{r_i^b}\right)$$

$$Zyl_i = \frac{(n-1)}{2}\left(\frac{1}{r_i^a} + \frac{1}{r_i^b}\right), i = 1.2$$

wherein $r_i^{a,b}, i = 1.2$ represents the local main radii of curvature of the i-th surface in the respective intersection point (D1, D2) of the main beam (HS) with the i-th surface (10, 20) of the spectacle lens; and
$\psi_i$ represents the angle between the normal vector $p_i$ of the refraction plane at the i-th surface (10, 20) of the spectacle lens and the direction $q_i$, in which the more sharply curved main section runs.

6. Method according to claim 5, wherein the local magnification matrix Ng, the local inverse matrix of the inherent magnification $N_e^{-1}$, the local inverse matrix of the system magnification $N_s^{-1}$, the local curvature or vergency matrix of the incident spherical wavefront $S_1$ on the first surface (10) of the spectacle lens, the local curvature or vergency matrix of the wavefront after refraction at the i-th surface of the spectacle lens $S'_i$, i=1.2 and the local curvature or vergency matrix $S_2$ of the wavefront incident on the second surface (20) of the spectacle lens are proportional to the unit matrix 1.

7. Method according to claim 4, wherein the magnification matrix Ng is calculated according to the following formulae, wherein the individual local factors or magnitudes are evaluated in principle at the intersection points (D1, D2) of the main beam (HS) with the respective surface (10, 20) of the spectacle lens:

$$N_g^{-1} = \sigma \cdot R_1^{-1} T_1^{-1} N_e^{-1} R_{12} T_2^{-1} N_s^{-1} R_2$$

$$N_e^{-1} = 1 - \frac{d}{n} S'_1$$

$$N_s^{-1} = 1 - eS'_2$$

wherein

$\sigma$ represents a scale factor for consideration of a final input focal distance $s_1$ calculated according to the formula:

$$\sigma = \frac{|s_1|}{|s_1 + d + e|}$$

$s_1$ represents a vector with length $s_1$ in light direction of the object-side main beam (HS) between the object viewed in a predetermined viewing direction and the intersection point (D1) of the main beam (HS) with the first surface (10);
d represents a vector with length $d_1$ in light direction of the main beam (HS) between the intersection point (D1) of the main beam (HS) with the first surface (10) and the intersection point (D2) of the main beam (HS) with the second surface (20);
e represents a vector with length e in light direction of the image-side main beam (HS) between the intersection point (D2) of the main beam (HS) with the second surface (20) and the inlet pupil of the eye (30), the centre of rotation (Z') of the eye (30) or the main plane of the eye (30);
n represents the refractive index of the spectacle lens;

$N_e^{-1}$ represents the local inverse matrix of the inherent magnification;

$N_s^{-1}$ represents the local inverse matrix of the system magnification;

and wherein:

| $R_1 = R(\phi_1) = \begin{pmatrix} cos\phi_1 & -sin\phi_1 \\ sin\phi_1 & cos\phi_1 \end{pmatrix}$ | represents the 2x2 rotation matrix inside the plane perpendicular to the object-side main beam $s_1$ from the system of the first surface (10) defined by the normal vector $p_1$ perpendicular to the refraction plane on the first surface (10) to a suitable reference direction defined by the reference direction vector $p_0$; |
|---|---|

| | |
|---|---|
| $\phi_1$ | represents the angle between the normal vector $p_1$ and the reference direction vector $p_0$; |
| $R_2 = R(\phi_2) = \begin{pmatrix} cos\phi_2 & -sin\phi_2 \\ sin\phi_2 & cos\phi_2 \end{pmatrix}$ | represents the 2x2 rotation matrix inside the plane perpendicular to the object-side main beam e from the system of the second surface (20) defined by the normal vector $p_2$ perpendicular to the refraction plane on the second surface (20) to the reference direction $p_0$; |
| $\phi_2$ | represents the angle between the normal vector $p_2$ and the reference direction vector $p_0$; |
| $R_{12} = R(\phi_{12}) = \begin{pmatrix} cos\phi_{12} & -sin\phi_{12} \\ sin\phi_{12} & cos\phi_{12} \end{pmatrix}$ | represents the 2x2 rotation matrix inside the plane perpendicular to the main beam d between the surfaces of the spectacle lens (10, 20), which converts normal vector $p_1$ into normal vector $p_2$; |
| $\phi_{12}$ | represents the angle between normal vectors $p_1$ and $p_2$; |
| $T_i = C_i C'^{-1}_i, i = 1.2$ <br> $C_i = \begin{pmatrix} \cos\alpha_i & 0 \\ 0 & 1 \end{pmatrix}, i = 1.2$ <br> $C'_i = \begin{pmatrix} \cos\alpha'_i & 0 \\ 0 & 1 \end{pmatrix}, i = 1.2$ | represents the 2x2 inclination matrices for consideration of the influence of an oblique incidence of the main beam (HS) on the i-th surface (10, 20) of the spectacle lens on the magnification; |
| $\alpha_i$ | represents the angle of incidence on the i-th surface of the spectacle lens defined as the angle between the vector along the main beam (HS) incident on the i-th surface and the normal vector $n_i$, i=1.2 perpendicular to the i-th surface (10, 20) of the spectacle lens; |
| $\alpha'_i$ | represents the angle of reflection on the i-th surface of the spectacle lens defined as the angle between the vector along the main beam (HS) emerging from the i-th surface of the spectacle lens and the normal vector $n_i$, i=1.2 perpendicular to the i-th surface (10, 20) of the spectacle lens; |
| $S_1 = \frac{1}{s_1} 1$ | represents the curvature or vergency matrix of the spherical wavefront incident on the first surface (10); |
| $S_i = T_i S_i T_i + \tilde{D}_i$ | represents the local curvature or vergency matrices of the wavefronts after refraction at the i-th surface (10, 20) of the spectacle lens calculated according to the law of refraction taking into consideration the oblique angle of incidence of the main beam (HS); |
| $S_2 = R^{-1}_{12} N_e S'_1 R_{12}$ | represents the local curvature or vergency matrix of the wavefront incident on the second surface (20), which is calculated after the transfer from the first surface (10); |

| | |
|---|---|
| $$\widetilde{D_i} = v_i C'^{-1}_i D_i C'^{-1}_i$$ | represents the corrected local surface power matrix of the i-th surface (10, 20) of the spectacle lens, which takes into consideration a non-paraxial incidence of the wavefront; |
| $$D_i = \begin{pmatrix} Sph_i - \dfrac{Zyl_i}{2}\cos 2\psi_i & -\dfrac{Zyl_i}{2}\sin 2\psi_i \\ -\dfrac{Zyl_i}{2}\sin 2\psi_i & Sph_i + \dfrac{Zyl_i}{2}\cos 2\psi_i \end{pmatrix}$$ | represents the local surface power matrix of the i-th surface (10, 20) of the spectacle lens; |
| $\psi_i$ | represents the angle between the normal vector $p_i$ of the refraction plane at the i-th surface (10, 20) of the spectacle lens and the direction $q_i$, in which the more sharply curved main section runs; |
| $$Sph_i = \frac{(n-1)}{2}\left(\frac{1}{r_i^a} + \frac{1}{r_i^b}\right), i = 1.2$$ | represents the spherical equivalent of the i-th surface (10, 20) of the spectacle lens; |
| $$Zyl_i = \frac{(n-1)}{2}\left(\frac{1}{r_i^a} + \frac{1}{r_i^b}\right), i = 1.2$$ | represents the cylinder of the i-th surface (10, 20) of the spectacle lens; |
| $$r_i^{a,b}, i = 1.2$$ | represents the main radii of curvature of the i-th surface of the spectacle lens; |
| $$v_1 = \frac{n\cos \alpha_1' - \cos \alpha_1}{n-1}$$ | represents the correction factor for consideration of the oblique angle of incidence of the main beam (HS) at the first surface (10); |
| $$v_2 = \frac{n\cos \alpha_2' - \cos \alpha_2}{n-1}$$ | represents the correction factor for consideration of the oblique angle of incidence of the main beam (HS) at the second surface (20). |

**8.** Method according to one of claims 1 to 7, wherein the weighting $G_{v,i}$ of the magnification in the target function *F* or the weighting $G_{Z,i}$ of the distortion in the target function *F* equals zero.

**9.** Method according to one of claims 1 to 8, wherein the calculation or optimisation step occurs in such a way that the refraction and/or astigmatic error of the spectacle lens is/are minimised.

**10.** Computer program product that, when loaded and performed on a computer, is designed to conduct a method for optimising a spectacle lens taking into consideration the magnification and/or the distortion of the spectacle lens, wherein the method for optimising the spectacle lens comprises a calculation or optimisation step, which occurs in such a manner that a target function *F* is minimised:

$$\min F = min\left(\sum_i G_{v,i}(N_{act.}(i) - N_{des.}(i))^2 + G_{Z,i}(Z_{act.}(i) - Z_{des.}(i))^2\right)$$

wherein:

$N_{act.}(i)$ represents the actual magnification of the spectacle lens at the i-th evaluation point;
$N_{des.}(i)$ represents the required magnification of the spectacle lens at the i-th evaluation point;
$G_{v,i}$ represents the weighting of the magnification of the spectacle lens at the i-th evaluation point;
$Z_{act.}(i)$ represents the actual distortion of the spectacle lens at the i-th evaluation point;
$Z_{des.}(i)$ represents the required distortion at the i-th evaluation point;

$G_{Z,i}$ represents the weighting of the distortion at the i-th evaluation point;

wherein the magnification and/or the distortion at the i-th evaluation point is/are calculated according to a method for calculating the local magnification and/or the local distortion of a spectacle lens in at least one predetermined or predeterminable viewing direction comprising the following steps:

- calculation for the predetermined or predeterminable viewing direction of the profile of a main beam (HS), which originates from a predetermined or predeterminable infinitesimally small object and after refraction by the spectacle lens through the centre of rotation (Z') of the eye (30) runs through the inlet pupil of the eye (30) or through the main plane of the eye (30);
- determination of the main curvatures and directions of a local wavefront associated with the main beam (HS) on refraction by the spectacle lens;
- calculation of the local magnification and/or the local distortion of the spectacle lens from the determined main curvatures and directions of the local wavefront, the data of the profile of the main beam (HS) and the data of the spectacle lens, wherein a final distance of the object from the spectacle lens is taken into consideration during the calculation of the local magnification and/or the local distortion.

11. Device for producing a spectacle lens taking into consideration the magnification and/or distortion of the spectacle lens, which is designed to correct a refraction deficit of an eye and has at least one first object-side surface and one second eye-side surface, comprising a calculation or optimisation step, wherein the device comprises:

- detection elements for capturing target data of a spectacle lens;
- calculation and optimisation elements for calculating and optimising at least one surface of the spectacle lens, wherein the calculation or optimisation occurs in such a manner that a target function $F$ is minimised, wherein

$$\min F = min\left(\sum_i G_{v,i}(N_{act.}(i) - N_{des.}(i))^2 + G_{z,i}(i) - Z_{act.}(i) - Z_{des.}(i))^2\right)$$

and wherein

$N_{act.}(i)$ represents the actual magnification of the spectacle lens at the i-th evaluation point;
$N_{des.}(i)$ represents the required magnification of the spectacle lens at the i-th evaluation point;
$G_{v,i}$ represents the weighting of the magnification of the spectacle lens at the i-th evaluation point;
$Z_{act.}(i)$ represents the actual distortion of the spectacle lens at the i-th evaluation point;
$Z_{des.}(i)$ represents the required distortion at the i-th evaluation point;
$G_{Z,i}$ represents the weighting of the distortion at the i-th evaluation point

wherein the magnification and/or the distortion at the i-th evaluation point is calculated according to a method for calculation of the local magnification and/or the local distortion of a spectacle lens in at least one predetermined or predeterminable viewing direction comprising the following steps:
- calculation for the predetermined or predeterminable viewing direction of the profile of a main beam (HS), which originates from a predetermined or predeterminable infinitesimally small object and after refraction by the spectacle lens through the centre of rotation (Z') of the eye (30) runs through the inlet pupil of the eye (30) or through the main plane of the eye (30);
- determination of the main curvatures and directions of a local wavefront associated with the main beam (HS) on refraction by the spectacle lens;
- calculation of the local magnification and/or the local distortion of the spectacle lens from the determined main curvatures and directions of the local wavefront, the data of the profile of the main beam (HS) and the data of the spectacle lens, wherein a final distance of the object from the spectacle lens is taken into consideration during the calculation of the local magnification and/or the local distortion.

12. Computer-implemented method for evaluating a spectacle lens taking into consideration the local magnification and/or the local distortion of a spectacle lens in a multiplicity of predetermined and predeterminable viewing directions, wherein the spectacle lens is designed to correct a refraction deficit of an eye and has at least one first object-side surface (10) and one second eye-side surface (20), comprising the following steps:

- capturing measured data of the spectacle lens, in particular data relating to the thickness, the sagittae of the front and the rear surface of the spectacle lens and/or the local curvatures of the front and rear surface of the spectacle lens;

• calculating on the basis of the captured measured data the local magnification and/or the distortion of the spectacle lens in the predetermined or predeterminable viewing directions, comprising the steps:

o calculation for each of the predetermined or predeterminable viewing directions of the profile of a main beam (HS), which originates from a predetermined or predeterminable infinitesimally small object and after refraction by the spectacle lens through the centre of rotation (Z') of the eye (30) runs through the inlet pupil of the eye (30) or through the main plane of the eye (30);

o determination of the main curvatures and directions of a local wavefront associated with the main beam (HS) on refraction by the spectacle lens;

o calculation of the local magnification and/or the local distortion of the spectacle lens from the determined main curvatures and directions of the local wavefront, the data of the profile of the main beam (HS) and the data of the spectacle lens, wherein a final distance of the object from the spectacle lens is taken into consideration during the calculation of the local magnification and/or the local distortion,

• visualising the distribution of the calculated local magnification and/or distortion of the spectacle lens.

**13.** Computer program product that, when loaded and performed on a computer, is designed to conduct a method for evaluating a spectacle lens with the features according to claim 12.

**14.** Device for evaluating a spectacle lens taking into consideration the local magnification and/or the local distortion of a spectacle lens in at least one predetermined or predeterminable viewing direction, wherein the spectacle lens is designed to correct a refraction deficit of an eye and has at least one first object-side surface (10) and one second eye-side surface (20), comprising:

• detection elements for capturing measured data of the spectacle lens;

• calculation elements for calculating on the basis of the captured measured data of the spectacle lens the profile of a main beam (HS) for the predetermined or predeterminable viewing direction , wherein the main beam (HS) originates from a predetermined or predeterminable infinitesimally small object and after refraction by the spectacle lens through the centre of rotation (Z') of the eye (30) runs through the inlet pupil of the eye (30) or through the main plane of the eye (30);

• calculation elements for calculating the main curvatures and directions of a local wavefront associated with the main beam (HS) on refraction by the spectacle lens;

• calculation elements for calculating the local magnification and/or the local distortion of the spectacle lens from the determined main curvatures and directions of the local wavefront, the data of the profile of the main beam (HS) and the data of the spectacle lens, and

• visualisation elements for visualising the distribution of the calculated local magnification and/or distortion of the spectacle lens.

**Revendications**

**1.** Procédé de fabrication d'un verre de lunettes tenant compte de l'agrandissement et/ou de la distorsion du verre de lunettes, le verre de lunettes étant conçu pour la correction d'un déficit de réfraction d'un oeil et présentant au moins une première surface orientée vers l'objet et une seconde surface située vers l'oeil, comprenant une étape de calcul, respectivement une étape d'optimisation, l'étape de calcul, respectivement l'étape d'optimisation, étant réalisée de sorte qu'une fonction cible *F* se trouve minimisée, par laquelle

$$\min F = \min(\Sigma_i G_{V,i}(N_{r\acute{e}el}(i) - N_{th\acute{e}orique}(i))^2 + G_{Z,i}(Z_{r\acute{e}el}(i) - Z_{th\acute{e}orique}(i))^2$$

et où

$N_{r\acute{e}el}$ *(i)* est l'agrandissement réel du verre de lunettes au i<sup>ème</sup> point d'évaluation ;
$N_{th\acute{e}orique}$ *(i)* est l'agrandissement exigé pour le verre de lunettes au i<sup>ème</sup> point d'évaluation ;

$G_{v,i}$ est la pondération de l'agrandissement du verre de lunettes au $i^{\text{éme}}$ point d'évaluation ;

$Z_{réel}$ *(i)* est la distorsion réelle du verre de lunettes au $i^{\text{éme}}$ point d'évaluation ;

$Z_{théorique}$ *(i)* est la distorsion exigée au $i^{\text{ème}}$ point d'évaluation ; et

$G_{Z,I}$ est la pondération de la distorsion calculée au $i^{\text{ème}}$ point d'évaluation, et

où l'agrandissement et/ou la distorsion au $i^{\text{ème}}$ point d'évaluation sont calculés selon un procédé de calcul de l'agrandissement local et/ou de la distorsion locale d'un verre de lunettes dans au moins une direction d'observation prédéterminée, ou pouvant être prédéterminée, comprenant les étapes suivantes :

- calcul, pour une direction d'observation prédéterminée, ou pouvant être prédéterminée, de la trajectoire du rayon principal (HS) qui part d'un objet infiniment petit prédéterminé, ou pouvant être prédéterminé, et qui traverse, après réfraction sur le verre de lunettes par le point de rotation de l'oeil (Z') de l'oeil, la pupille d'entrée de l'oeil (30) ou le plan principal de l'oeil (30) ;
- évaluation des courbures principales et des directions principales d'un front d'ondes local faisant partie du rayon principal (HS) lors de la réfraction par le verre de lunettes ;
- calcul de l'agrandissement local et/ou de la distorsion locale du verre de lunettes à partir des courbures principales et des directions principales évaluées du front d'ondes local, calcul des données de la trajectoire du rayon principal (HS) et des données du verre de lunettes, où il est tenu compte, lors du calcul de l'agrandissement local et/ou de la distorsion locale, d'un éloignement fini de l'objet par rapport au verre de lunettes.

2. Procédé selon la revendication 1 où au moins l'une, parmi la première et la seconde surface, est une surface de rotation asymétrique et où les données du verre de lunettes concernant les hauteurs de flèche et/ou les courbures locales comprennent au moins les données d'une surface de rotation asymétrique.

3. Procédé selon la revendication 2 où au moins une surface de rotation asymétrique :

- est une surface progressive avec une valeur de réfraction se modifiant de manière continue entre un point de référence éloigné et un point de référence proche ; ou
- est une surface non sphérique ou non torique.

4. Procédé selon l'une des revendications de 1 à 3 où l'étape de calcul et/ou l'étape d'optimisation comprennent le calcul d'une matrice d'agrandissement local $\mathbf{N}_g$ à partir des propriétés du front d'ondes local et où l'agrandissement du verre de lunettes est calculé comme la valeur moyenne des valeurs propres de la matrice d'agrandissement $\mathbf{N}_g$ et la distorsion comme la différence des valeurs propres de la matrice d'agrandissement $\mathbf{N}_g$.

5. Procédé selon la revendication 4 la matrice d'agrandissement local $\mathbf{N}_g$ étant calculée selon les formules suivantes, les facteurs unitaires locaux, respectivement les grandeurs étant évaluées fondamentalement aux points de passage (D1, D2) du rayonnement principal (HS) avec les surfaces respectives (10, 20) du verre de lunettes :

$$\mathbf{N}_g^{-1} = \sigma \cdot \mathbf{N}_e^{-1} \mathbf{N}_s^{-1}$$

$$\mathbf{N}_e^{-1} = 1 - \frac{d}{n} \mathbf{S}_1^{'}$$

$$\mathbf{N}_s^{-1} = 1 - e \mathbf{S}_2^{'}$$

$$\mathbf{S}_2^{'} = \mathbf{S}_2 + \mathbf{D}_2$$

$$\mathbf{S}_2 = \mathbf{N}_e \mathbf{S}_1^{'}$$

$$S_1^{\cdot} = S_1 + D_1$$

$$S_1 = \frac{1}{s_1}\mathbf{1}$$

où :

$\sigma$ est un facteur scalaire désigné pour tenir compte d'une largeur finie de la mise au point $s_1$ calculée d'après la formule :

$$\sigma = \frac{|s_1|}{|s_1 + d + e|}$$

$S_1$ désigne un vecteur d'une longueur $s_1$ dans la direction de la lumière du rayon principal (HS) située vers l'objet entre l'objet observé dans une direction d'observation prédéterminée et le point de passage (D1) du rayonnement principal (HS) avec la première surface (10) ;

$d$ désigne un vecteur de longueur $d$ dans la direction de la lumière du rayon principal (HS) entre le point de passage (D1) du rayon principal (HS) avec la première surface (10) et le point de passage (D2) du rayon principal (HS) avec la seconde surface (20) ;

$e$ désigne un vecteur de longueur $e$ dans la direction de la lumière du rayon principal (HS) orienté vers l'image entre le point de passage (D2) du rayon principal (HS) avec la seconde surface (20) et la pupille d'entrée de l'oeil (30), le point de rotation de l'oeil (Z') de l'oeil (30) ou le plan principal de l'oeil (30) ;

$n$ désigne l'indice de réfraction du verre de lunettes ;

$N_e^{-1}$ désigne la matrice inverse locale de l'agrandissement propre ;

$N_s^{-1}$ désigne la matrice inverse locale de l'agrandissement du système ;

$S_i$, i= 1,2 désigne la matrice de courbure locale du front d'ondes sphérique tombant sur la i$^{\text{éme}}$ surface du verre de lunettes ;

$S'_i$, i=1,2 désigne la matrice de courbure locale du front d'ondes après la réfraction sur la i$^{\text{ème}}$ surface du verre de lunettes ;

$D_i$, i=1,2 désigne la matrice de la valeur de réfraction de surface locale de la i$^{\text{ème}}$ surface (10, 20) du verre de lunettes, qui est calculée selon les formules suivantes :

$$D_i = \begin{pmatrix} Sph_i - \dfrac{Zyl_i}{2}\cos 2\psi_i & -\dfrac{Zyl_i}{2}\sin 2\psi_i \\ -\dfrac{Zyl_i}{2}\sin 2\psi_i & Sph_i + \dfrac{Zyl_i}{2}\cos 2\psi_i \end{pmatrix}$$

$$Sph_i = \frac{(n-1)}{2}\left(\frac{1}{r_i^a} + \frac{1}{r_i^b}\right)$$

$$Zyl_i = \frac{(n-1)}{2}\left(\frac{1}{r_i^a} - \frac{1}{r_i^b}\right), i = 1,2 ;$$

où

$r_i^{a,b}$, i=1, 2 désignent les rayons de courbures principaux locaux de la i$^{\text{ème}}$ surface au niveau du point de passage respectif (D1, D2) du rayon principal (HS) avec la i$^{\text{ème}}$ surface (10, 20) du verre de lunettes ; et

$\psi_i$ désigne l'angle entre le vecteur normal $P_i$ du plan de réfraction à la i$^{\text{ème}}$ surface (10, 20) du verre de lunettes

et la direction $\mathbf{q}_i$, où aboutit le méridien le plus courbe.

6. Procédé selon la revendication 5 où la matrice d'agrandissement locale $\mathbf{N}_g$, la matrice inverse de l'agrandissement propre locale $\mathbf{N}_e^{-1}$, la matrice inverse de l'agrandissement du système locale $\mathbf{N}_s^{-1}$, la matrice de courbure locale, respectivement la matrice de vergence du front d'ondes sphérique $\mathbf{S}_1$ incident à la première surface (10) du verre de lunettes, la matrice de courbure locale, respectivement la matrice de vergence du front d'ondes après la réfraction sur la $i^{ème}$ surface S'$_i$, i=1,2, du verre de lunettes et la matrice de courbure locale, respectivement la matrice de vergence $\mathbf{S}_2$ du front d'ondes incident à la seconde surface (20) du verre de lunettes sont proportionnelles à la matrice unité $\mathbf{1}$.

7. Procédé selon la revendication 4 où la matrice d'agrandissement $\mathbf{N}_g$ est calculée selon les formules suivantes, les facteurs locaux, respectivement les grandeurs, étant évalués fondamentalement aux points de passage (D1, D2) du rayon principal (HS) avec les surfaces correspondantes (10, 20) du verre de lunettes :

$$\mathbf{N}_g^{-1} \;=\; \sigma\,.\,\mathbf{R}_1^{-1}\mathbf{T}_1^{-1}\mathbf{N}_e^{-1}\mathbf{R}_{12}\mathbf{T}_2^{-1}\mathbf{N}_s^{-1}\mathbf{R}_2$$

$$\mathbf{N}_e^{-1} \;=\; 1 \;-\; d/n\ \mathbf{S'}_1$$

$$\mathbf{N}_s^{-1} \;=\; 1 \;-\; e\,.\,\mathbf{S'}_2,$$

où :

σ est un facteur scalaire désigné pour tenir compte d'une largeur finie de la mise au point $s_1$ calculée d'après la formule :

$$\sigma = \frac{|\mathbf{s}_1|}{|\mathbf{s}_1 + \mathbf{d} + \mathbf{e}|}_{\mathbf{s}}$$

$\mathbf{s}_1$ désigne un vecteur avec une longueur $s_1$ en direction de la lumière du rayon principal (HS) situé vers l'objet entre un objet considéré dans une direction d'observation prédéterminée et le point de passage (D1) du rayon principal (HS) avec la première surface (10) ;
$\mathbf{d}$ désigne un vecteur de longueur $d_1$ en direction du rayonnement principal (HS) entre le point de passage (D1) du rayon principal (HS) avec la première surface (10) et le point de passage (D2) du rayon principal (HS) avec la seconde surface (20) ;
$\mathbf{e}$ désigne un vecteur de longueur e en direction de la lumière du rayon principal (HS) située vers l'objet entre le point de passage (D2) du rayon principal (HS) avec la seconde surface (20) et la pupille d'entrée de l'oeil (30), le point de rotation de l'oeil (Z') de l'oeil (30) ou le plan principal de l'oeil (30) ;
$n$ désigne l'indice de réfraction du verre de lunettes ;
$\mathbf{N}_e^{-1}$ désigne la matrice inverse locale de l'agrandissement propre ;
$\mathbf{N}_s^{-1}$ désigne la matrice inverse locale de l'agrandissement du système ;

et où :

| $\mathbf{R}_1 = \mathbf{R}(\phi_1) = \begin{pmatrix} \cos\phi_1 & -\sin\phi_1 \\ \sin\phi_1 & \cos\phi_1 \end{pmatrix}$ | désigne la matrice de rotation 2X2 dans le plan perpendiculaire au rayon principal $\mathbf{s}_1$ situé vers l'objet du système de la première surface (10), définie par le vecteur normal $\mathbf{p}_1$ perpendiculaire au plan de réfraction sur la première surface (10) définie dans une direction de référence appropriée par le vecteur $\mathbf{p}_0$ de la direction de référence ; |
|---|---|

(suite)

| | |
|---|---|
| $\phi_1$ | désigne l'angle entre le vecteur normal $\mathbf{p}_1$ et le vecteur de la direction de référence $\mathbf{p}_0$ ; |
| $$\mathbf{R_2} = \mathbf{R}(\phi_2) = \begin{pmatrix} \cos\phi_2 & -\sin\phi_2 \\ \sin\phi_2 & \cos\phi_2 \end{pmatrix}$$ | désigne la matrice de rotation 2X2 dans le plan perpendiculaire au rayon principal $\mathbf{e}$ orienté vers l'objet du système de la seconde surface (20), définie par le vecteur normal $\mathbf{p}_2$ perpendiculaire au plan de réfraction à la seconde surface (20) définie sur une direction de référence appropriée par le |
| | vecteur $\mathbf{p}_0$ de la direction de référence ; |
| $\phi_2$ | désigne l'angle entre le vecteur normal $\mathbf{p}_2$ et le vecteur de la direction de référence $\mathbf{p}_0$ ; |
| $$\mathbf{R_{12}} = \mathbf{R}(\phi_{12}) = \begin{pmatrix} \cos\phi_{12} & -\sin\phi_{12} \\ \sin\phi_{12} & \cos\phi_{12} \end{pmatrix}$$ | désigne la matrice de rotation 2X2 dans le plan perpendiculaire au rayon principal $\mathbf{d}$ entre les surfaces du verre de lunettes (10, 20) qui transforme le vecteur normal $\mathbf{p}_1$ en le vecteur normal $\mathbf{p}_2$ ; |
| $\phi_{12}$ | désigne l'angle entre les vecteurs normaux $\mathbf{p}_1$ et $\mathbf{p}_2$ ; |
| $$\mathbf{T}_i = \mathbf{C}_i \mathbf{C}_i^{-1}, i = 1,2$$ $$\mathbf{C}_i = \begin{pmatrix} \cos\alpha_i & 0 \\ 0 & 1 \end{pmatrix}, i = 1,2$$ $$\mathbf{C}_i' = \begin{pmatrix} \cos\alpha'_i & 0 \\ 0 & 1 \end{pmatrix}, i = 1,2$$ | désignent les matrices d'inclinaison 2X2 pour tenir compte de l'influence d'une incidence inclinée du rayon principal (HS) sur la $i^{ème}$ surface (10, 20) du verre de lunettes pour l'agrandissement; |
| $\alpha_i$ | désigne l'angle d'incidence à la $i^{ème}$ surface du verre de lunettes, défini comme l'angle entre le vecteur colinéaire au rayon principal (HS) incident à la $i^{ème}$ surface et le vecteur |
| | normal $\mathbf{n}_i$, i=1,2, perpendiculaire à la $i^{ème}$ surface (10, 20) du verre de lunettes ; |
| $\alpha'_i$ | désigne l'angle réfracté à la $i^{ème}$ surface du verre de lunettes défini comme l'angle entre le vecteur colinéaire au rayon principal (HS) sortant à la $i^{ème}$ surface et le vecteur normal $\mathbf{n}_i$, i=1, 2, perpendiculaire à la $i^{ème}$ surface (10, 20) du verre de lunettes ; |
| $$\mathbf{S}_1 = \frac{1}{s_1}\mathbf{1}$$ | désigne la matrice de courbure, respectivement la matrice de vergence, du front d'ondes sphérique incident à la première surface (10) ; |
| $$\mathbf{S}_i' = \mathbf{T}_i \mathbf{S}_i \mathbf{T}_i + \tilde{\mathbf{D}}_i$$ | désignent les matrices de courbures locales, respectivement matrices de vergence, des fronts d'ondes après la réfraction à la $i^{ème}$ surface (10, 20) du verre de lunettes, calculées d'après la loi de réfraction en tenant compte de l'angle incident incliné du rayon |
| | principal (HS) ; |
| $$\mathbf{S_2} = \mathbf{R}_{12}^{-1} \mathbf{N}_e \mathbf{S}_1' \mathbf{R}_{12}$$ | désigne la matrice de courbure, respectivement la matrice de vergence, du front d'ondes sphériques incident à la seconde surface (20) qui est calculée après le transfert de la première surface (10) ; |
| $$\tilde{\mathbf{D}}_i = \nu_i \mathbf{C}_i^{-1} \mathbf{D}_i \mathbf{C}_i^{-1}$$ | désigne la matrice de la valeur de la réfraction plane locale corrigée à la $i^{ème}$ surface du verre de lunettes qui tient compte d'une incidence non para axiale du front d'ondes ; |

(suite)

| | |
|---|---|
| $D_i =$ $\begin{pmatrix} Sph_i - \frac{Zyl_i}{2}\cos 2\psi_i & -\frac{Zyl_i}{2}\sin 2\psi_i \\ -\frac{Zyl_i}{2}\sin 2\psi_i & Sph_i + \frac{Zyl_i}{2}\cos 2\psi_i \end{pmatrix}$ | désigne la matrice de la valeur de réfraction plane locale à la i[ème] surface (10, 20) du verre de lunettes ; |
| $\psi_i$ | désigne l'angle entre le vecteur normal $\mathbf{p}_i$ du plan de réfraction à la i[ème] surface 10, 20) du verre de lunettes et la direction $\mathbf{q}_i$ dans laquelle s'oriente le méridien de plus forte courbure ; |
| $Sph_i = \frac{(n-1)}{2}\left(\frac{1}{r_i^a}+\frac{1}{r_i^b}\right), i = 1,2$ | désigne l'équivalent sphérique de la i[ème] surface (10, 20) du verre de lunettes ; |
| $Zyl_i = \frac{(n-1)}{2}\left(\frac{1}{r_i^a}-\frac{1}{r_i^b}\right), i = 1,2$ | désigne le cylindre de la i[ème] surface (10, 20) du verre de lunettes ; |
| $r_i^{a,b}$ i=1,2 | désignent les rayons de courbures principaux à la i[ème] surface du verre de lunette ; |
| $\nu_1 = \frac{n\cos\alpha_1'-\cos\alpha_1}{n-1}$ | désigne le facteur de correction pour tenir compte de l'angle d'incidence incliné du rayon principal (HS) sur la première surface (10) ; |
| $\nu_2 = \frac{\cos\alpha_2'-n\cos\alpha_2}{1-n}$ | désigne le facteur de correction pour tenir compte de l'angle d'incidence incliné du rayon principal (HS) sur la seconde surface (20). |

8. Procédé selon l'une des revendications de 1 à 7 où la pondération $G_{V,i}$ de l'agrandissement dans la fonction cible $F$ ou la pondération $G_{Z,i}$ de la distorsion dans la fonction cible $F$ est égale à zéro.

9. Procédé selon l'une des revendications de 1 à 8 où l'étape de calcul, respectivement l'étape d'optimisation, s'effectue de telle manière, qu'en outre l'erreur de réfraction et/ou l'erreur astigmate du verre de lunettes sont minimisées.

10. Résultat d'un programme d'ordinateur qui est conçu, lorsqu'il est chargé et exécuté sur un ordinateur, pour réaliser un procédé d'optimisation d'un verre de lunettes en tenant compte de l'agrandissement et/ou de la distorsion du verre de lunettes, le procédé pour l'optimisation du verre de lunettes comprenant une étape de calcul, respectivement d'optimisation, qui se déroule de telle manière qu'une fonction cible $F$ est minimisée :

$$\min F = \min\left(\Sigma_i G_{V,i}(N_{réel}(i) - N_{théorique}(i))^2 + G_{Z,i}(Z_{réel}(i) - Z_{théorique}(i))^2\right)$$

où

$N_{réel}(i)$ est l'agrandissement réel du verre de lunettes au i[ème] point d'évaluation ;
$N_{théorique}(i)$ est l'agrandissement exigé du verre de lunettes au i[ème] point d'évaluation ;
$G_{V,i}$ est la pondération de l'agrandissement du verre de lunettes au i[ème] point d'évaluation ;
$Z_{réel}(i)$ est la distorsion réelle du verre de lunettes au i[ème] point d'évaluation ;
$Z_{théorique}(i)$ est la distorsion exigée au i[ème] point d'évaluation ; et
$G_{Z,I}$ est la pondération de la distorsion calculée au i[ème] point d'évaluation,
où l'agrandissement et/ou la distorsion au i[ème] point d'évaluation sont calculés selon un procédé de calcul de l'agrandissement local et/ou de la distorsion locale d'un verre de lunettes dans au moins une direction d'observation prédéterminée, ou pouvant être prédéterminée, comprenant les étapes suivantes :

- calcul, pour une direction d'observation prédéterminée, ou pouvant être prédéterminée, de la trajectoire du rayon principal HS) qui part d'un objet infiniment petit prédéterminé, ou pouvant être prédéterminé, et traverse après réfraction sur le verre de lunettes par le point de rotation de l'oeil (Z') de l'oeil la pupille d'entrée de l'oeil (30) ou le plan principal de l'oeil (30) ;
- évaluation des courbures principales et des directions principales d'un front d'ondes local faisant partie du rayon principal (HS) lors de la réfraction sur le verre de lunettes ;
- calcul de l'agrandissement local et/ou de la distorsion locale du verre de lunettes à partir des courbures principales et des directions principales du front d'ondes local évaluées, calcul des données de la trajectoire du rayon principal (HS) et des données du verre de lunettes, où il est tenu compte lors du calcul de l'agrandissement local et/ou de la distorsion locale d'un éloignement fini de l'objet par rapport au verre de lunettes.

11. Dispositif de fabrication d'un verre de lunettes tenant compte de l'agrandissement et/ou de la distorsion du verre de lunettes, qui est conçu pour la correction d'un déficit de réfraction d'un oeil et présente au moins une première surface orientée vers l'objet et une seconde surface située vers l'oeil, le dispositif comprenant :

- des moyens d'évaluation pour évaluer les données cibles d'un verre de lunettes ;
- des moyens de calcul et des moyens d'optimisation pour le calcul et l'optimisation d'au moins une surface du verre de lunettes, le calcul, respectivement l'optimisation, étant effectués de telle manière qu'une fonction cible $F$ est minimisée, par laquelle

$$\min F = \min(\Sigma_i G_{V,i}(N_{r\acute{e}el}(i) - N_{th\acute{e}orique}(i))^2 + G_{Z,i}(Z_{r\acute{e}el}(i) - Z_{th\acute{e}orique}(i))^2$$

et où

$N_{r\acute{e}el}$ (i) est l'agrandissement réel du verre de lunettes au i<sup>ème</sup> point d'évaluation ;
$N_{th\acute{e}orique}$(i) est l'agrandissement exigé du verre de lunettes au i<sup>ème</sup> point d'évaluation ;
$G_{V,1}$ est la pondération de l'agrandissement du verre de lunettes au i<sup>ème</sup> point d'évaluation ;
$Z_{r\acute{e}el}$ (i) est la distorsion réelle du verre de lunettes au i<sup>ème</sup> point d'évaluation ;
$Z_{th\acute{e}orique}$ (i) est la distorsion exigée au i<sup>ème</sup> point d'évaluation ; et
$G_{Z,I}$ est la pondération de la distorsion calculée au i<sup>ème</sup> point d'évaluation, et

où l'agrandissement et/ou la distorsion au i<sup>ème</sup> point d'évaluation sont calculés selon un procédé de calcul de l'agrandissement local et/ou de la distorsion locale d'un verre de lunettes dans au moins une direction d'observation prédéterminée, ou pouvant être prédéterminée, comprenant les étapes suivantes :

- calcul, pour une direction d'observation prédéterminée ou pouvant être prédéterminée, de la trajectoire du rayon principal (HS) qui part d'un objet infiniment petit prédéterminé, ou pouvant être prédéterminé, et traverse après réfraction sur le verre de lunettes par le point de rotation de l'oeil (Z') de l'oeil la pupille d'entrée de l'oeil (30) ou le plan principal de l'oeil (30) ;
- évaluation des courbures principales et des directions principales d'un front d'ondes local faisant partie du rayon principal (HS) lors de la réfraction dans le verre de lunettes ;
- calcul de l'agrandissement local et/ou de la distorsion locale du verre de lunettes à partir des courbures principales et des directions principales du front d'ondes local évaluées, calcul des données de la trajectoire du rayon principal (HS) et des données du verre de lunettes, où il est tenu compte lors du calcul de l'agrandissement local et/ou de la distorsion locale d'un éloignement fini de l'objet par rapport au verre de lunettes.

12. Procédé implémenté d'un ordinateur pour l'exploitation d'un verre de lunettes en tenant compte de l'agrandissement local et/ou de la distorsion locale d'un verre de lunettes dans une multitude de directions d'observation prédéterminées, ou pouvant être prédéterminées, le verre de lunette étant conçu pour la correction d'un déficit de réfraction d'un oeil et présentant au moins une première surface orientée vers l'objet (10) et une seconde surface située vers l'oeil (20), comprenant les étapes suivantes :

- saisie de données de mesure concernant le verre de lunettes, en particulier des données concernant l'épaisseur, les hauteurs de flèches des surfaces avant et arrière du verre de lunettes et/ou des courbures locales des surfaces avant et arrière du verre de lunettes ;
- calcul, en fonction des données de mesure saisies de l'agrandissement local et/ou de la distorsion du verre de lunettes dans des directions d'observation prédéterminées, ou pouvant être prédéterminées, comprenant les étapes suivantes :

  - calcul, pour chaque direction d'observation prédéterminée, ou pouvant être prédéterminée, de la trajectoire du rayon principal (HS) qui part d'un objet infiniment petit prédéterminé ou pouvant être prédéterminé et traverse après réfraction sur le verre de lunettes par le point de rotation de l'oeil (Z') de l'oeil la pupille d'entrée de l'oeil (30) ou le plan principal de l'oeil (30) ;
  - évaluation des courbures principales et des directions principales d'un front d'ondes local faisant partie du rayon principal (HS) lors de la réfraction dans le verre de lunettes ;
  - calcul de l'agrandissement local et/ou de la distorsion locale du verre de lunettes à partir des courbures principales et des directions principales du front d'ondes local évaluées, calcul des données de la trajectoire du rayon principal (HS) et des données du verre de lunettes, où il est tenu compte lors du calcul de l'agrandissement local et/ou de la distorsion locale d'un éloignement fini de l'objet par rapport au verre de lunettes

  - visualisation de la distribution des agrandissements locaux calculés et/ou de la distorsion du verre de lunettes.

13. Résultat d'un programme d'ordinateur qui est conçu, lorsqu'il est chargé et réalisé sur un ordinateur, pour réaliser un procédé pour l'exploitation d'un verre de lunettes comprenant les caractéristiques selon la revendication 12.

14. Dispositif pour l'exploitation d'un verre de lunettes en tenant compte de l'agrandissement local et/ou de la distorsion locale d'un verre de lunettes dans une multitude de directions d'observation prédéterminées, ou pouvant être prédéterminées, le verre de lunette étant conçu pour la correction d'un déficit de réfraction d'un oeil et présentant au moins une première surface orientée vers l'objet (10) et une seconde surface située vers l'oeil (20), comprenant :

  - des moyens d'évaluation pour évaluer les données de mesure d'un verre de lunettes ;
  - des moyens de calcul pour le calcul, en fonction des données de mesure du verre de lunettes, de la trajectoire du rayon principal (HS) qui part d'un objet infiniment petit prédéterminé, ou pouvant être prédéterminé, et qui traverse après réfraction sur le verre de lunettes au niveau du point de rotation de l'oeil (Z') de l'oeil (30), par la pupille d'entrée de l'oeil (30) ou par le plan principal de l'oeil (30) ;
  - des moyens de calcul pour le calcul des courbures principales et des directions principales d'un front d'ondes local correspondant au rayon principal (HS) et aux données d'un verre de lunettes ;
  - des moyens de calcul pour le calcul de l'agrandissement local et/ou de la distorsion locale du verre de lunettes à partir des courbures et des directions principales du front d'ondes local, des données de la trajectoire du rayon principal (HS) et des données du verre de lunettes, et
  - des moyens de visualisation pour visualiser la distribution des agrandissements locaux calculés et/ou de la distorsion du verre de lunettes.

Fig. 1

**Fig. 2**

Fig. 3

Fig. 4

Fig. 5

$D_1$ $D_2$

$d$

$s_1$

L

O

HS

$S_1 = \dfrac{1}{s_1}$   $S_1' = S_1 + D_1$   $S_2' = S_2 + D_2$

$S_2 = N_e S_1'$

10

20

EP 1 963 908 B1

Fig. 6

EP 1 963 908 B1

Fig. 7a          Fig. 7b          Fig. 7c

EP 1 963 908 B1

Fig. 8

Fig. 9

**EP 1 963 908 B1**

Fig. 10a

**Fig. 10b**

EP 1 963 908 B1

Fig. 10c

**Fig. 10d**

**Fig. 11a**

**Fig. 11b**

**Fig. 12a**

**Fig. 12b**

**Fig. 12c**

**Fig. 12d**

**Fig. 13a**

**Fig. 13b**

Fig. 14

**EP 1 963 908 B1**

## IN DER BESCHREIBUNG AUFGEFÜHRTE DOKUMENTE

### In der Beschreibung aufgeführte Patentdokumente

- EP 0809126 A
- WO 0181985 A
- WO 0192948 A1
- DE 10313275 A1

### In der Beschreibung aufgeführte Nicht-Patentliteratur

- **Heinz Diepes ; Ralf Blendowske.** Optik und Technik der Brille. 2002